# EUROPÄISCHE PATENTSCHRIFT

(11) **EP 2 385 682 B1**
(45) Veröffentlichungstag und Bekanntmachung des Hinweises auf die Patenterteilung: **28.08.2013**
(21) Anmeldenummer: 11160636.4
(22) Anmeldetag: 15.05.2009
(51) Int. Cl.: H04L 29/08, H04L 29/14, H04L 29/06

(54) **Verfahren zum Optimieren einer paketorientierten Datenübertragung und Computerprogramm-Produkt**
Method for optimising packet-oriented data transmission and computer program product
Procédé d'optimisation d'une transmission de données orientée paquets et produit de programme informatique

(30) Priorität: 15.05.2008 DE 102008023757; 21.05.2008 DE 102008024557
(43) Veröffentlichungstag der Anmeldung: 09.11.2011
(62) Teilanmeldung aus: 09745460.7
(73) Patentinhaber: Nomad Spectrum Ltd., Newcastle upon Tyne NE1 3DQ (GB)
(72) Erfinder: Ott, Jörg, Prof. Dr., 02180, Espoo (FI); Seifert, Nils, 13505, Berlin (DE); Bormann, Carsten, Prof. Dr., 29359, Bremen (DE)
(74) Vertreter: Bittner, Thomas L.

(56) Entgegenhaltungen:
- WO-A1-2008/013528
- JP-A- 2006 054 561
- US-A1- 2001 047 401

## Beschreibung

### Hintergrund der Erfindung

Betrachtet wird eine Kommunikationsbeziehung zwischen zwei oder mehr Instanzen, die als Quelle und / oder Senke von Nutzdaten im Rahmen dieser Kommunikationsbeziehung fungieren. Jeweils eine Quelle überträgt zu einer oder mehreren Senken Nutzdaten. Nutzdaten sind beliebige Informationseinheiten. Quelle und / oder Senke können darüber hinaus Steuerinformationen beliebig untereinander übertragen. Die übertragenen Nutzdaten stellen - analog zur Nutzlast eines Fahrzeugs - die Informationen dar, zu deren Übermittlung die Instanzen überhaupt miteinander kommunizieren. Die Steuerinformationen stellen je nach verwendetem Protokoll unterschiedlich ausgeprägte Informationen dar, die zur korrekten und / oder erfolgreichen und / oder effizienten und / oder anderen Anforderungen genügenden Abwicklung des Protokolls (und damit der Übertragung der Nutzdaten) erforderlich sind. Das Verhältnis von notwendigen Steuerinformationen zur eigentlichen Nutzlast bezeichnet man als Overhead. Overhead entsteht auch, wenn die Nutzdaten oder Steuerinformationen - direkt oder indirekt - mehrfach übertragen werden, wie es bei Sendewiederholungen (ARQ), Vorwärtsfehlerkorrektur (FEC), Network Coding oder ähnlichen Verfahren geschehen kann.

Nutzdaten können je nach Anwendung und / oder ausgeführter Funktion nur in eine (unidirektional) oder mehrere Richtungen (bidirektional) übertragen werden. Gleiches gilt für Steuerinformationen. Während die meisten Netze grundsätzlich die Übertragung in beide Richtungen zulassen, gibt es Netztechnologien (etwa DVB-S/C/T), die― unabhängig von den Anwendungen― nur eine unidirektionale Übertragung gestatten und / oder aus Kosten- oder anderen Gründen eine unidirektionale Übertragung sinnvoll machen und / oder bei denen die Rückrichtung separat über die gleichen und / oder andere Übertragungsverfahren und / oder Netze realisiert wird; diese Einschränkungen und / oder Rahmenbedingungen stammen in der Regel aus dem Systemdesign. In einigen Fällen können sowohl Steuer- als auch Nutzdaten nur in eine Richtung übermittelt werden bzw. es werden für die Rückrichtung andere Übertragungsverfahren und / oder Netze genutzt, wobei auch Nutzdaten und / oder Steuerinformationen bzw. Teilmengen der Nutzdaten und / oder Steuerinformationen über unterschiedliche Netze ausgetauscht werden können.

Daten werden heute meist nicht mehr analog und auch nicht nur als Bit-Folge oder Byte-Folge über Datenleitungen übertragen, sondern für die Übertragung und Bearbeitung in einzelne Datenpakete aufgeteilt―dies wird oftmals auch als Paket-orientierte Datenübertragung bezeichnet. Ein Datenpaket enthält Informationen (auch als Steuerinformationen bezeichnet), die zur Abwicklung des Übertragungsprotokolls erforderlich sind oder sein können und optional Nutzdaten.

Ein Datenpaket enthält dabei beispielsweise einen oder mehreren Paket-Header bzw. Protokoll-Header und / oder Paket- bzw. Protokoll-Trailer. Alle diese werden im Folgenden einfach nur als "Header" bezeichnet. Diese Header enthalten die Steuerinformationen, was z.B. Adressierungsinformationen sein können. Den Headern folgen teilweise die eigentlichen Nutzdaten (Sprachdaten, Textteilen, Teilen von Dateien, usw.). Aber auch Steuerdaten höherer Protokoll-Schichten― ebenfalls oftmals inklusive eigener Header―werden aus Sicht der darunterliegenden Protokoll-Schichten oft als Nutzdaten bezeichnet. Um innerhalb eines Headers die Steuerinformationen identifizieren und/der interpretieren zu können, besteht ein Header aus einem bzw. oftmals mehreren "Feldern", in denen die Steuerinformationen enthalten sind. Diese Anordnung von Feldern innerhalb eines Headers wird im folgenden auch als Header-Struktur eines Headers bezeichnet. Sie dient unter anderem zum Identifizieren und / oder Interpretieren der einzelnen Felder und somit auch der Steuerinformationen innerhalb eines Headers.

Es ergibt sich so oft ein Modell mehrerer Protokoll-Schichten, die aufeinander aufsetzen: Ein Protokoll-Stack bzw. eine Protokoll-Hierarchie, wie sie unter anderem in
[1] International Standard ISO/IEC 7498-1, "Information technology― Open Systems Interconnection ― Basic Reference Model: The Basic Model, (Second edition 1994-11-15 Corrected and reprinted 1996-06-15)
beschrieben wird.

Das heutige Internet basiert auf einer Paket-orientierten Datenübertragung. Auch hier werden Protokolle eingesetzt und es entsteht in der Regel eine Hierarchie von Protokollen (ähnlich aber nicht identisch zu der in [1] beschriebenen).

Die Grundlagen einer ursprünglichen Form des Internet Protokolls IP sowie einige mögliche Protokoll-Hierarchien ("Protocol Relationships") werden unter anderem in
[2] IETF RFC 0791, Internet Protocol DARPA Internet Program, Protocol Specification September 1981
   beschrieben. Wobei zu diesem IP Protokoll (Version 4 / IPv4) eine Vielzahl an weiteren / verwandten Standards und verwandter Literatur existiert. Inzwischen ist auch die Standardisierung und Einführung neuer Versionen des IP Protokolls recht weit fortgeschritten. Grundlagen der Version 6 des IP Protokolls (IPv6) werden unter anderem in
[3] IETF RFC 2460, Internet Protocol, Version 6 (IPv6), Specification, S. Deering, R. Hinden ― Dezember 1998
beschrieben.

Innerhalb eines Protokoll-Stacks können verschiedene Protokoll-Schichten unterschieden werden. Die Protokolle der einzelnen Protokoll-Schichten setzen dabei oftmals aufeinander auf, sie können aber auch nebeneinander parallel in einzelnen Protokoll-Schichten oder Teil-Protokoll-Stacks eigenständige oder auch miteinander verbundene Funktionen ausführen. Je nach konkretem Einsatzfall bzw. dem gewählten Modell von Protokoll-Hierarchien können auch mehrere Protokolle nebenläufig oder auch aufeinander aufsetzend zu einer Protokoll-Schicht gezählt werden.

Eine mögliche Nutzersicht der Datenübertragung ist die Realisierung von Datendiensten. Hierzu zählen unter anderem Telefonie, Videotelefonie und (Video)konferenzen über das Internet (im folgenden zusammengefasst unter dem Begriff "VoIP"), Audio-/Video-Streaming, der Zugriff auf Webseiten ("Websurfen"), Dateitransfers, Email, Chat, Peer-to-Peer-Anwendungen usw. Im Folgenden werden ― ohne Beschränkung der Allgemeinheit ― oftmals VoIP und Websurfen als Beispiele für Datendienste verwendet.

### 1. Beispiel: Websurfen

Im Folgenden wird oftmals das Websurfen (mit den Protokollen HTTP und HTTPS) im heutigen Internet als Beispielszenario bzw. Beispielanwendung genutzt. Zugleich dient es als Beispiel für Protokoll-Hierarchien. Die Auswahl dieser Beispiele geschieht unter anderen, da sich bestehende Literatur dieses Themenbereiches oftmals direkt auf den Einsatzfall Websurfen bezieht ― zugleich eignen sich diese Beispielszenarien auch gut zur Erläuterung sowohl der Problemstellungen als auch der Erfindung; dennoch stehen diese Beispielszenarien jedoch nur stellvertretend für eine Vielzahl an möglichen anderen Einsatzfeldern. Ebenso wird im Folgenden oft das Internet-Protokoll (IP) ― ein Protokoll der Vermittlungsschicht (Schicht 3 des OSI-Modells [1]) ― als Beispiel genutzt. Die vorliegende Erfindung ist jedoch auch unabhängig von der Nutzung des Internet-Protokolls.

Websurfen (bzw. auch der Webzugriff allgemein) erfolgt im heutigen Internet zu einem großen Teil mit Hilfe der Protokolle HTTP ("Hypertext Transfer Protocol") und HTTPS ("HTTP Secure"). Grundlagen von HTTP und HTTPS werden unter anderem in
[4] IETF RFC 2616, Hypertext Transfer Protocol ― HTTP/1.1, R. Fielding, J. Gettys, ... ― Juni 1999
[5] IETF RFC 2818, HTTP Over TLS, E. Rescorla ― May 2000
beschrieben.

Beim Einsatz von HTTP, HTTPS im heutigen Internet ergibt sich ebenfalls oft eine bereits recht umfangreiche Protokoll-Hierarchie:
HTTP, HTTPS selbst werden oft als Anwendungsprotokolle klassifiziert. Eingesetzt wird beispielsweise HTTP dabei in der Regel oberhalb des Protokolls TCP (Transmission Control Protocol [RFC 793]), das der Transport-Schicht zugeordnet wird. TCP wiederum wird in der Regel oberhalb von IP ― einem Protokoll der Netzwerkschicht (ISO/OSI Schicht 3 gemäß [1]) ― eingesetzt. Unterhalb von IP folgen ebenfalls oft weitere Protokolle beispielsweise in Abhängigkeit des genutzten Übertragungsmediums (wie z.B. ein lokales Netz mit "Ethernet" IEEE 802.3, das den ISO/OSI Protokoll-Schichten 1 und 2 gemäß [1] entsprechen würde).

### 2. Beispiel: VoIP

Im Folgenden wird ebenfalls die Übertragung von Sprachdaten ("Voice over IP", "VoIP") im heutigen Internet als Beispiel für eine Protokoll-Hierarchie genutzt. Dies geschieht unter anderen, da sich bestehende Literatur zur Header-Komprimierung oftmals direkt auf den Einsatzfall VoIP bezieht. Ebenso wird im Folgenden oft das Internet-Protokoll (IP) ― ein Protokoll der Vermittlungsschicht (Schicht 3 des OSI-Modells [1]) ― als Beispiel genutzt. Die vorliegende Erfindung ist jedoch auch unabhängig von dem Anwendungsfall VoIP, auch unabhängig von der Nutzung des Internet-Protokolls und auch für Protokolle anderer Schichten als der Vermittlungsschicht einsetzbar.

Im heutigen Internet wird VoIP basierte Datenübertragung oftmals unter anderem unter Einsatz des Protokolls RTP ("Realtime Transport Protocol") durchgeführt. RTP wird unter anderem in
[6] IETF RFC 3550, RTP: A Transport Protocol for Real-Time Applications, H. Schulzrinne, S. Casner, R. Frederick, V. Jacobson― Juli 2003
beschrieben.

Beim Einsatz von RTP im heutigen Internet ergibt sich oft eine bereits recht umfangreiche Protokoll-Hierarchie:
RTP selbst ist ein Protokoll der Transport-Schicht (ISO/OSI Schicht 4 gemäß [1]). Eingesetzt wird RTP dabei in der Regel oberhalb des Protokolls UDP (User Datagram Protocol [RFC 768]), das ebenfalls der Transport-Schicht zugeordnet wird. UDP wiederum wird in der Regel oberhalb von IP ― einem Protokoll der Netzwerkschicht (ISO/OSI Schicht 3 gemäß [1]) ― eingesetzt. Unterhalb von IP folgen oft weitere Protokolle beispielsweise in Abhängigkeit des genutzten Übertragungsmediums (wie z.B. ein lokales Netz mit "Ethernet" IEEE 802.3, das den ISO/OSI Protokoll-Schichten 1 und 2 gemäß [1] entsprechen würde).

Datendienste bedürfen zu ihrer Realisierung oft zusätzlicher Verzeichnisdienste oder Namensdienste.

Ein Protokoll, das in diesem Zusammenhang eingesetzt werden kann, ist das DNS-Protokoll. Benutzer können sich IP-Adressen schlecht merken, deswegen benutzen Protokolle wie HTTP in ihren URIs (Uniform Resource Identifier ― Bezeichner, gegen deren Nennung WebServer Datenobjekte liefern und die bei VoIP zur einfachen Identifikation von Nutzern dienen, vergleichbar zu E-Mail-Adressen oder Telefonnummern) im Allgemeinen so genannte Domain-Namen, lesbare Namen, die erst noch durch einen Namensdienst durch eine sogenannte Namensauflösung in IP-Adressen übersetzt werden müssen. Im folgenden werden derartige Namensdienste detaillierter am Beispiel von DNS erklärt, einem allgemein bekannten und im Internet verbreiteten Namensdienst. Da die Funktionsweise und der hierarchische Aufbau von DNS bekannt sind (siehe Referenz [7]), wird hier nur abstrahierend von einem (DNS-)Server bzw. Namensdienstserver der n-ten Stufe (in der Hierarchie) gesprochen. Dem Fachmann sind weitere Verzeichnisdienste und auch weitere Namensdienste sowie jeweils deren Ausgestaltung und Funktionsweise bekannt, von denen unten einige genannt werden, deren Arbeitsweise aber nicht im Detail erläutert werden muss. Zum Zwecke dieser Namensauflösung wird oft das DNS-Protokoll eingesetzt, das unter anderem in
[7] IETF RFC 1035, Domain Names ― Implementation and Specification, P. Mockapetris ― November 1987
beschrieben ist.

Für den als Beispiel hier beschriebenen DNS Namensdienst nutzen beispielsweise Webbrowser sogenannte Resolver, die das DNS-Protokoll benutzen, um Anfragen an einen oder mehrere direkt konfigurierter und/der dem Endsystem des Webbrowsers zugeordnete DNS-Server zu richten. Diese DNS-Server der ersten Stufe richten wiederum oft Anfragen an weitere DNS-Server. Die benötigte Antwort kommt nicht notwendigerweise bei der ersten solchen Anfrage zustande; DNS-Server der Folgestufen können Anfragen auch unvollständig beantworten und dabei Verweise auf weitere DNS-Server liefern. Der DNS-Server der ersten Stufe (oder auch der Folgestufen) stellt weitere Anfragen an diese, bis eine Antwort von einem DNS-Server vorliegt, der die benötigte Antwort kennt. Antworten können, wie im Fall des DNS-Protokolls, mit einer Lebensdauer (Time To Live, TTL) versehen sein, beispielsweise eine Ganzzahl, die angibt, wie lange (in Sekunden) diese Antwort noch als gültig gelten soll. Auf dieser Grundlage implementieren DNS-Resolver und / oder Server sogenannte Pufferspeicher oder Caches, aus denen eine wiederholte Anfrage nach derselben Übersetzung ohne Konsultation der Folgestufen beantwortet werden kann, solange die Lebensdauer der gespeicherten Antwort dies zulässt. Das DNS-Protokoll kann auf das Transport-Protokoll UDP aufgesetzt werden oder auch auf das Transport-Protokoll TCP, beide Protokolle setzen wiederum in der Regel wie oben beschrieben auf IP und weitere darunterliegende Protokolle auf. Weitere Protokolle aus dem Bereich der Verzeichnisdienste und zum Teil auch der spezielleren Namensdienste sind z. B. Microsoft WINS, Sun NIS, ARP, und der Standard LDAP. Auch diese weiteren Protokolle führen Namensauflösungen durch (z.B. von einem Namen in einen anderen und / oder von einer Adresse in eine andere und / oder von einem Namen in eine Adresse und / oder von einer Adresse in einen Namen).

Die einzelnen Protokolle und / oder deren spezifische Implementierungen/Installationen können dabei unterschiedlich ausgestaltet sein als DNS: sie müssen nicht zwingend über einen Namensdienstserver kommunizieren, es können keine, eine oder mehrere Stufen von Namensdienstservem ausgebildet sein.

Als Namensauflösung übersetzt DNS in der Regel einen sogenannten DNS-Namen (oft ein Rechnername) in eine IP-Adresse. Verzeichnisdienste und Namensdienste können jedoch auch andere Namensauflösungen vornehmen, die nicht zwingend klassische Namen oder Adressen beinhalten. So könnte ein Verzeichnisdienst auch allgemein eine Anfrage nach beispielsweise einem Datenwert/Rechnerzustand beantworten und Verzeichnisdienste könnten beispielsweise zusätzlich oder anstelle von Adressen beispielsweise Zertifikate, Passwörter, oder auch Telefonnummern zurückliefern. Im Folgenden werden allgemein auch diese Verzeichnisdienste, sowie Infrastrukturdienste allgemein, die entsprechende Funktionen erbringen, als Namensdienste bezeichnet und die vorgenommenen Anfragen/Übersetzungen einheitlich als Namensauflösung bezeichnet.

Die Details der Namensauflösung können sich je nach Datendienst unterscheiden. Beispiele für Datendienste mit anderen Namensauflösungen als DNS oder mit DNS ergänzende Namensauflösungen sind unter anderen das Session Initiation Protocol (RFC 3261 und RFC 3263), ITU-T H.323 und H.225.0. Die Funktion der Namensdienste kann zudem direkt mit den Datendiensten gekoppelt sein.

Namensdienste werden teilweise auch zur Unterstützung von Mobilität, etwa in Mobilfunknetzen oder zur Realisierung von Number Portability, persönlichen Rufnummern, Dienstrufnummern (etwa 0800, 0900) usw. im (mobilen) Telefonnetz, eingesetzt.

Im folgenden steht der Begriff Namensdienstserver für einen Server, der die Aufgaben von Namensdiensten realisiert. Ein solcher Namensdienstserver ist dabei als eine logische Funktion zu verstehen. Es bedarf nicht zwingend eines separaten Hardware- oder Softwaresystems zur Realisierung der Namensdienstserver-Funktion. Zwar kann sie als separate Komponente ausgebildet sein, sie kann aber ebenso als Bestandteil des Betriebssystems, einer oder mehrerer Anwendungskomponenten, Peer-Systeme, anderer Netzelemente usw. ausgeprägt sein. Das gilt für Namensdienstserver einer beliebigen Stufe; insbesondere können gar keine eigenständig als separate Komponente identifizierbaren Namensdienstserver vorhanden sein.

Namensdienste können auch datendienstspezifisch ausgeprägt sein: so wird für VoIP teilweise zusätzlich oder an Stelle eines allgemeinen Namensdienstes wie DNS eine zusätzliche Funktion im VoIP-Dienst realisiert, der zu Nutzernamen (z.B. repräsentiert als ein URI) deren aktuelle Kontakt-Adresse (typischerweise eine oder auch mehrere IP-Adressen) liefert und damit die Erreichbarkeit des Nutzers ermöglicht. Die Auflösung des Nutzernamens in eine Kontaktadresse kann wie oben beschrieben in einem oder mehreren Schritten erfolgen und eine oder mehrere Stufen benötigen.

Einsatzszenarien wie Websurfen und VoIP gehören heute zum Stand der Technik und werden breit eingesetzt. Oftmals― insbesondere in lokalen Netzen bzw. im Verhältnis zu ihrer Bandbreite nur wenig belasteten Netzen ― ist eine performante und für die Nutzer sehr zufriedenstellende Realisierung von Websurfen und VoIP mit Standardkomponenten (Anwendungen, Netzkomponenten wie Switches und Routern, ...) realisierbar. Im Folgenden sprechen wir anstelle von der Realisierung von z.B. Websurfen bzw. anderen Einsatzfeldern auch von Diensten und einer entsprechend guten/hohen bzw. schlechten/niedrigen erzielten Dienstgüte. Performance und / oder Nutzerzufriedenheit können aber in anderen Einsatzszenarien deutlich weniger gut sein und stellen Probleme dar. Dabei können die Probleme je nach Einsatzszenario von zum Teil nur kleinen störenden Einflüssen (wie kurzen Aussetzern, etwas geringerer Performance und / oder ab und an selten mal eine abbrechende Verbindung) bis hin zu einer weitgehenden Unbrauchbarkeit des Dienstes führen. Die erzielte Dienstgüte ist dementsprechend suboptimal ― ggf. sogar unzureichend.

Einen direkten und / oder indirekten Einfluss auf die erzielte Dienstgüte hat dabei oft die Übertragungsverzögerung im Netz. Die Übertragungsverzögerung im Netz hängt dabei von einer Vielzahl an Faktoren ab. Dazu gehören beispielsweise oft die eigentlichen Signallaufzeiten, die Netzdatenrate bzw. bei einzelnen Übertragungsabschnitten die Datenrate des entsprechenden Übertragungsabschnitts, die Größe eines Datenpaketes im Verhältnis zur Datenrate (sofern z.B. das Weiterleiten von Paketen nur/im wesentlichen erst nach dem Empfang des gesamten Datenpaketes erfolgt), Verzögerungen in den weiterleitenden Netzkomponenten, Zwischenspeichern/Puffern in den einzelnen Komponenten, Verzögerungen in den ein Protokoll auswertenden/implementierenden Komponenten und so weiter. Diese Übertragungsverzögerung wird oftmals in beide Richtungen einer Kommunikationsbeziehung gemeinsam gemessen und im Folgenden auch als RTT ("Round Trip Time") bezeichnet.

RTT steht für in der Regel für die Zeit, die insgesamt vom Absenden eines ersten Paketes durch den Sender über das Empfangen des ersten Paketes durch den Empfänger, über das Senden eines potentiellen zweiten Paketes als Reaktion auf das erste Paket durch den Empfänger des ersten Paketes bis hin zum Empfangen dieses zweiten Paketes durch den Sender des ersten Paketes vergeht. In einigen Netzen gibt es die Möglichkeit, mit speziellen Protokollen eine aktuelle RTT zu messen. In IPv4 basierenden Netzen geht das oft mit Hilfe eines PING-Kommandos, das ICMP Pakete ("Internet Control Message Protocol" - RFC 792) aussendet und auf entsprechende ICMP Antwortpakete der Gegenseite wartet. Die Optimierungen dieser Erfindung können dabei oft auf den Datenfluß in einer oder auch in beiden Datenrichtungen angewandt werden. Auch können die Optimierungen dieser Erfindung oft auch angewandt werden, wenn Daten nur in einer Richtung gesendet werden. Zur Vereinfachung der Beschreibungen, wird aber im Folgenden in all diesen Fällen dennoch einheitlich von RTT gesprochen.

### a) Paketverluste

Paketverluste sind eine der potentiellen Ursachen, die zu einer Verringerung der Dienstgüte führen können. Als Paketverluste werden im folgenden sowohl vollständig verlorene Datenpakete bezeichnet, als auch Datenpakete, die während der Übertragung verfälscht oder unverhältnismäßig verspätet wurden und daher nicht verwendet werden können. Verlorene Pakete sind in der Regel zunächst gleichbedeutend mit verlorenen Nutzdaten und / oder Steuerinformationen.

### Sendewiederholungen (ARQ):

Es gibt viele Protokolle (wie beispielsweise das beim Websurfen oft für die Datendienste und gelegentlich für die Namensdienste eingesetzte Protokoll TCP), die die auftretenden Paketverluste durch geeignete Maßnahmen wie positive und / oder negative Empfangsbestätigungen bzw. Aufforderungen zu Übertragungswiederholung bzw. Timeouts und anschließende erneute Übertragung der verlorenen Informationen ausgleichen.
Oftmals merken Protokolle höherliegender Schichten und / oder die eigentlichen Nutzer daher nicht einmal direkt, dass Paketverluste aufgetreten sind. Besonders bei Namensdiensten wird ein Paketverlust aber auch durch das Nichteintreffen einer Antwort innerhalb einer erwarteten Zeitspanne durch höherliegende Schichten bemerkt; dann ist es Aufgabe der höherliegende Schichten, Übertragungswiederholungen (unter bestimmten Umständen auch unter Nutzung alternativer Diensterbringer) vorzunehmen.

Eine derartige erneute Übertragung von Paketen ist jedoch in der Regel nicht in Null-Zeit möglich. Bei vielen Protokollen muss der Empfänger hierzu zunächst Informationen an den Sender zurück senden bzw. der Sender wartet auf das Ausbleiben solcher Informationen. Anschließend muss der Sender in der Regel ein ganzes Datenpaket (oder auch direkt und / oder indirekt einen Teil davon) erneut senden. Beides kostet Zeit, die von der RTT des Netzes und / oder des/der Übertragungsprotokolls/e und / oder dessen/deren Parameter abhängig ist.

Es gibt viele Verfahren, um den negativen Einfluss von Paketverlusten auf die Dienstgüte zu verringern.

Das TCP Protokoll beispielsweise sendet (sehr grob ausgedrückt) oftmals mehrere Pakete, ehe es auf Empfangsbestätigungen der Empfänger wartet. So kann es oftmals Paketverluste durch das erneute Senden der verlorenen Pakete ausgleichen ohne, dass der Sender daran gehindert wird, zwischenzeitlich neue (andere) Pakete zu senden. Es kommt also bei auftretenden Paketverlusten zumindest teilweise nicht zu vollständigen Pausen beim Senden von Daten.

### Vorwärtsfehlerkorrektur (FEC) für Übertragungsabschnitt / Ende-zu-Ende:

Ein anderer bekannter Ansatz ist es, die Wahrscheinlichkeit von Paketverlusten auf Übertragungsabschnitten zu reduzieren oder Paketverluste auszugleichen. Hierzu werden oftmals Verfahren zur Vorwärtsfehlerkorrektur (FEC) eingesetzt. Bei diesen Verfahren werden oftmals (sehr grob ausgedrückt) Redundanzinformationen in die gesendeten Daten eingefügt. Aus diesen Redundanzinformationen kann sich ein Empfänger dann durch Paketverluste entstandene Datenverluste versuchen zu rekonstruieren. Dabei gibt es viele bekannte Möglichkeiten wie beispielsweise diese FEC Zusatzinformationen/Redundanzinformationen aussehen können, wie sie erstellt/errechnet werden, wie ein Empfänger diese Informationen nutzen kann/soll, um fehlende Daten zu rekonstruieren und so weiter. Ebenso kann FEC sowohl für Datenblöcke wie Pakete oder Paketgruppen errechnet werden und / oder auch für Bit-/Byteströme. Zu den bekannten FEC Verfahren gehören unter anderem Vandermonde-Matrix-basierte und andere Galoiskörper benutzende Verfahren, Reed-Solomon, Golay, BCH, Hamming, Turbo Coding, einfache und komplexe/verschachtelte auf exklusiv-oder XOR basierende Verfahren, um nur ein paar Beispiele zu nennen. Auch sehr einfache Redundanzverfahren wie das gezielte Doppelt- bzw. Mehrfachsenden von Informationen können als Vorwärtsfehlerkorrektur (FEC) Verfahren bezeichnet werden.

FEC basierte Verfahren werden oftmals auf einzelnen Übertragungsabschnitten (beispielsweise einer Funkstrecke, Satellitenstrecke, aber auch kabelgebundenen Übertragungsabschnitten) eingesetzt. Oftmals sind sie dabei direkter Bestandteil der Link-Layer Protokolle und werden für sämtliche auf dem entsprechenden Übertragungsabschnitt übertragenen Informationen eingesetzt.

Der zweite übliche Einsatzfall von FEC Verfahren ist Ende-zu-Ende. Dabei werden vom eigentlichen Sender der Daten FEC Informationen in den Datenfluss / Paketfluss eingebunden.

FEC basierte Verfahren haben gegenüber Sendewiederholungen den Vorteil, dass sie den Empfängern in der Regel das Rekonstruieren von verlorenen Informationen ermöglichen, ohne dass beispielsweise erst eine RTT auf das Eintreffen von Sendewiederholungen gewartet werden muss. Daher eignet sich der Einsatz von FEC basierten Verfahren gut für Einsatzszenarien, bei denen die Übertragungsverzögerungen wichtig sind. Hierzu gehören unter anderem auch Live Videoübertragungen und VoIP, bei denen das Warten auf Sendewiederholungen ansonsten oftmals zu "Aussetzern" oder generell einer höheren Verzögerung der Wiedergabe führen würde.

Ein anderer Ansatz, der auch gerne bei Sprach- und Bilddatenübertragung eingesetzt wird, ist es eine geeignete Content-Kodierung (Codec / Kodierung, Komprimierung beispielsweise der eigentlichen Sprach-/Bilddaten an sich = die aus Sicht der darunterliegenden Schichten zu übertragenen Nutzdaten) zu wählen. Diese könnte beispielweise FEC-Verfahren oder FEC-Verfahrensansätze beinhalten. Vor allem kann eine Content-Kodierung aber auch so gewählt werden, dass (auch nicht korrigierte) Paketverluste nur sehr begrenzte Auswirkungen auf die Wiedergabe haben (also beispielsweise nur Sprachdaten einer 20ms Periode betroffen sind und sich der Datenverlust nicht oder nur gering auf die darauf folgende Sprachwiedergabe auswirkt).

Neben dem (Vor-) Konfigurieren der Nutzung einer geeigneten Content-Kodierung ist es dabei auch möglich die Content-Kodierung dynamisch an eine ermittelte Paketverlust-Situation und / oder an ermittelte Übertragungsverzögerungen (siehe hierzu auch die unter b) folgenden Ausführungen) anzupassen. Auch ein sogenanntes Transcoding (also eine Anpassung einer ursprünglichen Content-Kodierung durch Um-Kodierung beispielsweise der Sprach-/Bildnutzdaten in eine für beispielsweise ein Netz / eine Übertragungssituation im Netz geeignetere Content-Kodierung ist bekannt.

Oftmals ist die Ursache für auftretende Paketverluste auch ― oder gar vor allem ― begründet in einer gemeinsamen Nutzung von Übertragungsabschnitten und / oder Netzen für die quasi zeitgleiche/parallele Übertragung von potentiell sehr unterschiedlichen Daten von potentiell mehreren/vielen Anwendungen und / oder Nutzern. Hierbei könnte es beispielsweise vorkommen, dass eine andere Anwendung eines anderen Nutzers plötzlich deutlich mehr Daten generiert und daher die Paketverlustrate plötzlich deutlich steigt, da die Übertragungskapazitäten des Netzes und / oder eines Übertragungsabschnittes überschritten sind.

Verfahren zur Nutzung FEC basierter Verfahren sind aus den Dokumenten JP 2006-054561 A sowie WO 2008 / 013528 A1 bekannt.

Im Dokument US 2001 / 0047401 A1 sind ein Verfahren sowie eine Software zum Ausbilden einer Verbindung zu einem Server über ein Netzwerk zum Übertragen von Multimediainhalten beschrieben.

QoS / Priorisierung / Traffic-Shaping:

Zum Vermeiden solcher Paketverluste, beziehungsweise um wenigstens wichtige Daten ganz oder teilweise von solchen durch Überlast erzeugten Paketverlusten auszunehmen, gibt es bekannte Verfahren zur Bandbreitenreservierung in Netzen, zur Markierung von wichtigen Daten (beispielsweise durch Nutzung des TOS Feldes in IP Headern) und / oder QoS Mechanismen, die beispielsweise die zur Verfügung stehende Bandbreite auf einzelne Nutzer und / oder Anwendungen aufteilen. Die Umsetzung dieser Verfahren erfolgt in der Regel durch Router und / oder spezifische "Traffic-Shaper", die beim/vor dem Weiterleiten von Datenpaketen diese Informationen auswerten und dadurch bestimmte Datenpakete quasi priorisiert weiterleiten können, während andere Datenpakete beispielsweise eher bei Überlast verworfen und / oder zunächst zwischengespeichert werden. Eine entsprechende Priorisierung wird dabei für den jeweiligen Übertragungsabschnitt vorgenommen. Bandbreitenreservierungen können teilweise auch Ende-zu-Ende für alle zwischenliegenden Übertragungsabschnitte vorgenommen werden, wobei dann beispielsweise Router/Traffic-Shaper für jeden dieser Übertragungsabschnitte die daraus resultierende Priorisierung vornehmen.

### a) Übertragungsverzögerung / RTT

Die RTT hat, wie bereits erwähnt, oftmals einen wesentlichen Einfluss auf die resultierende Dienstgüte.

Hierzu gehören offensichtlich auch Einsatzszenarien wie beispielsweise VoIP Telefonate, bei denen es für die Nutzer mit zunehmender Übertragungsverzögerung schwieriger wird, zu interagieren, ohne sich ungewollt gegenseitig ins Wort zu fallen.

Die RTT hat jedoch oftmals im erstaunlichen Umfang auch einen großen Einfluss auf andere Einsatzszenarien.

Beispielsweise nutzen Protokolle (wie auch TCP) teilweise Sendefenster― also beispielsweise grob ausgedrückt eine maximale Datenmenge, die gesendet werden kann, bevor auf eine Empfangsbestätigung gewartet werden muss. Bei einer großen RTT wird so leider oftmals auch der maximale Durchsatz durch beispielsweise 1x Größe des Sendefensters pro RTT begrenzt.

In Protokollen werden oft sogenannte Timeouts benutzt. So könnte es beispielsweise sein, dass beispielsweise bei einer sehr schnell variierenden und insbesondere sehr schnell steigen RTT Protokolle davon ausgehen, dass stark verzögerte Pakete verloren sind und von sich aus Übertragungswiederholungen anstoßen. Hier führen also Pakete, die für ihren jeweiligen Zweck zu spät kommen teilweise zu ähnlichen Reaktionen und auch einer ähnlich reduzierten Dienstgüte wie ein Paketverlust.

Auf höheren Protokollschichten betrifft dies z.B. auch Datenbankanwendungen. Bei denen oftmals zum Aufbau/zur Anzeige einer einzigen Nutzerseite auf dem Bildschirm im Hintergrund sehr viele (oft verschachtelte) Datenbankanfragen ausgeführt werden müssen, bei denen oft zumindest zum Teil eine Datenbankanfrage vom Ergebnis der vorangehenden Datenbankanfrage abhängt und / oder nur begrenzt viele Datenbankanfragen parallel ausgeführt werden können. Als Resultat kann dann zum Aufbau/zur Anzeige einer einzigen Nutzerseite auf dem Bildschirm in der Praxis oft nicht nur eine RTT, sondern eine Vielzahl von RTTs notwendig sein.

Ein ganz ähnliches Resultat ergibt sich oft beim Websurfen beispielsweise bei Einsatz von HTTP. Über HTTP werden Datenobjekte angefordert, die im Zusammenhang mit der Nutzung durch Webbrowser auch als Webobjekte bezeichnet werden können. Eine für einen Nutzer auf dem Bildschirm angezeigte Webseite enthält jedoch in der Regel mehrere (teilweise auch Dutzende oder >100) dieser Objekte (wie HTML-Seiten, HTML-Framesets; Bilder, Stylesheets, Skripte; von Skripten integrierte HTML-Textobjekte, XML-Daten, JSON-Objekte ("Ajax"), usw.). Auch hier muss ein eingesetzter Webbrowser oftmals zunächst durch Auswertung erhaltener Webobjekte lernen, welche anderen Webobjekte für das Anzeigen einer Webseite benötigt werden und / oder der Webbrowser fragt nur eine begrenzte Anzahl an Webobjekten parallel ab. Dabei müssen oftmals DNS-Anfragen abgesetzt werden, deren Antwort abgewartet werden muss, bevor die TCP-Verbindungen aufgebaut werden können. Als Resultat kann dann auch zum Websurfen zum Aufbau/zur Anzeige einer einzigen Webseite auf dem Bildschirm in der Praxis oft nicht nur eine RTT, sondern eine Vielzahl von RTTs notwendig sein, oftmals auch mehrere/unterschiedliche RTTs zu unterschiedlichen Servern.

Wie bereits zuvor beschrieben gibt es eine Vielzahl von Einflussgrößen, die Auswirkungen auf die resultierende RTT haben.

Eine oftmals nicht unwesentliche Einflussgröße sind die unter anderem in den Netzkomponenten (wie weiterleitenden Routern, Traffic-Shapern, Schnittstellentreibern, usw.) genutzten Weiterleitungspuffer (Queues). Eingehende Datenpakete werden oftmals zunächst in Queues zwischengespeichert. Durch diese Zwischenspeicherung entsteht dabei oftmals eine teilweise nicht unwesentliche, teilweise sogar dramatische zusätzlich Übertragungsverzögerung, wodurch die resultierende RTT steigt.

Oftmals werden die Queues dabei vor allem bei Auftreten von Übertragungsspitzen und generellem Überlastfall deutlich mehr gefüllt, als bei geringerer Last. Nutzt beispielsweise ein Router für einen angeschlossenen 1 Mbit/s Übertragungsabschnitt eine Queue, die bis zu 1 MByte groß sein kann, so könnte beispielsweise bei Überlast durch diese Queue (bei entsprechender Nutzung / Konfiguration des Routers) eine zusätzliche Übertragungsverzögerung in der Größenordnung von 1.000.000 Byte x 8 Bit/Byte / 1.000.000 Bit/s = 8 Sekunden entstehen. RTTs in der Größenordnung von 8 Sekunden sind jedoch für beispielsweise VoIP Telefonate, aber auch viele andere Anwendungen, wie eben auch Websurfen, eine erhebliche Einschränkung der Dienstgüte.

### Konfiguration / Queuegrößen:

Sofern sie entsprechend angewendet und zumindest weitgehend durchgehend eingesetzt werden, können Queue-Verfahren und -Konfigurationen hilfreich sein. So könnte eine Queuegröße nicht nur als eine feste Menge von Bytes konfiguriert werden, sondern beispielsweise abhängig von der Datenrate des betreffenden Übertragungsabschnittes, oder direkt als eine maximale Queuezeit anstelle von einer Queuegröße in Bytes. Zu beachten ist aber, dass sich das resultierende Delay dennoch mit den Anzahl der "Hops" = durchlaufenen Netzkomponenten erhöht.

### QoS / Priorisierung / Traffic-Shaping:

Die bereits vorstehend erwähnten QoS- / Priorisierungs- / Traffic-Shaper-basierten Verfahren einschließlich Bandbreitenreservierungen können auch in Bezug auf die Queuenutzung beispielsweise in weiterleitenden Netzkomponenten eingesetzt werden. So könnten beispielsweise die zu priorisierenden Pakete gar nicht bzw. nicht an das hintere Ende der Queues eingereiht werden und so eine deutlich geringere Verzögerung erfahren.

Generell gilt hier, vorstehend und auch nachfolgend im Zusammenspiel mit der beschriebenen Erfindung, dass diese QoS- / Priorisierungs- / Traffic-Shaper-basierten Verfahren einschließlich Bandbreitenreservierungen zum Erkennen der zu priorisierenden Datenpakete viele verschiedene Verfahren nutzen können. Dazu zählen konfigurierte Quell-/Zieladressen, markierte Pakete (zum Beispiel "TOS" Feld in IP Headern), bestimmte Protokolle (zum Beispiel erkannt über das "Protocol" Feld in IP Headern und / oder PortNummern in Headern von Transport-Protokollen), das Auswerten von Signalisierungsprotokollen zum Ermitteln der Quell-/Zieladressen und / oder auch Verfahren zum (heuristischen) Erkennen von bestimmten Daten-/Anwendungsklassen (beispielsweise anhand von Paketgrößen/-Intervallen, bestimmten Feldern wie Versionsnummern und / oder Timestamps, Sequenznummern in Paketheadern, usw.).

### c) Übertragungs-Unterbrechungen

Übertragungs-Unterbrechungen - also Zeiträume in denen keine Datenpakete zwischen einem Sender und einem Empfänger ausgetauscht werden können ―sind eine weitere potentielle Ursache zur Verringerung der Dienstgüte. Eine Übertragungs-Unterbrechung kann eine oder mehrere Protokoll-Schichten betreffen und auf verschiedenen Protokoll-Schichten unterschiedlich bzw. nicht einheitlich wahrgenommen werden. Insbesondere kann eine (vorübergehend) langsame und / oder verzögerte und / oder verlustbehaftete Übertragung von Datenpaketen durch die unteren Protokoll-Schichten auf den höheren Protokoll-Schichten als Unterbrechung wahrgenommen werden. Auch kann unter Umständen eine kurzzeitige Unterbrechung auf den unteren Protokoll-Schichten durch die oben Protokoll-Schichten gar nicht bemerkt werden.

Die Ursache für Übertragungs-Unterbrechungen kann vielfältig sein. Bei kabelloser Datenübertragung könnte beispielsweise der Empfang gestört sein (beispielsweise, da sich Sender und / oder Empfänger aus dem Empfangsbereich entfernt haben, Hindernisse in den Weg geraten sind oder auch wegen Wettersituationen wie starkem Regen und / oder Bewölkung und / oder Nebel). Aber auch generell könnte das Netz bzw. ein Übertragungsabschnitt ausfallen und / oder beispielsweise wegen Überlast oder hoher Last durch andere ggf. höher priorisierte Datenströme der Datenaustausch zwischen einem Sender und einem Empfänger (zeitlich begrenzt) nicht möglich sein. Auch kann beispielsweise eine (geänderte) Wegewahl im Netz zu Unterbrechungen führen. Dies kann beispielsweise der Fall sein, wenn ein mobiler Nutzer von einem Zugangspunkt (z.B. Access-Point, Funkmast, Basisstation) eines drahtlosen Netzes zu einem anderen wechselt (was auch als Handover bezeichnet wird).

In einigen Fällen (wie beispielsweise bei dem Wechsel eines Endgerätes von einem Funknetz in ein anderes) kommt es nicht nur zu einer (ggf. kurzzeitigen, ggf. bei überlappenden Netzbereichen auch zeitlich quasi nicht vorhandenen) Übertragungs-Unterbrechung, sondern zu einem Wechsel des Endgerätes von einem Netz in ein anderes Netz und damit oftmals zu einem Wechsel der von diesem Endgerät genutzten Netzadresse. Um durch solch einen Netzwechsel Anwendungen und / oder Protokolle möglichst weniger zu stören, gibt es bekannte Verfahren wie Mobile IP, die diese Netzwechsel zumindest teilweise für die eingesetzten Anwendungen und / oder Protokolle transparent machen. Mobile IPv4 ist unter anderen in
[8] IETF RFC 3344, Mobility Support in IPv4, C. Perkins, Ed. ―August 2002, beschrieben. (IETF RFC 3775 beschreibt Mobility Support in IPv6.)

Viele Protokolle und Anwendungen können kurzzeitige Übertragungs-Unterbrechungen überbrücken, ohne dass ein Eingreifen durch den Nutzer und / oder umfangreiche Übertragungswiederholungen notwendig werden.

Dies ist aber meist von bestimmten Protokollparametern und Einstellungen (u.a. Timeouts) abhängig.

Eine Übertragungs-Unterbrechung kann sich störend auf eine Kommunikationsbeziehung zwischen Endpunkten, die in gleicher Weise dann als Kommunikationsendpunkte bezeichnet werden können, auswirken, wenn sie auftritt:
- nachdem die Endpunkte eine Kommunikationsziehung begonnen haben, wobei durch die Übertragungs-Unterbrechung der Datenaustausch zumindest kurzzeitig beeinträchtigt oder verhindert wird oder
- während ein Endpunkt versucht, eine Kommunikationsbeziehung zu einem anderen Endpunkt herzustellen, wobei durch die Übertragungs-Unterbrechung der Aufbau der Kommunikationsbeziehung verzögert oder (vorübergehend oder vollständig) verhindert wird.

In beiden Fällen können die Endpunkte eine Verminderung der Dienstgüte oder einen Fehlersituation wahrnehmen.

### d) Header-Overhead

Wie oben beschrieben nutzen Datendienste Protokollhierarchien, für VoIP beispielsweise bestehend aus IP, UDP und RTP, für Websurfen beispielsweise aus IP, TCP, optional TLS/SSL und HTTP.

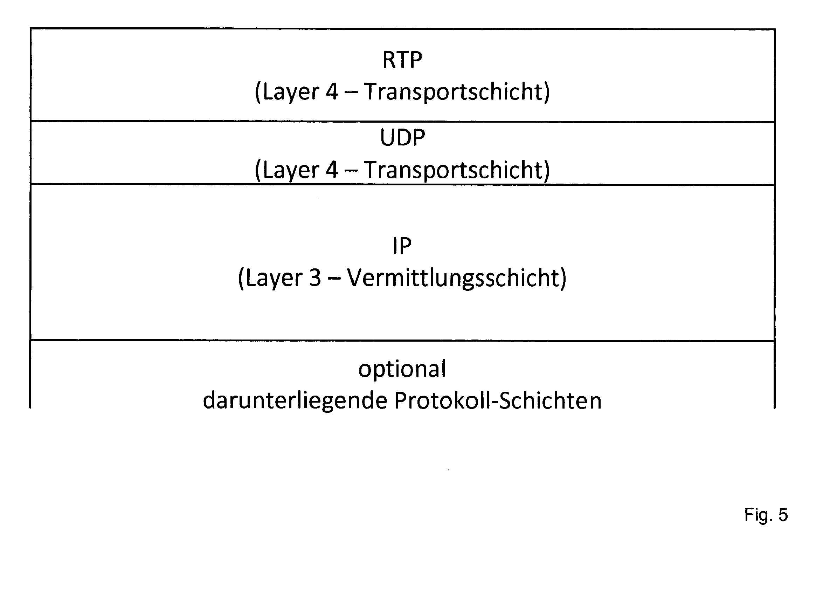

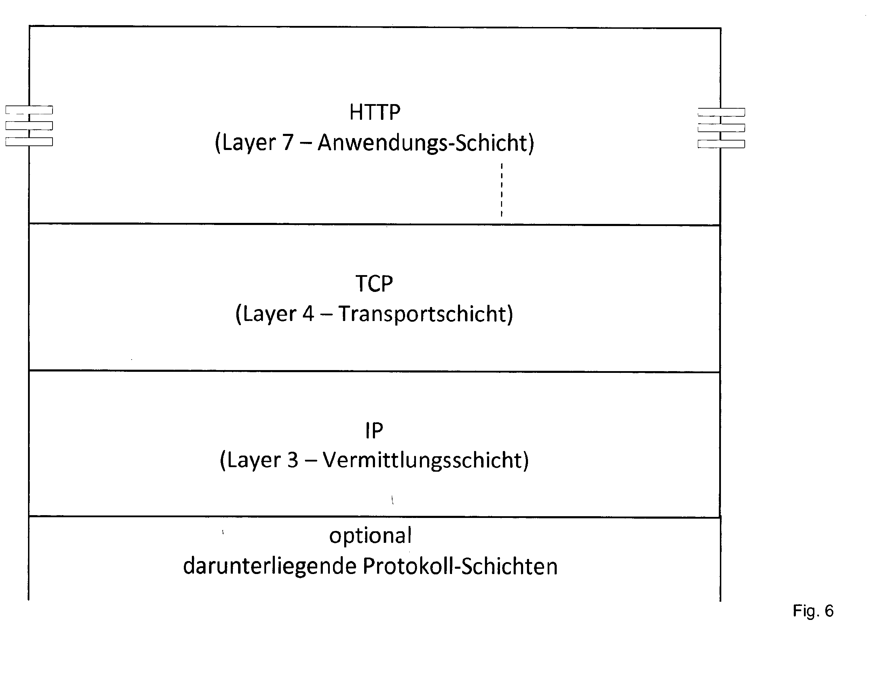

Die allein aus RTP, UDP, IPv4 resultierende Protokoll-Hierarchie wird grob und beispielhaft in Fig. 5 dargestellt. Die sich aus HTTP, TCP und IPv4 ergebende Protokoll-Hierarchie wird beispielhaft in Fig. 6 dargestellt. Die "Größe" der einzelnen Schichten liefert ein grobes Indiz für den Overhead, der durch die Protokoll-Header der einzelnen Schichten entstehen kann.

Jedes dieser Protokolle nutzt dabei einen eigenen Protokoll-Header, die sich bei Nutzung von mehreren Protokollen beziehungsweise einer Header-Hierarchie sehr schnell zu einem großen Overhead addieren.

Auch wenn die Header-Größen oftmals variabel sind, kann bei einem VoIP-Paket unter Nutzung von RTP, UDP und IPv4 allein für diese drei Protokolle beispielsweise insgesamt eine Header-Größe von 12 Byte RTP + 8 Byte UDP + 20 Byte IPv4 = 40 Bytes in Summe entstehen. Zusätzlich könnte man in Betracht ziehen, dass in der Regel unterhalb von IP weitere Protokolle zum Einsatz kommen und zum Beispiel bei Einsatz von IPv6 anstelle von IPv4 sich allein der IP-Header nochmals um weitere 20 Bytes auf 40 Bytes vergrößert. Abhängig von der Menge an Nutzdaten pro Paket, entsteht auch prozentual ein beachtlicher Overhead durch die zusätzlich zu den Nutzdaten zu übertragenen Header-Informationen. Da VoIP-Pakete oftmals nur relativ wenig Nutzdaten (Sprachdaten) enthalten (beispielsweise nur 40 oder 80 Bytes), wurden unter anderem für diesen Anwendungsbereich Möglichkeiten zur Header-Komprimierung erarbeitet und teilweise auch standardisiert. Beispiele hierfür sind unter anderem in den folgenden Dokumenten beschrieben:
[9] IETF RFC 2508, Compressing IP/UDP/RTP Headers for Low-Speed Serial Links, Casner et al. ―Februar 1999
[10] IETF RFC 3545, Enhanced Compressed RTP (CRTP) for Links with High Delay, Packet Loss and Reordering, Koren et al. ― Juli 2003
[11] IETF RFC 3095, Robust Header Compression (ROHC): Framework for four profiles: RTP, UDP, ESP, and uncompressed., Bormann et al. ―Juli 2001
[12] IETF RFC 3544, IP Header Compression over PPP, Koren et al. ― Juli 2003

### Header-Komprimierung für einzelne Übertragungsabschnitte:

Die bestehenden Möglichkeiten zur Header-Komprimierung werden dabei in der Regel nur für einzelne Übertragungsabschnitte (beispielsweise in einem einfachen Fall zwischen zwei direkt über ein physisches Übertragungsmedium oder ein Schicht-2-Netz verbundenen Routern) eingesetzt. In diesem Fall reduzieren sie den Header-Overhead jedoch nur auf dem entsprechenden Übertragungsabschnitt.

Die in [9] beschriebene Header-Komprimierung (oftmals CRTP genannt), erlaubt es so beispielsweise für den Einsatz über einen Übertragungsabschnitt die Header der Protokolle RTP, UDP und IP gemeinsam zu komprimieren und ermöglicht es so, die in Summe in einer Größenordnung von 40 Bytes liegenden Header dieser Protokolle auf größenordnungsmäßig 2-4 Bytes zu komprimieren.

Ende-zu-Ende Header-Komprimierung nur ausgewählter Protokoll-Header:

Alternativ erlauben es die bestehenden Möglichkeiten zur Header-Komprimierung nur einzelne der betroffenen Header zu komprimieren. So beschreibt [9], dass alternativ zur gemeinsamen Komprimierung von RTP, UDP, IP für nur einen Übertragungsabschnitt auch nur der RTP-Header komprimiert werden kann. Sofern nur der RTP-Header komprimiert wird, kann diese Header-Komprimierung auch Ende-zu-Ende eingesetzt werden (also beispielsweise direkt von einem Telefon bis zu einem anderen Telefon).

Das unkomprimierte Beibehalten der UDP- und IPv4-Header ermöglicht in diesem Fall, dass zwischengeschaltete Netzkomponenten (wie beispielsweise Router) die Pakete trotz der komprimierten RTP-Header weiterleiten können.

Durch das unkomprimierte Beibehalten der UDP- und IPv4-Header wird aber, beispielsweise entsprechend [9], die Effizienz der Reduzierung auch entsprechend kleiner. In diesem Beispiel hätten die unkomprimierten UDP- und IP-Header weiterhin eine Größe in der Größenordnung von 28 Bytes. Während der RTP-Header in der Größenordnung von 12 Bytes auf rund 2 bis 4 Bytes reduziert wird. Die,Effizienz des Protokolls sinkt.

### Zusammenfassung der Erfindung

Aufgabe der Erfindung ist es, verbesserte Technologien zum Optimieren einer paketorientierten Datenübertragung zwischen Kommunikationsendpunkten in einem Netz mit Kommunikationsendpunkten anzugeben.

Die Aufgabe wird gelöst durch ein Verfahren nach Anspruch 1.

Das Optimieren zielt insbesondere auf einen oder mehrere der folgenden Aspekte ab: Reduzieren der Auswirkungen von Übertragungsverzögerungen, Reduzieren der Auswirkungen von Paketverlusten, Reduzieren der Auswirkungen von Übertragungs-Unterbrechungen und Reduzieren der Auswirkungen und / oder des Overheads der Datenübertragung auf alle oder einige der genutzten Netze.

Wie oben beschrieben, sind Übertragungs-Unterbrechungen Zeiträume, in denen beispielsweise aus Sicht einer bestimmten Protokoll-Schicht keine Datenpakete zwischen zwei Kommunikationsendpunkten, zum Beispiel einem Sender und einem Empfänger, ausgetauscht werden können. Übertragungs-Unterbrechungen können zu Beginn, während oder außerhalb einer bestehenden Kommunikationsbeziehung auftreten. Sie können - wie oben beschrieben - vielfältige Ursachen haben. Die vorgesehene Simulation des Fortbestehens einer Kommunikationsbeziehung kann auf eine bereits bestehende Kommunikationsbeziehung angewendet werden, insbesondere aber auch auf eine zu etablierende Kommunikationsbeziehung. In letzterem Fall wird trotz Übertragungs-Unterbrechung ein Zustandekommen der Kommunikationsbeziehung simuliert.

Eine bevorzugte Ausbildung der Erfindung sieht vor, die Optimierungen nur für den Aufbau einer Kommunikationsbeziehung anzuwenden oder die Optimierungen nur während einer bestehenden Kommunikationsbeziehung anzuwenden oder die Optimierungen für den Aufbau einer Kommunikationsbeziehung und während einer bestehenden Kommunikationsbeziehung anzuwenden.

Es können ein oder mehrere beliebige Optimierungsmechanismen für das Anwenden genutzt werden.

Ein weiterer Aspekt der Erfindung betrifft ein Computerprogramm-Produkt mit Programmcode, welcher wahlweise auf einem computerlesbaren Speichermedium gespeichert ist und geeignet ist, beim Ablauf auf einer Rechenvorrichtung ein Verfahren nach mindestens einem der Aspekte auszuführen.

Vorteilhafte Ausgestaltungen der Erfindung sind Gegenstand von abhängigen Unteransprüchen.

Nachfolgend werden vorteilhafte Ausgestaltungen zum ersten Aspekt der Erfindung näher erläutert.

Bevorzugt sieht eine Fortbildung der Erfindung vor, dass das Optimieren der paketorientierten Datenübertragung einen Schritt zum Zurückhalten von Daten aus dem Datenstrom der paket-orientierten Datenübertragung umfasst.

Bei einer vorteilhaften Ausgestaltung der Erfindung kann vorgesehen sein, dass das Optimieren der paketorientierten Datenübertragung Schritte zum lokalen Erzeugen von Daten in der Optimiereranordnung und zum Senden der lokal erzeugten Daten an den Kommunikationsendpunkt und / oder den weiteren Kommunikationsendpunkt umfasst.

Eine vorteilhafte Ausgestaltung sieht zudem vor, dass die zurückgehaltenen oder lokal erzeugten Daten während einer Übertragungs-Unterbrechung gesendet werden. In einer vorteilhaften Ausgestaltung kann dieses Senden während der Übertragungsunterbrechung in Bezug auf zeitliche Verzögerung und / oder Datenraten und / oder Paketanzahlen und / oder Pausen zwischen den Paketen so gestaltet ist, um eine zu erwartende Dauer einer Übertragungsunterbrechung zu überbrücken oder auch möglichst lange und / oder Folgen von Übertragungsunterbrechungen überbrücken zu können. Weiterhin kann es vorteilhaft sein, die zurückgehaltenen Daten gleichmäßig oder ungleichmäßig während einer Übertragungs-Unterbrechung weiterzugeben, wobei sich die Gleichmäßigkeit und / oder Ungleichmäßigkeit auf das weitergegebene Datenvolumen und / oder die Anzahl von Paketen und / oder die Zeitintervalle beziehen kann. Eine vorteilhafte Ausgestaltung sieht vor, die Menge der pro Zeiteinheit weitergegeben Daten in Abhängigkeit von dem insgesamt zurückgehaltenen Menge und / oder dem Eintreffen weiterer Daten (Menge pro Zeitintervall) und / oder der erwarteten oder errechneten oder vorhergesagten Dauer der Übertragungsunterbrechung zu bestimmen. Auch kann es vorteilhaft sein, die weitergegebene Menge über die Zeit zu variieren.

Eine bevorzugte Fortbildung der Erfindung vor, dass es sich bei diesen zurückgehaltenen Daten aus Sicht der optimierten Protokollschichten um Nutzdaten und / oder Steuerdaten handelt. Eine Ausprägung der Erfindung sieht vor, dass es sich bei den zurückgehaltenen oder lokal erzeugten Daten aus Sicht des/der in die Optimierung einbezogenen Protokolls / Protokolle um Nutzdaten handelt. Eine weitere Ausprägung der Erfindung sieht vor, dass es sich bei den zurückgehaltenen oder lokal erzeugten Daten aus Sicht des / der in die Optimierung einbezogenen Protokolls / Protokolle um Steuerdaten handelt.

Eine bevorzugte Weiterbildung der Erfindung sieht auch vor, dass die Menge von zurückgehaltenen Daten an die Länge der erwarteten und / oder zu tolerierenden Übertragungs-Unterbrechungen angepasst ist. Zudem ist es eine bevorzugte Weiterbildung der Erfindung, die Menge von zurückgehaltenen Daten an eine akzeptable Zurückhaltungs-Verzögerung angepasst wird. Dabei ist es eine bevorzugte Weiterbildung der Erfindung die Länge der erwarteten Übertragungs-Unterbrechungen und / oder akzeptablen Zurückhaltungs-Verzögerungen durch konfigurationseinstellungen der Optimierer, Steuersignale bzw. Steuerwerte, Heuristiken, beispielsweise basierend auf vergangenen und / oder in anderen Situationen und / oder in anderen Netzen und / oder von anderen Optimierern gemessener Werte, zu ermitteln und / oder zu beeinflussen. Eine weitere bevorzugte Weiterbildung sieht vor, dass anstelle und / oder zusätzlich zum Zurückhalten von Daten durch den Optimierer zusätzliche Daten und / oder Daten vorzeitig angefordert werden.

Eine bevorzugte Weiterbildung der Erfindung sieht vor, dass das Optimieren der paketorientierten Datenübertragung einen Schritt zum Vorhersagen von Unterbrechungseigenschaften der Übertragungs-Unterbrechung der Kommunikationsbeziehung umfasst.

Eine bevorzugte Ausgestaltung der Erfindung sieht vor, dass das Optimieren einen Schritt zum zusätzlichen und / oder vorzeitigen Anfordern von Daten aus dem Datenstrom der paket-orientierten Datenübertragung umfasst.

Nachfolgend werden vorteilhafte Ausgestaltungen zum zweiten Aspekt der Erfindung näher erläutert.

Bei einer zweckmäßigen Ausgestaltung der Erfindung kann vorgesehen sein, dass das Optimieren der paketorientierten Datenübertragung einen Schritt zum zusammenhängenden Komprimieren von Headern mehrerer Datenpakete des Datenstroms der paketorientierten Datenübertragung umfasst. In weiteren vorteilhaften Ausgestaltungen werden mehrere Header eines einzelnen Datenpakets zusammenhängend komprimiert oder ein Header mehrerer Datenpakete zusammenhängend komprimiert. Unter "zusammenhängendem Komprimieren" wird die gemeinsame - sukzessive oder gleichzeitige ― Berücksichtigung der genannten Header zur Komprimierung verstanden. Dies kann unabhängig vom zeitlichen Zusammenhang der Datenpakete und / oder der räumlichen Anordnung des Header geschehen.

Eine vorteilhafte Ausführungsform der Erfindung sieht vor, dass das Komprimieren des zumindest einen Headers nur für einen Teil der Datenpakete des Datenstroms der paketorientierten Datenübertragung ausgeführt wird.

Bevorzugt sieht eine Fortbildung der Erfindung vor, dass das Optimieren der paketorientierten Datenübertragung einen Schritt zum Austauschen von zusätzlichen Informationen umfasst, die eine oder mehrere Pakete ausgewählt aus der folgenden Gruppe von Paketen umfassen: bestehende Steuerpakete, zusätzliche Steuerpakete und zusätzliche Datenpakete.

Bei einer vorteilhaften Ausgestaltung der Erfindung kann vorgesehen sein, dass das Komprimieren des zumindest einen Headers des wenigstens einen Datenpaketes einen Schritt zum wenigstens teilweisen Ersetzen des zumindest einen Headers durch einen oder mehrere Kontextbezeichner umfasst.

Eine bevorzugte Weiterbildung der Erfindung sieht vor, dass das Komprimieren des zumindest einen Headers des wenigstens einen Datenpaketes einen Schritt zum wenigstens teilweisen Komprimieren eines zumindest einen Headers ausgewählt aus der folgenden Gruppe von Headern umfasst: IPv4-Header, IPv6-Header, Ethernet-Header, UDP-Header, RTP-Header und TCP-Header.

Bei einer zweckmäßigen Ausgestaltung der Erfindung kann vorgesehen sein, dass das Komprimieren des zumindest einen Headers des wenigstens einen Datenpaketes einen Schritt zum Einbeziehen von Informationen beim Komprimieren umfasst, die aus der folgenden Gruppe von Informationen ausgewählt werden: Quelladressinformation und Zieladressinformation. Ein zweckmäßige Weiterbildung kann vorsehen, dass Adressen einen Typs in Adressen eines anderen Typs umgesetzt werden.

Eine vorteilhafte Ausführungsform der Erfindung sieht vor, dass das Optimieren der paketorientierten Datenübertragung einen Schritt zum Auswählen eines Algorithmus durch den Kompressor für einen unidirektionalen Übertragungsweg zwischen dem Kompressor und dem Dekompressor umfasst.

Bevorzugt sieht eine Fortbildung der Erfindung vor, dass das Optimieren der paketorientierten Datenübertragung einen Schritt zum Komprimieren von Nutzdaten des wenigstens einen Datenpaketes umfasst.

Bei einer vorteilhaften Ausgestaltung der Erfindung kann vorgesehen sein, dass das Optimieren der paketorientierten Datenübertragung einen Schritt zum Anwenden eines Protokoll-Enhancement-Verfahrens umfasst. Das Anwenden eines Protokoll-Enhancement-Verfahrens kann als vorteilhafte Weiterbildung auch im Zusammenhang mit den anderen Aspekten der Erfindung vorgesehen sein.

Eine bevorzugte Weiterbildung der Erfindung sieht vor, dass das Optimieren ein Schritt zum geschachtelten Optimieren der paketorientierten Datenübertragung mit Hilfe mehrerer Optimierer der Optimiereranordnung umfasst.

Nachfolgend werden vorteilhafte Ausgestaltungen zum dritten Aspekt der Erfindung näher erläutert.

Bei einer zweckmäßigen Ausgestaltung wird als Optimierung eine Komprimierung angewendet und die Optimiereranordnung mit einem Kompressor und einem Dekompressor gebildet. Die Komprimierung kann bevorzugt gemäß einer der oben in Verbindung mit dem dritten Aspekt der Erfindung beschriebenen Ausgestaltungen ausgeführt werden.

Bei einer zweckmäßigen Ausgestaltung der Erfindung kann vorgesehen sein, dass das Erkennen der Optimierungsmöglichkeit weiterhin wenigstens einen Schritt ausgewählt aus der folgenden Gruppe von Schritten umfasst:
- passives Beobachten des Datenstroms der paketorientierte Datenübertragung,
- aktives Senden von Probedatenpaketen,
- Nutzen eines expliziten Signalisierungsprotokolls zu Netzelementen im Netz mit Kommunikationsendpunkten und
- Auswerten von Hinweisinformation eines Netzmanagements im Netz mit Kommunikationsendpunkten.

Eine vorteilhafte Ausführungsform der Erfindung sieht vor, dass die Optimierungsmöglichkeit während des Anwendens einer vorangehenden und von einem Optimierungsmechanismus umfassten Optimierung erkannt wird. Hierzu zählen insbesondere das Erkennen einer anderen Optimierungsmöglichkeit als der vorangehenden; das Erkennen der Veränderung der Optimierungsmöglichkeit; das Erkennen, dass die Optimierung weiterhin angewendet werden kann; das Erkennen, dass das Anwenden einer Optimierung bessere oder schlechtere Ergebnisse erzielt als die vorangehende; das Erkennen des Wegfalls einer Optimierungsmöglichkeit; und / oder das Bestimmen der Parameter einer Optimierungsmöglichkeit.

Bei einer zweckmäßigen Ausgestaltung der Erfindung kann vorgesehen sein, dass das Optimieren der paketorientierten Datenübertragung weiterhin wenigstens einen Schritt ausgewählt aus der folgenden Gruppe von Schritten umfasst:
- Übertragung redundanter Informationen für wenigstens ein Datenpaket des Datenstromes,
- Einfügen einer Vorwärtsfehlerkorrektur-Information mittels eines zusätzlichen Datenpakets in den Datenstrom der paketorientierten Datenübertragung, was wahlweise auf eine Anfrage ausgeführt wird,
- Anhängen einer Vorwärtsfehlerkorrektur-Information an ein Datenpaket aus dem Datenstrom der paketorientierten Datenübertragung, was wahlweise auf eine Anfrage ausgeführt wird,
- Interleaving für wenigstens einen Teil der Datenpakete des Datenstroms der paketorientierten Datenübertragung und
- wenigstens teilweises Wiederherstellen einer Datenpaketreihenfolge für die Datenpakete des Datenstroms der paketorientierten Datenübertragung.

Die redundante Übertragung erfolgt wahlweise als Reaktion auf eine vorangehende Anfrage. Insbesondere kann eine vorteilhafte Ausgestaltung der Erfindung vorsehen, dass logisch zwischen mindestens zwei der Optimierer bzw. zwischen dem einen Optimierer und dem weiteren Kommunikationsendpunkt mindestens ein nicht an der Optimierung auf der/den betrachteten Protokoll-Schicht(en) beteiligtes System liegt. Es kann vorgesehen sein, dass die Optimierer einen möglichst großen Teil des Datenübertragung im Netz erfassen und / oder den/die Teilbereich(e) des Netzes erfassen, die für die Dienstgüte der Datenübertragung besonders problematisch sind.

Bevorzugt sieht eine Fortbildung der Erfindung vor, dass das Erkennen der Optimierungsmöglichkeit weiterhin wenigstens einen Schritt ausgewählt aus der folgenden Gruppe von Schritten umfasst:
- Auswerten einer Fehlerrate für optimierte Datenpakete der paketorientierte Datenübertragung,
- Auswerten einer Time-to-Live Information für Datenpakete der paketorientierte Datenübertragung und
- Auswerten von Tests mit Probedatenpaketen.

Bei einer vorteilhaften Ausgestaltung der Erfindung kann vorgesehen sein, dass das Auswählen der Optimierung einen Schritt zum Auswählen einer Header-Koprimierung umfasst.

Eine bevorzugte Weiterbildung der Erfindung sieht vor, dass ein Schritt zum Testen komprimierbarer Header vorgesehen ist. Eine bevorzugte Ausgestaltung der Erfindung sieht vor, dass ein Schritt zum Testen systematisch mit verschieden komprimierten Headern wiederholt wird. Eine vorteilhafte Ausbildung der Erfindung sieht vor, dass aus dem Testen komprimierter Header darauf geschlossen wird, welche Mechanismen zur Headerkompression Anwendung finden können.

Bei einer zweckmäßigen Ausgestaltung der Erfindung kann vorgesehen sein, dass das Optimieren ein Schritt zum geschachtelten Optimieren der paketorientierten Datenübertragung mehrerer Optimierer der Optimiereranordnung umfasst. Eine solche Schachtelung kann bevorzugt zwei oder mehr Schachtelungen aufweisen. In einer vorteilhaften Ausgestaltung können Optimiereranordnungen auch in Reihe/in Serie und / oder parallel angeordnet sein. Auch kann es vorteilhaft sein, parallele, serielle und / oder geschachtelte Optimiereranordnungen zu kombinieren. Eine vorteilhafte Ausgestaltung sieht vor, dass mindestens zwei Optimierer dieser Optimiereranordnungen Informationen austauschen und / oder in einem optimierten Datenstrom enthaltene Informationen gemeinsam (zum Zwecke mindestens einer ihrer Optimierungsfunktionen) nutzen. Hierdurch ist eine bei den verschiedenen Aspekten der Erfindung nutzbare Ausgestaltungen gebildet.

Nachfolgend werden weitere vorteilhafte, bei allen Aspekten der Erfindung nutzbare Ausgestaltungen näher erläutert.

Eine vorteilhafte Ausführungsform der Erfindung sieht vor, dass das Optimieren der paketorientierten Datenübertragung einen Schritt zum Anwenden des Optimierungsmechanismus auf ausgewählte Datenpakete des Datenstromes umfasst, wobei die ausgewählten Datenpakete unter Einbeziehung wenigstens eines Auswahlkriteriums aus der folgenden Gruppe von Auswahlkriterien ausgewählt werden:
- Konfiguration der Kommunikationsendpunkte,
- statische Auswahlregel,
- dynamische Auswahlregel,
- Datenpaketeigenschaft,
- Datenpaketsequenz und
- Zeitinformation betreffend den Datenstrom.

Bevorzugt sieht eine Fortbildung der Erfindung vor, dass das Optimieren der paketorientierten Datenübertragung einen Schritt zum gemeinsamen Anwenden des Optimierungsmechanismus auf mehrere Datenpakete des Datenstromes umfasst.

Bei einer vorteilhaften Ausgestaltung der Erfindung kann vorgesehen sein, dass das Optimieren der paketorientierten Datenübertragung weiterhin die folgenden Schritte umfasst: Bestimmen, ob eine Störung oder Unterbrechung der paketorientierten Datenübertragung bezüglich der Optimieranordnung in einem dem Kommunikationsendpunkt zugeordneten Kommunikationspfad oder in einem dem weiteren m dem Kommunikationsendpunkt zugeordneten Kommunikationspfad zu erwarten ist, und Anpassen des Optimierungsmechanismus an den bestimmten Kommunikationspfad.

Eine bevorzugte Weiterbildung der Erfindung sieht vor, dass das Optimieren der paketorientierten Datenübertragung weiterhin die folgenden Schritte umfasst: Bestimmen eines Typs der ausgetauschten Datenpakte und Anpassen des Optimierungsmechanismus an den bestimmten Typ der ausgetauschten Datenpakete.

Bei einer zweckmäßigen Ausgestaltung der Erfindung kann vorgesehen sein, dass das Optimieren der paketorientierten Datenübertragung weiterhin die folgenden Schritte umfasst:

Bestimmen einer aktuellen Last für die Kommunikationsbeziehung und Anpassen des Optimierungsmechanismus an die bestimmte Last.

Eine vorteilhafte Ausführungsform der Erfindung sieht vor, dass das Optimieren der paketorientierten Datenübertragung weiterhin wenigstens einen der folgenden Schritte umfasst: unidirektionales, rückkanalfreies Optimieren und bidirektionales Optimieren.

Bevorzugt sieht eine Fortbildung der Erfindung vor, dass das Optimieren der paketorientierten Datenübertragung kombiniert mit wenigstens einem Schritt aus der folgenden Gruppe von Schritten ausgeführt wird: Performance-Enhancement-Verfahren, Datenkomprimieren / -dekomprimieren, Datenverschlüsseln und Datentranskodieren.

Bei einer vorteilhaften Ausgestaltung der Erfindung kann vorgesehen sein, dass die Kommunikationsbeziehung eine Punkt-zu-Mehrpunkt- oder Mehrpunkt-zu-Mehrpunkt-Datenkommunikation umfassend ausgebildet wird.

Eine bevorzugte Weiterbildung der Erfindung sieht vor, dass das Optimieren der paketorientierten Datenübertragung einen Schritt zum Auswählen eines Optimierers als Repräsentant für einen, mehrere oder alle Optimierer der Optimiereranordnung umfasst.

Bei einer zweckmäßigen Ausgestaltung der Erfindung kann vorgesehen sein, dass das Auswählen des Optimierers einen Schritt zum zeitlich und / oder räumlich dynamischen Auswählen des Optimierers als Repräsentant umfasst.

Eine vorteilhafte Ausführungsform der Erfindung sieht vor, dass das Optimieren der paketorientierten Datenübertragung einen Schritt zum Nutzen von mehreren Netzpfaden des Netzes zum Übertragen redundanter Informationen umfasst.

Bevorzugt sieht eine Fortbildung der Erfindung vor, dass das Optimieren der paketorientierten Datenübertragung einen Schritt zum Nutzen von mehreren Netzpfaden des Netzes zum Ausbilden einer Datenlastverteilung für die paketorientierte Datenübertragung umfasst.

Bei einer vorteilhaften Ausgestaltung der Erfindung kann vorgesehen sein, dass das Optimieren der paketorientierten Datenübertragung einen Schritt zum Nutzen von mehreren Netzpfaden des Netzes zum Übertragen redundanter Informationen umfasst.

Eine bevorzugte Weiterbildung der Erfindung sieht vor, dass das Optimieren der paketorientierten Datenübertragung einen Schritt zum Steuern einer Optimierungsfunktionalität des Optimierungsmechanismus in Abhängigkeit von Netzsignalen umfasst.

Eine zweckmäßige Ausgestaltung der Erfindung sieht vor, dass die Kommunikation zwischen zwei Optimierern durch einen mittels eines anderen Protokolls gebildeten Tunnel stattfindet. Eine bevorzugte Ausführungsform nutzt IP, UDP, TCP, IPsec, SSH, SSL, SCTP, DCCP, ICMP, HTTP, HTTP, SIP, RTSP, SOAP, und / oder ein Peer-to-Peer-Overlay als Tunnel.

Bei einer zweckmäßigen Ausgestaltung der Erfindung kann vorgesehen sein, dass die Optimierung auf Netze und / oder Teilnetze und / oder schwierige Kommunikationspfade angewendet wird, wobei die Netze und / oder Teilnetze durch mindestens eines der folgenden Netze umfassen gebildet werden: Weitverkehrsnetze (WAN), Metropolitan-Area-Netze (MAN, DVB-C), "Internetworks" wie IP-Netze oder verzögerungstolerante Netze (DTNs), lokale Netze (LAN) wie Ethernet und WLAN, PDH-, SDH-, DVB-C und / oder ATM-Netze, Telefonnetze, Funknetze (wie beispielsweise Mobilfunk, WiMax, 3G, UMTS, HS(D)PA, DVB-T, LTE, UWB, OFDM, 802.11b / a / g / n / s, ...), Satellitennetze (wie beispielsweise DVB-S / S2, DVB-RCS, S-Band, proprietäre Satellitenverbindungen, Funknetze im Weltraum), auch in kabelgebundenen (Broadcast-)Netzen (wie Kabelnetze, DSL, Fibre-to-the-Home, ...) usw., aber auch Overlay-Netze wie etwa Peer-to-Peer-Netze) und auch Kombinationen aus beliebigen Netzen verschiedener Typen.

Eine weitere einer zweckmäßige Ausgestaltung der Erfindung sieht vor, dass es sich bei dem oder den durch die Optimierung optimierten Datendiensten um mindestens einen der folgenden Dienste handelt: Telefonie, Videotelefonie und (Video)konferenzen über das Internet (im folgenden zusammengefasst unter dem Begriff "VoIP"), Audio- / Video-Streaming, der Zugriff auf Webseiten ("Websurfen"), HTTP-basierte Datenübertragung, HTTPS-basierte Datenübertragung, WAP, Web-Services, Netzmanagement, Zugriffe auf ein Dateisystem, gemeinsames Bearbeiten von Dokumenten, Präsentationen, Dateitransfers, Versenden, Empfangen, und / oder Bearbeiten (inkl. Löschen, Sortieren, Ablegen) von Email, Chat, Peer-to-Peer-Anwendungen, Fernzugriff auf Rechner, Fernsteuerung von Systemen usw.

Eine bevorzugte Weiterbildung der Erfindung sieht vor, dass der Optimierungsmechanismus in wenigstens einer Protokoll-Schicht ausgewählt aus der folgenden Gruppe von Protokoll-Schichten des Protokoll-Schichten-Modells ausgeführt wird: Vermittlungsschicht, Transport-schicht und Anwendungsschicht.

Eine vorteilhafte Ausführungsform der Erfindung sieht vor, dass ein Schritt zum dynamischen Anpassen des Optimierungsmechanismus an die paketorientierte Datenübertragung vorgesehen ist. Insbesondere kann eine dynamische Anpassung die vergangenen, gegenwärtigen und / oder zu erwartende zukünftigen Eigenschaften der paketorientierten Datenübertragung und / oder des Datenpfads und / oder ausgewählter Teile des Datenpfads berücksichtigen. So kann die Optimierung nur auf Teilen des Datenpfads angewendet werden. Auch kann die der Umfang der Optimierung (etwa die Menge und / oder die Art von Redundanz und / oder das genutzte bzw. die genutzten FEC- und / oder ARQ-Verfahren und / oder die Anwendung und / oder Ausbildung von Interleaving) angepasst werden. Weiterhin kann es vorteilhaft sein, die Arten von Datenpaketen und / oder die genutzten Kommunikationsprotokolle und / oder die Art der Kommunikationsbeziehung zu erkennen und die Optimierung entsprechend dieser anzupassen. So kann es vorgesehen sein, "zuverlässige" Transportprotokolle (z.B. TCP, SCTP) anders zu optimieren als "unzuverlässige" (z.B. UDP, DCCP, RTP). Multimedia-Datenströme/-pakete oder RTP-, RTCP-, Flash-, skype- und / oder VoIP- und / oder Video-Datenströme-/pakete zu erkennen und eine Optimierung auf diese anzuwenden bzw. die Optimierung an diese anzupassen. Insbesondere kann für diese Datenströme eine Optimierung durch FEC-Verfahren vorgesehen sein.

Bevorzugt sieht eine Fortbildung der Erfindung vor, dass das dynamische Anpassen einen Schritt zum Messen von Übertragungseigenschaften für die Kommunikationsbeziehung sowie einen Schritt zum Anpassen des Optimierungsmechanismus in Abhängigkeit von den gemessenen Übertragungseigenschaften umfasst. Insbesondere können die gemessene Paketverlustrate und / oder die gemessene Übertragungsverzögerung und / oder die gemessene Übertragungsrate berücksichtigt werden. Die hier beschriebene Weiterbildung der Erfindung kann nicht nur im Zusammenhang mit dem ersten sondern auch mit den anderen Aspekten der Erfindung Anwendung finden.

Bei einer vorteilhaften Ausgestaltung der Erfindung kann vorgesehen sein, dass das Optimieren der paketorientierten Datenübertragung einen Schritt zum Priorisieren für die Datenpakete des Datenstroms der paketorientierten Datenübertragung umfasst. Eine bevorzugte Ausgestaltung der Erfindung sieht vor, dass der Optimierer die Pakete entsprechend ihrer Priorität markiert. In einer anderen bevorzugten Ausgestaltung verwaltet der Optimierer statt oder zusätzlich zum Markieren von Paketen entsprechend ihrer Priorität mindestens eine eigene Warteschlange für die Datenpakete und nutzt diese, um die Priorisierung der Datenpakete selbst durchzuführen, was vor dem bzw. beim Senden oder beim / nachdem Emfangen von Datenpaketen geschehen kann. Die hier beschriebene Ausgestaltung der Erfindung kann nicht nur im Zusammenhang mit dem ersten sondern auch mit den anderen Aspekten der Erfindung Anwendung finden.

Eine bevorzugte Weiterbildung der Erfindung sieht vor, dass ein Schritt zum rückwandlungsfreien Verarbeiten eines beim Optimieren der paketorientierten Datenübertragung gebildeten, optimierten Datenstroms durch einen empfangenden Kommunikationsendpunkt vorgesehen ist. Insbesondere können die redundanten Informationen so ergänzt werden bzw. aufgebaut sein und / oder so übertragen werden, dass sie für den empfangenden Kommunikationsendpunkt nicht von Datenpaketen einen nicht optimierten Datentroms zu unterscheiden sind. Auch kann vorgesehen sein, dass die redundanten Informationen so ergänzt werden bzw. aufgebaut sein und / oder so übertragen werden, dass zumindest Teile der redundanten Informationen durch den empfangenden Kommunikationsendpunkt nicht oder nicht störend wahrgenommen werden.

Bei einer zweckmäßigen Ausgestaltung der Erfindung kann vorgesehen sein, dass das Optimieren der paketorientierten Datenübertragung einen Schritt zum Komprimieren eines oder mehrerer Header für ein oder mehrere Datenpakete aus dem Datenstrom der paketorientierten Datenübertragung umfasst. Insbesondere kann vorgesehen sein, dass die Menge an übertragenen redundanten Informationen so gewählt wird, dass sie die Menge der durch Kompression eingesparten Daten nicht oder nicht wesentlich übersteigt, wobei der Vergleich für ein einzelnes Paket, für mehrere Pakete zusammen und / oder über ein Zeitintervall durchgeführt werden kann.

Nach den verschiedenen Ausgestaltungen der Erfindung in ihren unterschiedlichen Aspekten kann eine Vorrichtung oder ein System für eine paketorientierte Datenübertragung zwischen Kommunikationsendpunkten in einem Netz mit Kommunikationsendpunkten vorgesehen sein, die über eine Optimiereranordnung verfügt, welche konfiguriert ist, einen Optimierungsmechanismus für die paketorientierte Datenübertragung nach einem Verfahren in einer der vorgenannten Ausgestaltungen auszuführen.

### Beschreibung bevorzugter Ausführungsbeispiele der Erfindung

Im Folgenden werden die Aspekte der Erfindung anhand von Ausführungsbeispielen unter Bezugnahme auf Figuren einer Zeichnung näher erläutert. Hierbei zeigen:
- Fig. 1: in Bezug auf die nachfolgend unter I. beschriebenen Optimierungen eine schematische Darstellung von mehreren Systemen zur Datenübertragung zwischen zwei Endpunkten A und B sowie Anordnungen von Optimierern,
- Fig. 2: in Bezug auf die nachfolgend unter I. beschriebenen Optimierungen eine schematische Darstellung von mehreren Systemen zur Datenübertragung zwischen zwei Endpunkten A und B für besondere Einsatzszenarien in denen die eingefügte Optimierung direkt vom Endpunkt B und / oder den dort eingesetzten Protokollen und / oder Anwendungen genutzt werden kann, ohne einen Optimierer X-2 zu benötigen,
- Fig. 3 und 4: in Bezug auf die nachfolgend unter II. beschriebenen Optimierungen die schematischen Darstellungen wie Fig. 1 und 2, allerdings unter spezifischer Ausgestaltung der "Optimierer" als "Kompressor" und "Dekompressor" und der oben beschriebenen "Optimierungen" als "Kompressionen" bzw. "Komprimierungen", als eine spezifische Ausprägung einer Optimierung, die auch beliebig mit anderen Optimierungen und deren Anordnungen verknüpft werden kann,
- Fig. 5: grob eine Protokoll-Hierarchie für RTP, UDP und IP und
- Fig. 6: grob eine Protokoll-Hierarchie für HTTP, TCP und IP.

Nachfolgend werden Aspekte der Erfindung im Detail dargestellt, wobei die Merkmale der verschiedenen Aspekte sowohl einzeln als auch in beliebiger Kombination bei der Verwirklichung der Erfindung in ihren verschiedenen Ausführungsformen von Bedeutung sein können. Insbesondere ergeben die verschiedenen Aspekte jeweils für sich eine wesentliche Verbesserung des Standes der Technik.

Zur Vereinfachung der Darstellung wird im Folgenden von "Optimierung(en)" als Funktion und / oder Verfahren gesprochen, die von den jeweils genannten Systemkomponenten durchgeführt wird. Ein Optimierer kann eine Komponente sein, die eine Optimierung in die ausgetauschten Daten einfügt (wobei unter "Einfügen" hier und im Folgenden auch das allgemeine Vornehmen einer Optimierung an den ausgetauschten Daten verstanden wird). Analog gibt es in den genannten Anordnungen und Ausführungsbeispielen eine oder mehrere Optimierer-Komponenten, die die eingefügten Optimierung auswerten / nutzen und zumeist den ursprünglichen Datenstrom ganz oder in oft großen Teilen wiederherstellen und / oder den gewünschten semantischen Effekt des ursprünglich intendierten Datenstroms in oft großen Teilen wiederherstellen. Die Kommunikation mit der / den beiden Optimierer Komponenten wird im Folgenden nur jeweils für eine Kommunikationsrichtung beschrieben, um die Beschreibung übersichtlicher zu gestalten. Selbstverständlich ist die Optimierung in die umgekehrte Richtung ebenso möglich, sofern Anwendungen und Übertragungsnetze dies benötigen, es vorteilhaft erscheint und / oder die Anordnung und / oder Komponenten entsprechend ausgestaltet sind.

Ein Optimierer kann aus Sicht kommunizierender Endpunkte eine Komponente eines einem der Endpunkte bekannten Bestandteils der Kommunikationsbeziehungen sein, beispielsweise eines Routers, eines Servers, eines Proxys oder eines anderen Zwischensystems (Intermediate-Systems) sein, oder er kann "transparent" in die Kommunikationsbeziehungen eingreifen, also ohne dass seine Existenz den Endpunkten mitgeteilt werden oder auch nur bekannt sein muss. Die kommunizierenden Endpunkte werden in synonymer Art und Weise auch als Kommunikationsendpunkte bezeichnet. Im Folgenden wird zur Vereinfachung die Bezeichnung Endpunkt verwendet.

Ein Optimierer kann auf mehrere logische und / oder physische Komponenten verteilt sein. Auch kann ein Optimierer teilweise oder ganz Bestandteil eines oder mehrerer der Endsysteme sein bzw. auf einem oder mehreren der Endsysteme ausgeführt werden. Insbesondere kann ein Optimierer oder ein Teil davon als Software und / oder Hardware zusätzlicher Bestandteil anderer Systemkomponenten (Router, Server, Proxys, Zwischensysteme usw.) werden.

Spezifische Ausprägungen von Optimierungen (und den sie durchführenden Optimierern) sind beispielsweise Header-Kompression (ausgeführt durch geeignete Kompressoren), Übertragungsoptimierungen zum Umgang mit Verzögerungen, Paketverlusten und / oder Unterbrechungen. Diese erfindungsgemäßen Formen dieser Optimierungen werden unten beschrieben. Sie können einzeln oder in beliebigen Kombinationen realisiert werden.

In diesem Text werden die Begriffe Paket und Datenpaket synonym und auch unabhängig davon, ob in einem Paket / Datenpaket Nutzdaten und / oder Steuerinformationen vorhanden sind, verwendet. Diese Datenpakete folgen einem Übertragungsweg / -pfad (auch als Kommunikationspfad, Datenpfad oder kurz als Pfad bezeichnet), der z.B. von einem Routingprotokoll auf der Vermittlungsschicht dynamisch ausgewählt, statisch konfiguriert oder anderweitig ermittelt worden ist. Von einem Endpunkt zum anderen führt ein solcher Pfad oft durch ein oder mehrere Zwischensysteme (z.B. Router, Netzknoten, Proxies) und dabei durch ein oder mehrere Übertragungsnetze. Ein Pfad kann symmetrisch sein: dann durchlaufen Pakete von einem Endpunkt A zu einem anderen Endpunkt B dieselben Zwischensysteme wie Pakete von Endpunkt B zu Endpunkt A, jedoch in umgekehrter Reihenfolge. Oder der Pfad kann asymmetrisch sein, wenn sich die in entgegengesetzte Richtungen durchlaufenen Zwischensysteme unterscheiden. Eine solche Symmetrie kann auch ―auf gröberer Ebene ― für Übertragungsnetze betrachtet werden. Ein Pfad ist im einfachsten Fall aus einer Folge von Abschnitten / Übertragungsabschnitten (englisch: "Hops") zusammengesetzt, wobei ein Abschnitt zwei auf der jeweils betrachteten Abstraktionsstufe (z.B. bezüglich einer Protokoll-Schicht) benachbarte Zwischensysteme miteinander verbindet. Ein Teilbereich oder die Gesamtheit mehrerer Teilbereiche, auch nicht zusammenhängend, einer solchen Folge wird ebenfalls als Pfad bezeichnet. Ein Pfad kann auch mehrere alternative Pfade enthalten, die potentiell oder tatsächlich jeweils von einem Teil der den Pfad verfolgenden Datenpakete verfolgt werden. In diesem Text wird synonym auch der Begriff Kommunikationspfad bzw. Datenpfad anstelle von und gleichwertig zu dem Begriff Pfad verwendet.

Es besteht die Möglichkeit, dass auf dem Wege der Kommunikationsbeziehung zwischen zwei Endpunkten A und B ein oder mehrere schwierige Kommunikationspfade (SKP) vorliegen. Ein schwieriger Kommunikationspfad ist ein Bestandteil der Kommunikationspfade zwischen A und B, dessen Eigenschaften sich unter Umständen verschlechternd auf die erzielbare Dienstgüte auswirken können, wie vorstehend an den Beispielen Übertragungsverzögerung, Paketverlusten und Unterbrechungen beschrieben. Diese Eigenschaften des Kommunikationspfades können auf die Eigenschaften einer einzelnen Netzkomponente und / oder eines einzelnen Netzabschnitts zurückzuführen sein und / oder auf die Kombination der Eigenschaften mehrerer Netzkomponenten und / oder Netzabschnitte; insbesondere muss keines oder keiner der beteiligten Netzkomponenten / Netzabschnitte für sich betrachtet bereits einen schwierigen Kommunikationspfad ergeben. Auf dem Wege von A nach B können sich kein, einer, oder mehrere schwierige Kommunikationspfade befinden. Bezüglich jedes dieser schwierigen Kommunikationspfade können Optimierer, die in Bezug auf mögliche oder tatsächliche Datenflüsse sich bevorzugt auf der einem Endpunkt A zugewandten Seite des jeweils betrachteten schwierigen Kommunikationspfades befinden, eine andere Rolle spielen als Optimierer, die in Bezug auf mögliche oder tatsächliche Datenflüsse sich bevorzugt auf der dem anderen Endpunkt B zugewandten Seite des jeweils betrachteten schwierigen Kommunikationspfades befinden.

Die Erfindung zielt auf Optimierungen für Daten- und / oder Namensdienste ab. Zur besseren Lesbarkeit des Dokumentes sind die folgenden Ausführungen in zwei Hauptabschnitte untergliedert, die komplementäre und beliebig miteinander kombinierbare Aspekte der Erfindung erfassen: I. Allgemeine Optimierungen zum Umgang mit Paketverlusten, hohen Übertragungsverzögerungen (RTT), Unterbrechungen usw., sowie II. Weitere Optimierungen durch Kompression von Protokoll-Headern.

### I. Allgemeine Optimierungen

Die in diesem Abschnitt vorgenommene Gliederung in a), b) und c) dient der besseren Strukturierung des Abschnitts. Sie wird jedoch nicht zwingend eingehalten und einige Aspekte werden abschnittsübergreifend bzw. entgegen dieser Trennung bereits in anderen Abschnitten behandelt.

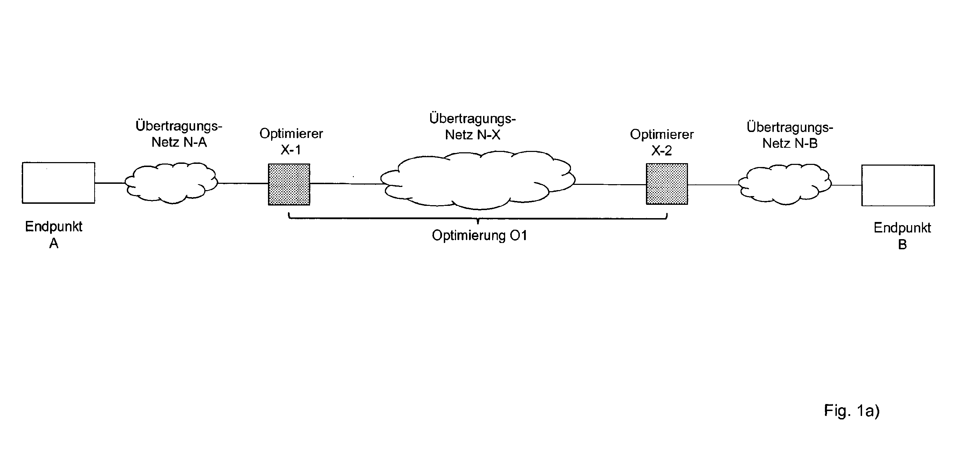

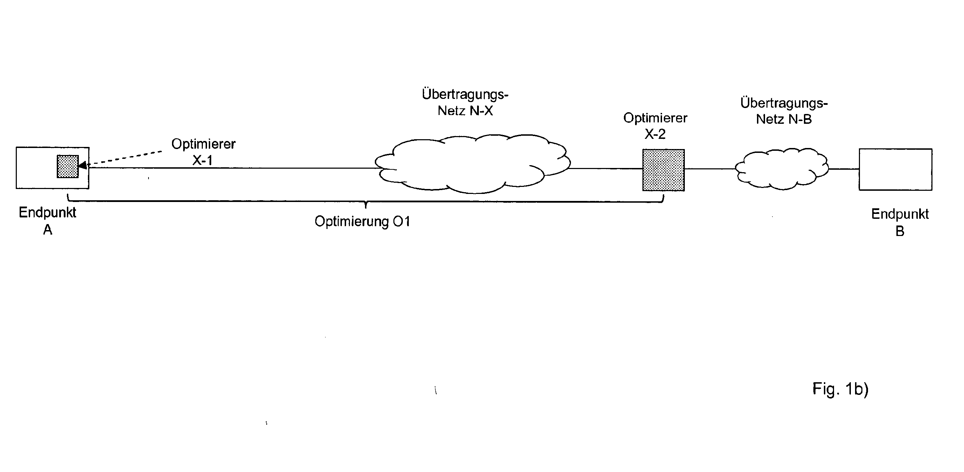

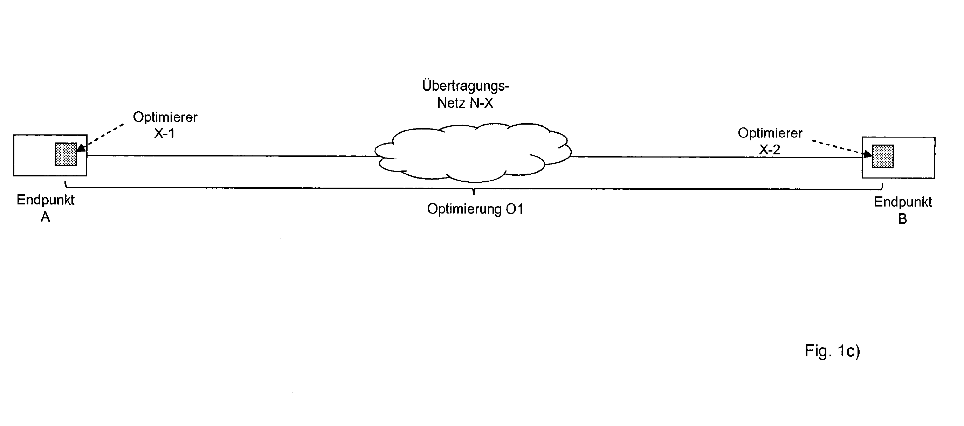

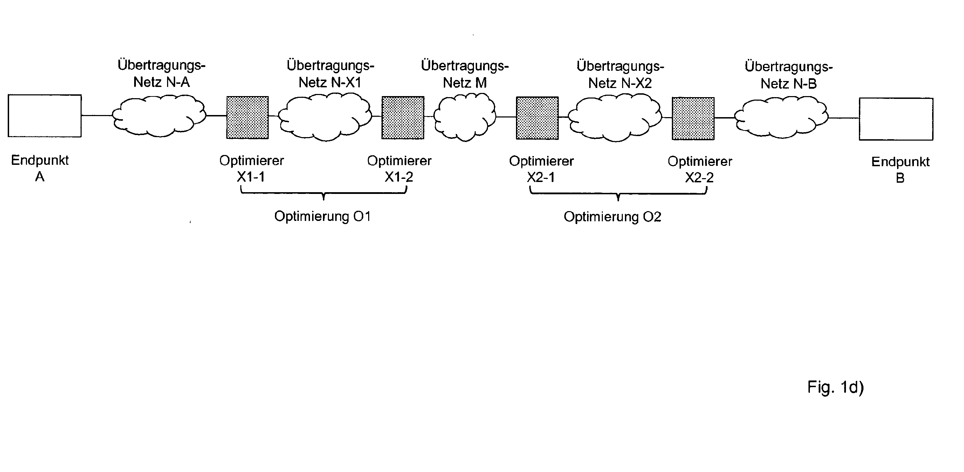

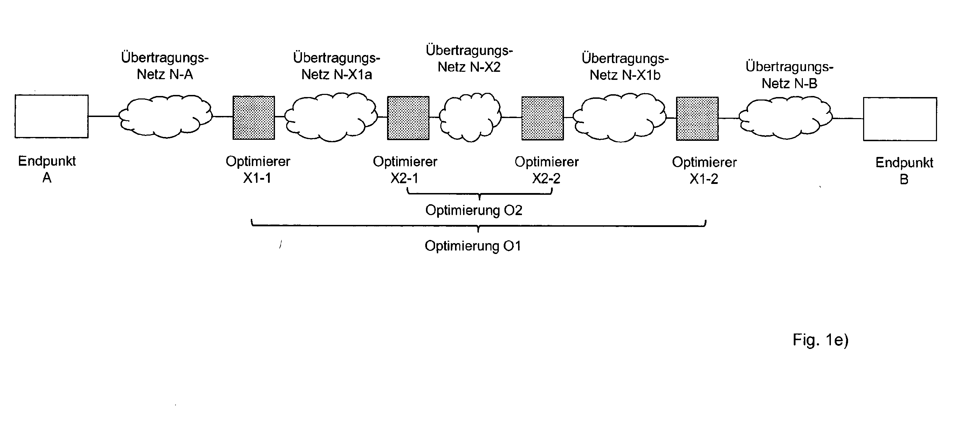

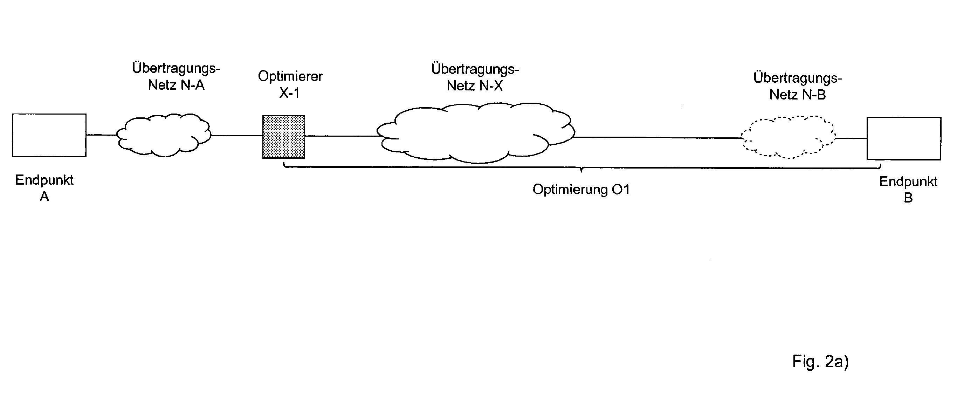

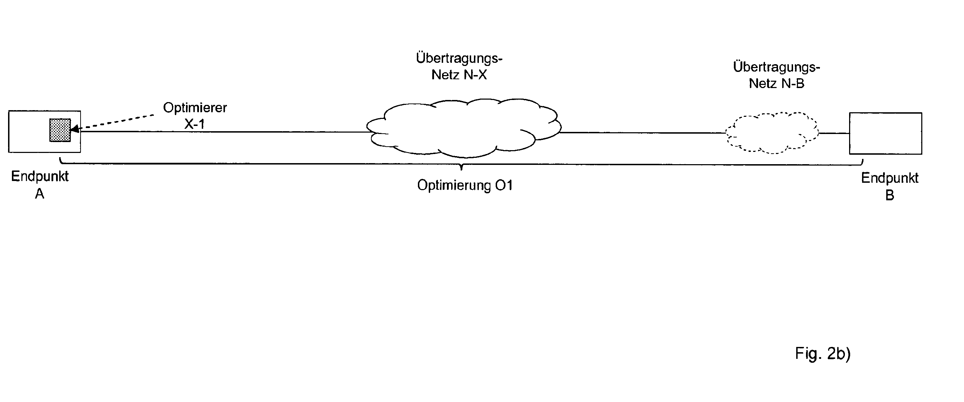

Einige mögliche Anordnungen zur Anwendung der erfindungsgemäßen Technologien sind in Fig. 1 und Fig. 2 dargestellt und werden im Folgenden erläutert.

Fig. 1 und Fig. 2 zeigen mehrere erfindungsgemäße Systemkonfigurationen mit zwei kommunizierenden Endpunkten A und B, die Quelle und / oder Senke für Nutzdaten sein können. Die beiden Endpunkte sind über eine Folge von Übertragungsnetzen miteinander verbunden. "Verbunden" bedeutet, dass A und B Datenpakete austauschen können. Diese Datenpakete folgen einem Pfad / Kommunikationspfad (auch kurz als Pfad bezeichnet), der z.B. von einem Routingprotokoll auf der Vermittlungsschicht dynamisch ausgewählt, statisch konfiguriert oder anderweitig ermittelt worden ist.

Fig. 1 und Fig. 2 zeigen weiterhin beispielhaft verschiedene Stellen in einigen Zwischensystemen und / oder den Endpunkten, in denen von Optimierern Optimierungen durchgeführt werden können. Im Einzelnen:

Fig. 1 a) stellt eine Anordnung mit zwei Endpunkten (A und B) und zwei von diesen getrennten Optimierern (X-1 und X-2) dar. Die Endpunkte senden und empfangen Datenpakete unverändert. Die von einem Endpunkt gesendeten (z.B. von A an B) Datenpakete können von X-1 aufgenommen und vor der Weiterleitung an X-2 optimiert werden, so dass für das Übertragungsnetz N-X die Optimierung 01 genutzt werden kann. Die optimierten Datenpakete werden von X-2 erkannt, die Optimierung bei Bedarf ausgenutzt und die Datenpakete in ihrer ursprüngliche Form (wie von A gesendet) weitgehend oder ganz wiederhergestellt und dann an B weitergeleitet. Hinsichtlich der insgesamt zu erbringenden Funktion sind für B die durch X-2 gesendeten Datenpakete nicht oder nicht wesentlich von den von A gesendeten unterscheidbar bzw. müssen von diesen nicht gesondert unterschieden werden. Die Optimierung der Datenpakete auf dem Pfadabschnitt durch das Netz N-X ist für die Endpunkte transparent. Die Optimierung kann auf alle Datenpakete und / oder alle Datenpakete, die zwischen zwei oder mehr Endpunkten und / oder und oder zwei oder mehr Instanzen durch ein bestimmte Anwendung und / oder im Rahmen einer Kommunikationsbeziehung ausgetauscht werden, angewendet werden.

Es sei angemerkt, dass hier und generell zur besseren Lesbarkeit im Text vereinfacht von "optimierten Datenpaketen" gesprochen wird. Hierunter fällt jedoch nicht nur eine Anpassung pro Datenpaket, sondern auch generell jede Anpassung des entsprechenden Stromes an Datenpaketen. Dies kann in vielfältiger Weise beispielsweise durch Modifikation der einzelnen Pakete, Modifikation ausgewählter Pakete, Einfügen von zusätzlichen Paketen oder anderweitiges Übertragen von Zusatzinformationen, aber auch beispielsweise durch eine besondere Behandlung und / oder Priorisierung und / oder geringere Verzögerung (beispielsweise durch Queueing) und / oder auch einer gezielten Verzögerung und / oder Unterdrückung und / oder Verdoppelung / Vervielfachung und / oder eine der anderen im folgenden beschriebenen Optimierungen der Pakete erfolgen. Von einer für die Endpunkte (oder beispielsweise den entsprechenden Anwendungen) transparenten Übertragung beziehungsweise weitgehend wiederhergestellten Datenpaketen oder ähnlichem wird auch dann gesprochen, wenn sich dies im entsprechenden Optimierungs-Zusammenhang nur auf die übertragenen Nutzdaten bezieht (also unter anderem nicht unbedingt auf Steuerinformationen der beteiligten Protokolle und / oder Paketgrenzen).

In Fig. 1 b) ist einer der Optimierer (X-1) in den einen Endpunkt (A) integriert. Die logischen Funktionen von Endpunkt A und Optimierer X-1 können unverändert sein. Auf diese Weise ist keine externe Komponente auf der Seite von A erforderlich, und aus Sicht der Optimierung 01 fallen die Übertragungsnetze N-A und N-X zusammen. Wie die Integration von X-1 in A erfolgt, ist der lokalen Implementierung überlassen. Denkbar ist, daß die beiden Funktionen auch unabhängig voneinander realisiert sind, etwa daß ein eigenständiger Prozeß und / oder ein Treiber des Betriebssystems die Optimierungsfunktion implementiert. Möglich ist auch, dass eine Einsteckkarte und / oder die Firmware auf einer Onboard-Einheit diese Aufgaben wahrnehmen. Wie oben kann der Optimierer für eine, mehrere und / oder alle Anwendungen und / oder eine, mehrere und / oder alle Kommunikationsbeziehungen einer, mehrerer und / oder aller Anwendungen ausgeführt werden. Das Gegenstück (Optimierer X-2) entspricht dem aus Fig. 1 a).

Fig. 1 c) stellt eine Anordnung dar, in der beide Optimierer X-1 und X-2 in die Endpunkte integriert sind, wie eben für Optimierer X-1 beschrieben wurde. Die Ausführungen für Optimierer X-1 gelten analog für Optimierer X-2. Die Realisierungen in den beiden Endpunkten können einander entsprechen oder in Teilen oder ganz unterschiedlich ausgestaltet sein. Fig. 1 d) zeigt eine Anordnung, in der zwischen den Endpunkten A und B zwei voneinander unabhängige Optimierungen (01 und 02) sequentiell auf unterschiedlichen Netzabschnitten (N-X1 und N-X2) stattfinden. Die vom Endpunkt A gesendeten Datenpakete werden zunächst über das Übertragungsnetz N-A zu Optimierer X1-1 übertragen und dann von Optimierer X1-1 optimiert. Die optimierten Datenpakete werden über das Übertragungsnetz N-X1 zum Optimierer X1-2 gesendet und von diesem empfangen und teilweise oder ganz wiederhergestellt und dann über das Netz M an Optimierer X2-1 weitergeleitet. Dort werden die Datenpakete erneut optimiert und über das Netz N-X2 an Optimierer X2-2 gesendet, welcher die Datenpakete empfängt und teilweise oder ganz wiederhergestellt an Endpunkt B weiterleitet. Die beiden Optimierungen 01 und 02 können die gleichen, teilweise oder ganz unterschiedliche Verfahren und Algorithmen einsetzen, die auf den gleichen und / oder (teilweise) unterschiedlichen (Teilen von) Paketen und / oder Paket-Headern und / oder Nutzdaten bzw. Steuerdaten operieren.

Während in Fig. 1 d) nur zwei von einander unabhängige Optimierungen dargestellt sind, können in einer konkreten Anordnung beliebig viele solcher Optimierungen vorhanden sein. Auch kann ein und derselbe Optimierer an mehr als einer Optimierung beteiligt sein. Z.B. können die Optimierer X1-2 und X2-1 in demselben System implementiert sein, wobei dann faktisch kein Übertragungsnetz M vorhanden ist. Weiterhin kann die Anzahl der Optimierungen mit dem gewählten Pfad durch das Übertragungsnetz bzw. die Übertragungsnetze variieren: zwischen zwei Endpunkten A und B kann dies beispielsweise zeitlich geschehen, wenn sich beispielsweise aufgrund der Routing-Entscheidungen der Pfad während einer bestehenden Kommunikationsbeziehung ändert. Entsprechend der Fig. 1 b) und Fig. 1 c) können auch einer oder mehrere der Optimierer in die Endpunkte integriert sein.

Statt einer sequentiellen Anordnung können Optimierer auch parallel angeordnet sein. Dies kann (wie eben beschrieben) beispielsweise dann der Fall sein, falls sich die Wegewahl durch das Netz / die Netze ändert, aber auch dann, wenn das Routing die Datenpakete einer Kommunikationsbeziehung auf mehrere Pfade aufteilt (z.B. zur Lastverteilung im Rahmen von Traffic Engineering). In einem solchen Fall nehmen unterschiedliche Datenpakete verschiedene Wege und können von unterschiedlichen Optimierungen betroffen sein; auch kann auf beispielsweise einem dieser Pfade gar keine Optimierung erfolgen.

Wie in Fig. 1 e) gezeigt, können zwei oder mehrere Optimierungen geschachtelt sein. In der dargestellten Anordnung wird das Übertragungsnetz N-X2 von den Optimierern X2-1 und X2-2 umschlossen, die die Optimierung 02 realisieren. Der Netzabschnitt bestehend aus den Übertragungsnetzen N-X1a, N-X2 und N-X1b wird von den Optimierern X1-1 und X1-2 umschlossen, die die Optimierung O1 implementieren. Da die Optimierung 02 innerhalb von 01 erfolgt, arbeiten die Optimierer X2-1 und X2-2 mit teilweise optimierten Datenpaketen. Ein Datenpaket P, das von einem Endpunkt A gesendet wird, wird zunächst un-optimiert über das Übertragungsnetz N-A übertragen und dann in Optimierer X1-1 gemäß der Optimierung 01 optimiert. Das so optimierte Datenpaket P' (auch hier und folgende analog der optimierte Datenstrom) wird dann über das Übertragungsnetz N-X1a an Optimierer X2-1 gesendet. Optimierer X2-1 führt nun eine weitere Optimierung 02 durch, woraus das Datenpaket P" hervorgeht. Für diese Optimierung 02 können die gleichen und / oder andere Kriterien wie bei 01 herangezogen werden. Bei 02 können die gleichen und / oder andere Algorithmen wie bei 01 eingesetzt werden. Das Datenpaket P'' wird über das Übertragungsnetz N-X2 übertragen und von Optimierer X2-2 empfangen, wobei P' oder ein P' in wesentlichen Teilen entsprechendes Datenpaket rekonstruiert wird. Dieses rekonstruierte Datenpaket wird dann über das Übertragungsnetz N-X1b an Optimierer X1-2 weitergeleitet. Dieser empfängt das Datenpaket und rekonstruiert so ein Datenpaket, welches P ganz oder in wesentlichen Teilen entspricht. Dieser von X1-2 rekonstruierte Datenpaket wird dann an Endpunkt B über das Netz N-B weitergeleitet.

Bezugnehmend auf Fig. 1 e) kann für 02 die Optimierung 01 vollständig beibehalten werden und / oder sogar von den Komponenten X2-1 und / oder X2-2 ganz / teilweise uninterpretiert bleiben. Alternativ könnte z.B. X2-1 auch die Optimierung O1 ganz oder teilweise aufheben bzw. zumindest interpretieren, beispielsweise um in Kombination mit den für 02 angewandten Verfahren einige bereits bei 01 optimierte Aspekte beispielweise effizienter oder für die folgenden Netzabschnitte / Netze effizienter zu optimieren und / oder für beide Verfahren einige der Optimierungsaspekte ganz oder teilweise gemeinsam zu nutzen. Auch wenn in Fig. 1 e) nur eine einfache Schachtelung von Optimierungen dargestellt ist, ist die Anzahl der geschachtelten Optimierungen grundsätzlich nicht begrenzt. Auch können sequentielle Optimierungen, wie zu Fig. 1 d) beschrieben, auf jeder Schachtelungstiefe vorliegen. Und es können Optimierer verschiedener Schachtelungen in einem System implementiert sein, also beispielsweise X1-1 und X2-1 zusammenfallen (wobei dann das Übertragungsnetz N-X1a praktisch wegfällt). Weiterhin können einzelne oder mehrere Optimierer direkt in Endpunkten implementiert sein (analog zu Fig. 1 b) und Fig. 1 c). Wie zu Fig. 1 d) beschrieben, kann sich die Zusammensetzung der Optimierer zeitlich und / oder räumlich ändern; auch können mehrere Optimierungen parallel betrieben werden.

In den folgenden Beschreibungen wird genannt, dass einige der Ausgestaltungen der Erfindung auch entsprechend Fig. 2 mit optional nur einer einseitigen Optimierer Komponente (in Fig. 2 Optimierer X-1) realisiert werden können. Analog zu den Anordnungen in Fig. 1 kann der Optimierer X-1 dabei sowohl in den Endpunkt integriert sein (Fig. 2 b)) oder losgelöst vom Endpunkt im Datenpfad der Pakete im Netz angeordnet sein (Fig. 2 a)). Ebenfalls möglich sind in diesen Fällen beispielsweise mehrfache Optimierungen mit mehreren nur einseitig eingesetzten Optimierern und / oder in Kombination mit Optimierer Komponenten-Paaren wie beispielsweise in Fig. 1 beschrieben.

Die vorstehend genannten und in Fig. 1 und Fig. 2 dargestellten Anordnungen sind nur beispielhaft gezeigt und zur Illustration zu verstehen. Beliebige Kombinationen dieser Anordnungen und daraus abgeleitete Anordnungen sind möglich. Auch wenn im folgenden von beispielsweise Anordnungen entsprechend Fig. 1 und / oder Fig. 2 gesprochen wird, so sind auch die daraus kombinierten und abgeleiteten Anordnungen gemeint.

Insbesondere sind der Übersichtlichkeit halber nur zwei kommunizierende Instanzen in Fig. 1 und 2 dargestellt. Genauso können aber auch mehr als zwei Instanzen als Quellen und / oder Senken von Nutzdaten und / oder als Sender und / oder Empfänger von Steuerinformationen auftreten.

Je nach konkreten Einsatzszenarien, generellen Anforderungen und / oder gewählten Netzen kann es auch vorteilhaft sein, einzelne oder Gruppen von Endpunkten / Systemkomponenten zunächst unter Einsatz von Optimierungs-Verfahren mit ausgewählten Intermediate-Instanzen kommunizieren zu lassen und von diesen aus zu "externen" anderen Endpunkten / Systemkomponenten ohne Optimierungs-Verfahren, mit anderen Optimierungs-Verfahren oder nur mit einem Teil der eingesetzten Optimierungen zu arbeiten. Diese Intermediate-Instanzen würden dann quasi als Gateway eingesetzt. Letztendlich sind solche Einsatzszenarien aber auf Kombinationen oder leichte Erweiterungen der in Fig. 1 und Fig. 2 dargestellten Anordnungen zurückzuführen.

Die Anwendungen können in allen Anordnungen Nutzdaten unidirektional und / oder bidirektional übertragen. Ebenso können einzelne, einige und / oder alle Netze physisch zur unidirektionalen und / oder bidirektionalen Übertragung ausgelegt sein.

Ein Übertragungsnetz oder Netz wie in Fig. 1 und / oder Fig. 2 dargestellt kann aus mehreren / vielen Übertragungsabschnitten mit zwischengeschalteten Systemen (Bridges, Switches, Routern, Gateways, Proxies usw.) bestehen, kann aus nur einzelnen Übertragungsabschnitten bestehen (beispielsweise eine "durchgeschaltete" Leitung oder eine direkte physische Verbindung durch elektrisches Kabel, Lichtwellenleiter, akustische Kopplung, elektromagnetische Wellen usw.), kann aber durchaus aus auch mehreren miteinander verbundenen Teilnetzen bestehen (die z.B. das Internet-Protokoll nutzen). Genauso können die gezeigten Netze auch aus lokalen Verbindungen bzw. einem lokalen Netz bestehen (insbesondere wird dies bei Netz N-A und N-B durchaus oft der Fall sein, kann aber genauso auch auf die anderen Netze zutreffen).

Die vorstehend ausgeführten Netze können beliebige Netze sein (z.B. IP-Netze, verzögerungstolerante Netze (DTNs), lokale Netze wie Ethernet und WLAN, PDH-, SDH- und / oder ATM-Netze, Telefonnetze, Funknetze (wie beispielsweise Mobilfunk, WiMax, 3G, UMTS, HS(D)PA, DVB-T, LTE, UWB, OFDM, 802.11b / a / g / n / s, ...), Satellitenverbindungen (wie beispielsweise DVB-S / S2, DVB-RCS, proprietäre Satellitenverbindungen, Funknetze im Weltraum), auch in kabelgebundenen (Broadcast-) Netzen (wie Kabelnetze, DSL, Fibre-to-the-Home, ...) usw., aber auch Overlay-Netze wie etwa Peer-to-Peer-Netze) und auch Kombinationen aus beliebigen Netzen verschiedener Typen. Die Optimierungsfunktionen sind nicht auf die Nutzung durch Protokolle einer bestimmten Schicht, Anwendung und / oder Anwendungsart begrenzt, können dies aber sein, bzw. speziell auf diese ausgelegt sein. Optimierungen können auf / für einzelne(n) Schichten oder auch schichtübergreifend arbeiten. Die Optimierung kann von den Eigenheiten der umgebenden Netze oder der Pfade durch das Netz abhängig sein und / oder von der Funktion und / oder dem Vorhandensein bestimmter Netzelemente: so kann beispielsweise eine Optimierungsfunktion anders arbeiten, wenn die Pakete auf dem Weg bestimmte weitere Netzelemente wie Router, NATs und / oder Firewalls passieren müssen. Verschiedene Optimierungen (und deren Optimierer) können sich untereinander abstimmen und / oder unabhängig voneinander arbeiten.

Im Folgenden werden Aspekte der Erfindung weitergehend im Detail erläutert. Es ist jedoch zu beachten, dass auch vorstehend bereits Ausgestaltungen und Aspekte der Erfindung beschrieben wurden, die für sich genommen und / oder in Kombination einem / mehrerer der folgenden (Teil-)Aspekte genutzt werden können.

### I.a) Reduzieren der Auswirkungen von Paketverlusten

Wie vorstehend beschrieben, haben Paketverluste oftmals negative Auswirkungen auf die resultierende Dienstgüte. Die bekannten Verfahren zum Reduzieren der Auswirkungen von Paketverlusten auf die Dienstgüte haben jedoch unter anderem den Nachteil, dass sie entweder eine bestimmte geänderte oder um-kodierte Content-Kodierung voraussetzen (was unter anderem rechenintensiv sein kann und für die eingesetzten Optimierer voraussetzt, dass sie entsprechende Verfahren zur Content-Kodierung implementieren und / oder sogar voraussetzt, dass die Optimierer die konkreten von einer Anwendung genutzten Content-Kodierungen implementiert haben) und / oder die Optimierungen spezifisch für und mit Hilfe eines Link-Layer-Protokoll (beispielsweise eines Mobilfunklinks, eines Satellitenlink, usw.) eingesetzt werden. Für die resultierende Dienstgüte kommt es jedoch insgesamt auf die die Übertragung durch das gesamte Netz an. Zudem ist es in vielen Fällen bei der Realisierung eines Dienstes nicht möglich Optimierer Komponenten an jeder Stelle eines Netzes ― also beispielsweise beidseitig eines eingesetzten bestimmten Übertragungsabschnittes in den Datenpfad zu integrieren (beispielsweise aufgrund administrativer und / oder technischer Einschränkungen/Zugriffs-/Zugangsmöglichkeiten).

Es ist daher vorteilhaft Optimierer zu realisieren, die auch weitgehend unabhängig von einzelnen Übertragungsabschnitten / Link-Layer-Protokollen und auch weitgehend unabhängig von einer gewählten Content-Kodierung und / oder den eingesetzten Anwendungen und / oder Endgeräten eingesetzt werden können. Auch ist es vorteilhaft, wenn die realisierten Optimierer ihre Optimierung zumindest optional auch weitgehend losgelöst von umfangreichen administrativen Unterstützungsmaßnahmen des Netzes wie Ende-zu-Ende Bandbreitenreservierungen durchführen können.

Ausgehend von den in Fig. 1 und Fig. 2 beschriebenen bzw. daraus abgeleiteten Anordnungen kann eine erfindungsgemäße Optimierung daher beispielsweise durch Optimierer X-1 und X-2 realisiert werden, die weitgehend frei im Datenpfad zwischen den Endpunkten A und B angeordnet werden können.

Ziel kann es dabei sein, einen möglichst großen Teil des Netzes mit der Optimierung 01 zu umfassen.

Abhängig vom konkreten Einsatzszenario kann es jedoch auch ausreichen besonders problembehaftete Netzbereiche in die Optimierung O1 einzubeziehen.

Ebenfalls abhängig von konkreten Einsatzszenarien kann es umgekehrt auch sinnvoll sein, bestimmte Netzbereiche und / oder einzelne Links nicht in die Optimierung 01 einzubeziehen ― beispielsweise wenn die Optimierung 01 zu einer Steigerung des Übertragungsvolumens führt und beispielsweise bestimmte Netzbereiche und / oder einzelne Links gerade durch diese Steigerung des Übertragungsvolumens vermehrt Paketverluste verursachen würden. Dies könnte beispielsweise mit einer Anordnung ähnlicher der in Fig. 1 d) dargestellten realisiert werden. Wobei die Optimierungen O1 und 02 wahlweise ganz, teilweise identisch und / oder spezifisch auf die von ihnen umfassten Netzbereiche N-X1 und N-X2 ausgelegt sein können.

Die von Optimierern realisierte erfindungsgemäße Optimierung kann daher beispielsweise Redundanz als Vorwärtsfehlerkorrektur in die übertragenen Daten einfügen. Dies kann unabhängig von den konkreten eingesetzten Anwendungen, unabhängig von den konkreten Content-Kodierungen und unabhängig von ggf. bestehenden FEC Verfahren auf den Link-Layer-Protokollen einzelner Übertragungsabschnitte erfolgen - natürlich könnte optional auch die eingefügte Optimierung mit einem und / oder mehreren in diese anderen Komponenten integrierten bzw. von diesen realisierten FEC Verfahren kooperieren und / oder aus der Kenntnis / Erkennung dieser Verfahren Nutzen ziehen.

Am Beispiel von VoIP und bei einer Anordnung entsprechend Fig. 1 a) könnte so beispielsweise das VoIP Gespräch mit einer verbesserten Dienstgüte geführt werden, obwohl ein von Paketverlusten behaftetes Netz N-X im Datenpfad zwischen den Endpunkten A und B liegt. Um diese Steigerung der Dienstgüte zu erreichen, werden die Optimierer X-1 und X-2 eingesetzt. So würde X-1 beispielsweise von Endpunkt A VoIP Datenpakete empfangen, FEC Redundanz hinzufügen (entweder in die Pakete oder als zusätzliche Pakete / Steuerinformationen) und die resultierenden Datenpakete über das Netz N-X weiterleiten. Optimierer X-2 empfängt den optimierten Datenstrom, kann alle oder zumindest Teile der aufgetretenden Paketverluste durch das Auswerten der FEC Redundanzen ausgleichen und leitet den vollständigen, fast vollständigen ganz oder teilweise wiederhergestellten Datenstrom an Endpunkt B weiter.

Bei dem Netz N-X könnte es sich beispielsweise um das Internet handeln. Und die Optimierer X-1 und X-2 könnten jeweils beim Weiterleiten / Empfangen der Daten aus Firmennetzen oder Heimnetzen N-A und N-B in das Internet N-X die Optimierung 01 einfügen / auswerten.

Das Netz N-X könnte beispielsweise auch ein gemeinsam von mehreren Nutzern und / oder Anwendungen genutzter Internetzugang beispielsweise an einem öffentlichen Internet Hotspot (oder auch speziellen Internet Hotspots wie sie in Zügen, Flugzeugen usw. angeboten werden) sein. In diesem Fall treten ggf. gerade auf diesem gemeinsam genutzten Internetzugang vermehrt Paketverluste auf. Während auch hier grundsätzlich alle in Fig. 1 gezeigten Anordnungen eingesetzt werden können, lässt sich dieses Einsatzszenario gut anhand der Anordnung aus Fig. 1 b) beschreiben. Endgerät A könnte dann beispielsweise ein Laptop sein, der über WLAN und einen Hotspot gemeinsam mit anderen Nutzern und / oder eigenen Anwendungen einen Internetzugang nutzt. Wenn dieser Internetzugang überlastet ist und dies zu Paketverlusten führt, kann der Nutzer von Endgerät A beispielsweise für seine VoIP Daten (und / oder all seine Anwendungsdaten zum Endpunkt B) FEC Redundanzen mit Hilfe eines Optimierers X-1 (der beispielsweise lokal auf seinem Laptop realisiert ist) in seine Datenströme einfügen. Optimierer X-2 liegt entweder ohnehin im Datenpfad zu Endpunkt B oder aber beispielsweise Optimierer X-1 stellt beispielsweise durch geeignete Ziel-Adressierung der generierten Pakete sicher, dass die generierten Pakete über N-X an X-2 weitergeleitet werden sollen. X-2 könnte dann beispielsweise im Heimnetz des Nutzers von Endpunkt A stehen, oder im Firmennetz des Nutzers von Endpunkt A, oder Optimierer X-2 wird von einem Dienstanbieter betrieben, der es so Dienstnutzern (wie in diesem Beispiel dem Nutzer von Endpunkt A) ermöglicht seine Daten mit der Optimierung 01 an X-2 zu übertragen. X-2 ist dann beispielsweise an ein Übertragungs-Netz N-B angebunden, über das der Endpunkt B erreicht werden kann. Optional könnte es sich bei dem Netz N-B auch (erneut) um das Internet handeln, in das die unter Ausnutzung von O1 ganz / teilweise wiederhergestellten Daten (zurück) gegeben werden und dann Endpunkt B erreichen können.

Welche der bekannten oder auch speziell entwickelten FEC Verfahren zur Redundanzgenerierung eingesetzt werden, kann bei der Realisierung beispielsweise anhand von CPU Leistung, Speicheranforderungen, den erwarteten und / oder dynamisch gemessenen Paketverlustraten, toleriertem durch die FEC Redundanzen erzeugten Overhead und nicht zuletzt abhängig von der durch die Auswertung der FEC Verfahren potentiell erzeugten zusätzlichen Verzögerung beim empfangenen Optimierer weitgehend frei zugeschnitten auf das konkrete Einsatzszenario gewählt werden. Neben komplexeren FEC Verfahren wie beispielsweise auf Vandermonde-Matrizen basierenden Verfahren, sind hier sehr einfache beispielweise XOR basierte Verfahren ebenso denkbar.

Für Einsatzszenarien wie auch für die Beispielanwendung VoIP könnte es je nach konkretem Einsatzszenario sinnvoll sein, nicht unbedingt zusätzliche Datenpakete für die FEC zu erzeugen (unter anderem, da zusätzliche Datenpakete in der Regel auch zusätzliche Header benötigen und damit zusätzlichen Overhead generieren). Hier könnte es sich anbieten die FEC Redundanzinformationen ganz und / oder teilweise an die einzelnen z.B. VoIP Datenpakete anzuhängen.

Je nach Einsatzszenario kann es auch vorteilhaft sein, die eingefügten FEC Redundanzinformationen so zu gestalten, dass sie auch direkt von einem der Endpunkte (beispielsweise Endpunkt B) bzw. der beteiligten Anwendung genutzt und "ausgewertet" werden können. Hiermit ist bei einer erfindungsgemäßen Ausgestaltung nicht gemeint, dass beispielsweise die genutzten Anwendungen direkt Ende-zu-Ende die FEC Redundanzinformationen in beispielsweise ihren Anwendung-Übertragungsprotokollen implementieren. Vielmehr ist damit das Einfügen von FEC Redundanzinformationen durch einen weitgehend von der Anwendung losgelösten Optimierern X-1 wie beispielsweise in Fig. 2 a) und b) gezeigt, gemeint.

Der Optimierer X-1 kann in vielen Einsatzszenarien im einfachsten Fall die eingehenden Datenpakete verdoppeln (oder allgemeiner stets und / oder bei beispielsweise dynamisch festgestellten auftretenden Paketverlusten doppelt bzw. allgemeiner mehrfach) senden. Da viele Übertragungsprotokolle (unter anderen das breit eingesetzte Protokoll IP) nicht zusichern, dass Pakete während der Übertragung nicht verdoppelt oder vervielfacht werden, tolerieren (ggf. ignorieren) viele Empfangsprotokolle und Anwendungen doppelt empfangene Pakete. So werden zusätzlich zu den Anordnungen aus Fig. 1 auch Anordnungen gemäß Fig. 2 möglich, bei denen optional nur eine Optimierer Komponente X-1 eingesetzt wird. Dennoch kann es auch beispielsweise bei Paketverdopplung je nach Einsatzszenario und beispielsweise administrativen und / oder technischen Anordnungsmöglichkeiten sinnvoll sein, einen Optimierer X-2 einzusetzen, der vor dem Weiterleiten über nachfolgende Netze an Endpunkt B die Paketverdopplungen wieder rückgängig macht um Übertragungskapazität in den folgenden Netzen / Netzabschnitten einzusparen (sofern sie nicht ganz / teilweise bereits durch aufgetretene Paketverluste "rückgängig" gemacht wurden).

Unter Ausnutzung der Kenntnis von zur Übertragung genutzten Protokollen kann das Einfügen von Redundanzen oftmals auch geschickt so realisiert werden, dass weniger Overhead entsteht als dies bei einem reinen Operieren auf Paketebene ohne Betrachtung der einzelnen Protokolle möglich ist. Dies kann man erneut am Beispiel VoIP verdeutlichen. Viele VoIP Anwendungen nutzen das Protokoll RTP zur Datenübertragung (siehe auch [6]). RTP wird in der Regel oberhalb von UDP und IP eingesetzt ― daher haben RTP Pakete im Vergleich zu dem oftmals relativ geringen Volumen der in einem RTP enthaltenen Sprachdaten einen sehr hohen RTP, UDP, IP, usw. Header-Overhead. Zugleich enthalten RTP Pakete Timestamps und einen Sprachdatenteil (Nutzdatenteil) variabler Grö-βe. Eine erfindungsgemäße Realisierung könnte daher in einem Einsatzszenario mit beispielsweise VoIP und RTP Redundanz in RTP einfügen, in dem Optimierer X-1 in jedes von Endpunkt A empfangene RTP Datenpaket erneut vor den neu empfangenen Nutzdaten auch die Nutzdaten des zuvor empfangenen RTP Datenpaketes einfügt (also beispielsweise die doppelte Nutzdatenmenge pro RTP versendet) und die Timestamps (die im Beispiel von RTP beispielsweise den Timestamp der ersten in einem Paket enthaltenen Nutzdaten angeben) entsprechend anpasst. Eine entsprechende Realisierung würde deutlich weniger Overhead erzeugen als eine komplette Verdopplung der RTP Pakete. Zugleich würden VoIP RTP-Protokoll- und / oder Anwendungsimplementierungen oftmals problemlos auch ohne den Einsatz eines Optimierers X-2 diese modifizierten RTP Pakete verstehen und selbstständig (weitgehend transparent) die eingehenden Redundanzinformationen zum Ausgleich von Paketverlusten nutzen können. Es sind also auch in diesem Beispiel auch Anordnungen gemäß Fig. 2 möglich.

Ist ungewiss, ob ein Optimierer X-2 zur Interpretation (Rückwandlung) des optimierten Datenstroms während der Dauer der optimierten Kommunikationsbeziehung zur Verfügung steht, so kann der Optimierer X-1 den optimierten Datenstrom auch so ausbilden, dass die für die Optimierung notwendigen Informationen nur für den Optimieret X-2 "sichtbar" sind, vom (im obigen Beispiel) Endpunkt B jedoch nicht wahrgenommen werden. Hierzu können beispielsweise die zur Optimierung notwendigen Informationen in separaten Paketen übertragen und diese beispielsweise anders (z.B. an den Optimierer X-2) adressiert werden. Auch können die zur Optimierung notwendigen Informationen in den für den Endpunkt B bestimmten Paketen "versteckt" sein. Beispielsweise kann in einer Protokoll-Hierarchie ein "größeres" Paket einer Schicht (z.B. der Vermittlungs-Schicht) ein "kleineres" Paket einer höheren Schicht (z.B. der Transport-Schicht) enthalten, und zwar so dass nach dem "Ende" des Transport-Schicht-Paketes noch Raum für weitere Informationen ist. Bei der Vermittlungs-Schicht kann es sich insbesondere um IP (z.B. IPv4 oder IPv6), bei der höheren Schicht um IP, UDP, TCP, ICMP, DCCP, SCTP sowie andere IP-basierte Tunneling- oder Transportprotokolle handeln.

In jedem dieser Einsatzfälle kann eine statische Konfiguration beispielsweise der Menge der eingefügten Redundanzinformationen und / oder eine dynamische Anpassung beispielsweise bezogen auf eine dynamisch geschätzte und / oder gemessene Paketverlustrate erfolgen. Neben der Menge der eingefügten Redundanzinformationen kann auch optional auch beispielsweise das eingesetzte FEC Verfahren selbst modifiziert und / oder gewechselt werden.

Je nach Einsatzszenario kann es vorteilhaft sein, Paketverluste als Optimierung und / oder Teil einer Optimierung auch durch Übertragungswiederholungen (beispielsweise entsprechend eines ARQ Protokolls) zu reduzieren. Hierbei könnten beispielsweise herkömmliche ARQ basierte Protokolle wie TCP zum Einsatz kommen und beispielsweise unter anderem zu diesem Zweck die zu übertragenen Pakete durch eine und / oder mehrere TCP Verbindungen getunnelt werden. Es wäre aber beispielsweise auch möglich und je nach Einsatzszenario vorteilhaft, hierfür beispielsweise spezielle Protokolle zu entwerfen und / oder diese Funktionalität in die von den Optimierern eingesetzten Protokollen zu integrieren.

Auch kann es je nach Einsatzszenario vorteilhaft sein eine Kombination aus Übertragungswiederholungen (wie ARQ Verfahren) und FEC Verfahren einzusetzen. So könnte beispielsweise ein einen optimierten Datenstrom empfangener Optimierer zunächst die FEC Informationen auswerten und für den Fall, dass dennoch nicht alle Pakete/Informationen empfangen wurden bzw. wiederhergestellt wurden, eine entsprechende Übertragungswiederholung anfordern.

Da Übertragungswiederholungen, wenn sie notwendig werden, oftmals zu einer zusätzlichen Verzögerung führen, kann es, je nach Einsatzszenario, vorteilhaft sein, eine entsprechende Optimierung beispielsweise nur für Netze / Teilnetze und / oder Übertragungsabschnitte durchzuführen, die relativ hohe Übertragungsfehlerraten und / oder allgemein relativ hohe Paketverlustraten aufweisen. Daher kann es auch vorteilhaft sein, beispielsweise auf Übertragungswiederholungen basierende Optimierungen für einzelne Netze / Teilnetze und / oder Übertragungsabschnitte einzeln durchzuführen und gegebenenfalls so mehrere Optimierungen ― beispielsweise für diesen Zweck sequentiell ähnlich wie in Fig. 1 d) gezeigt ― zu kombinieren. Auch kann es je nach Einsatzszenario beispielsweise vorteilhaft sein, eine auf Übertragungswiederholungen basierende Optimierung für ein Netz / Teilnetz und / oder Übertragungsabschnitt zu nutzen (dies könnte beispielsweise in einer Anordnung entsprechend Fig. 1 e) die Optimierung 01 sein) und eine beispielsweise weiterreichende Optimierung oberhalb dieser zu nutzen (dies könnte beispielsweise in einer Anordnung entsprechend Fig. 1 e) die Optimierung 02 sein). Es kann, je nach Einsatzszenario, vorteilhaft sein, wenn auf Übertragungswiederholungen basierende Optimierungen in Netzen/Teilnetzen und / oder Übertragungsabschnitten mit zumindest relativ kleiner RTT eingesetzt werden. Unter anderem vor diesem Hintergrund kann es auch vorteilhaft sein, ein entsprechendes Verfahren / Anordnung mit den unter b) beschriebenen Verfahren zur Reduzierung der RTTs zu kombinieren.

Sofern als Bestandteil der Optimierung Übertragungswiederholungen / ARQ Verfahren genutzt werden, kann es, je nach Einsatzszenario, vorteilhaft sein, beispielsweise das Anfordern von Übertragungswiederholungen nur durchzuführen, wenn die daraus resultierende und / oder zu erwartende Verzögerung nicht "inakzeptabel" groß wird. Ab wann eine Übertragungsverzögerung inakzeptabel groß wäre, hängt unter anderem vom konkreten Einsatzszenario und / oder den verwendeten Protokollen und / oder den Anwendungen ab. Entsprechende Grenzwerte könnten beispielsweise konfiguriert werden, gemessen werden, aus den eingesetzten Protokollen und / oder Anwendungen und / oder deren Parametern abgeleitet werden. Auch könnten sie absolut und / oder relativ angegeben werden (beispielsweise relativ zu einer RTT sein).

Da unter anderem durch Übertragungswiederholungen und / oder Nutzung von FEC Informationen zum Wiederherstellen fehlender Pakete und / oder Queuing und / oder anderen Mechanismen während der Übertragung die Reihenfolge der Pakete verändert werden kann, kann es, je nach Einsatzszenario vorteilhaft sein, Sequenznummer und / oder Timestamps in der Optimierung einzufügen und / oder aus bestehenden Headern nutzen. In diesem Fall kann es für einen den optimierten Datenstrom empfangenen und weiterleitenden Optimierer vorteilhaft sein, die Paketreihenfolge beim Weiterleiten zumindest teilweise wiederherzustellen. Zur Reduzierung von Übertragungsverzögerungen kann es, je nach Einsatzszenario, vorteilhaft sein, bestimmte Datenpakete / bestimmte Informationen über andere Übertragungswege (Netze / Teilnetze und / oder Übertragungsabschnitte) zu übertragen. Beispielsweise könnte es vorteilhaft sein, wenn diese anderen Übertragungswege eine relativ kurze RTT und / oder geringe Paketverlustraten aufweisen, beispielsweise da hierdurch die die optimierten Datenströme empfangenen Optimierer diese Informationen beispielsweise bei auftretenden Paketverlusten schneller erhalten und so das Weiterleiten der (wiederhergestellten) Pakete und / oder Informationen weniger verzögern. Auch kann es aus ähnlichen Gründen je nach Einsatzszenario vorteilhaft sein, bestimmte Datenpakete / bestimmte Informationen (wie beispielsweise FEC und / oder Übertragungswiederholungen) mit einer höheren Priorität zu übertragen und so beispielsweise die Übertragungsverzögerung und / oder Verlustraten für diese Datenpakete/Informationen zu reduzieren.

Je nach Einsatzszenario kann es vorteilhaft sein, die Optimierung und / oder deren intern verwendete Verfahren auf einzelne Kommunikationsbeziehungen, Gruppen von Kommunikationsbeziehungen und / oder auch den gesamten Datenfluss zu beziehen.

### I.b)Reduzieren von Übertragungsverzögerungen

Wie oben beschrieben, entsteht oftmals ein wesentlicher Bestandteil der Übertragungsverzögerungen in paketvermittelter Übermittlung durch das Anstauen von Paketen in Warteschlangen vor Engpässen. Diese Warteschlangen entstehen oft in Netzelementen und / oder Implementierungsschichten, auf die wenig direkter Einfluss bezüglich der Realisierung geeigneter QoS-Algorithmen genommen werden kann. Ein Optimierer, der sich auf einem Pfad vor einem Engpass befindet, kann oftmals zur Vermeidung oder Begrenzung solcher Staus beitragen, indem er beispielsweise die oben beschriebenen Verfahren der Optimierung anwendet, also beispielsweise Pakete unterdrückt, umordnet, zurückhält oder komprimiert, oder auch in sonstiger Weise den Datenstrom so beeinflusst, dass z.B. das Verhalten der beteiligten Endsysteme zu einer Regelung der Warteschlangen beiträgt.

Eine Schwierigkeit ist dabei die mangelnde Information des Optimierers über den aktuellen Zustand des Engpasses, wie z.B. die erzielbare Bitrate, die aktuelle Größe und Struktur der Warteschlange, die eingesetzten Priorisierungsalgorithmen sowie der Anteil des durch den Optimierer laufenden Datenflusses an dem Gesamtdatenfluss durch den Engpass und das Verhalten (und weiter zu erwartende Verhalten) des nicht durch den Optimierer laufenden Anteils. Es kann dabei vorteilhaft sein, dass der Optimierer durch Beobachtungen der Paketströme Wissen, wenn auch oft unvollständiges, nachlaufendes Wissen, über diese Zustandsparameter ermittelt. Beispielsweise könnte der Optimierer Bitraten messen und / oder aus dem Auftreten von Übertragungswiederholungen (bzw., bei Verwendung von ECN nach RFC 3168, verwandte Signale wie "congestion experienced" bzw. ECN-Echo und CWR auf der Transportebene) auf Übertragungseigenschaften schließen und / oder andere Feedback-Signale wie RTCP oder ROHC-Feedback nutzen und aus diesen beispielsweise schließen, dass ab bestimmten Bitraten Stau-verursachte Verluste auftreten. Ebenso kann es vorteilhaft sein, wenn der Optimierer Aussagen über den Verlauf der RTT nutzt, um diese mit der beobachteten und beeinflussten Bitrate in Beziehung zu setzen und daraus Parameter des Engpasses zu bestimmen. Es kann zudem vorteilhaft sein, wenn der Optimierer das zu erwartende Verhalten der Endsysteme in seine Vorhersagen einbezieht ― beispielsweise kann eine zu erwartende Übertragungswiederholung durch rechtzeitige Priorisierung eines Datenpakets vermieden werden ― und / oder auch gezielt beeinflusst, beispielsweise durch Unterdrückung von unnötigen Übertragungswiederholungen und / oder durch Unterdrückung und / oder Verzögerung von ACK- oder Daten-Paketen und ein dadurch erzieltes Herunterbremsen eines Senders, der beispielsweise droht, den Engpass zu überlasten.

Weitere je nach Einsatzszenario vorteilhafte Optimierungsmassnahmen eines Optimierers und / oder in Kombination mit diesem eingesetzte Verfahren wie HTTP-Prefetching lassen sich (durch Steuerung der Initiierung, aber auch durch Steuerung des jeweiligen Verlaufs der Transportverbindungen einzelner Zugriffe) so steuern, dass die vorhergesagte Kapazität des Engpasses jeweils beispielsweise möglichst gut, aber nicht zu stark ausgenutzt wird, zugleich könnten dabei auch weitere Informationen über den Engpass gewonnen werden. Schließlich kann es je nach Einsatzszenario vorteilhaft sein, wenn der Optimierer den Engpass durch Kommunikation mit einer Gegenstelle auch ohne direkte Nutzwirkung der ausgelösten Datenübertragung aktiv sondiert, z.B. mit o.g. ICMP-Techniken (echo request / echo reply, "ping") und / oder auch durch Aufsetzen von Huckepack-Informationen auf den Nutzdaten und / oder durch Nutzung von einer / mehreren Management-, Diagnose- und / oder Messschnittstellen zu einem und / oder mehreren / allen Netzelementen die Queues implementieren und / oder verursachen und / oder entsprechende Informationen weitergeben können. Viele dieser Maßnahmen lassen sich bei unidirektionaler Beobachtung / Beeinflussung wie auch bei bidirektionaler Beobachtung / Beeinflussung jeweils mindestens eines Teils der durch den Engpass fließenden Daten realisieren.

Einzelne und / oder Kombinationen dieser Maßnahmen können von einem Optimierer dazu genutzt werden, die vor einem Engpass entstehende Warteschlange zu beeinflussen und damit insgesamt eine Verbesserung der Dienstqualität zu erzielen. Je nach Einsatzszenario können dabei geeignete Vorgaben genutzt werden (beispielsweise eine maximal gewünschte RTT oder auch ein anderes Ziel aus geeigneten Kennwerten wie eine Kombination aus Verlustrate, RTT und RTT-Varianz / Variabilität, die beispielsweise nach der Padhye-Firoiu-Gleichung zu bestimmten Durchsatzwerten von TCP-Verbindungen führt). Ziel kann je nach Einsatzszenario aber auch sein, jeweils nicht (nur) der Summe der Datenströme und / oder Gruppen von Datenströmen, sondern gegebenenfalls nur / auch bevorzugten Datenströmen (wie interaktiv gesprochenes VoIP) die erforderliche Dienstqualität mit einer höheren Zuverlässigkeit zur Verfügung zu stellen als dies ohne diese Maßnahmen möglich wäre.

Beispielsweise ausgehend von den in Fig. 1 und 2 beschriebenen bzw. daraus abgeleiteten Anordnungen kann eine erfindungsgemäße Optimierung daher beispielsweise durch Optimierer X-1 und X-2 realisiert werden, die weitgehend frei im Datenpfad zwischen den Endpunkten A und B angeordnet werden können. Beispielsweise in der in Fig. 1 a) dargestellten Anordnung optimieren die beiden Optimierer gemeinsam die Nutzung eines Engpasses im Netz N-X. Beispielsweise könnten dabei X-1 und / oder X-2 einen möglicherweise verteilt realisierten Algorithmus zur Gewinnung relevanter Kennparameter des / der Engpässe im Netz N-X einsetzen. So können sich X-1 und X-2 gegenseitig aktive Sondierungspakete senden und / oder auf ohnehin gesendete Pakete Huckepack-Informationen aufsetzen und darüber beispielsweise die RTT und ggf. auch ihren Verlauf abschätzen.

Betrachten wir ohne Beschränkung der Allgemeinheit als eines von vielen möglichen Ausführungsbeispielen den Weg von A nach B und die auf diesem Weg in N-X entstehende Warteschlange, dann kann X-1 den Zufluss und X-2 den Abfluss von Datenpaketen in die Berechnungen einbeziehen und damit eine verfeinerte Aussage über die aktuelle Größe der Warteschlange(n) treffen. Der in X-2 sichtbar werdende Abfluss von Datenpaketen kann des weiteren Aussagen über die erzielbare Bitrate und die aktuelle Paketverlustrate liefern. X-1 kann auf die gemeinsam mit X-2 ermittelten Kennparameter durch Einflussnahme (beispielsweise Verzögerung, Unterdrückung, Verdoppelung, Umordnung, Umschreiben der Paketfelder, z.B. Veränderung des angebotenen Fensters) auf die in Vorwärtsrichtung (im beschriebenen Beispiel also von Endpunkt A an B) gesendeten Datenpakete reagieren. X-2 kann dies ebenfalls; allerdings ist der Einfluss dann indirekt über die Rücksendungen von B an A vermittelt; diese Einflussnahmen können sowohl B als auch A noch direkt beeinflussen.

Je nach Einsatzszenario kann es vorteilhaft sein, dass ein Optimierer in einer alternativen Ausgestaltung bzw. in Kombination mit einem / mehreren der vorgenannten Verfahren auch Rückmeldungen / Feedback und / oder Informationen (z.B. über Queueinformationen nachfolgender Komponenten und / oder Bandbreiten für einzelne / Typen / Gruppen von Datenströmen nutzt. Diese Informationen könnten beispielsweise angeben, wie viele Bytes für bestimmte Datenarten und / oder generell noch beispielsweise an nachfolgende Komponenten senden kann ohne dadurch ein Queueing zu verursachen, bzw. um beispielsweise ein relativ geringes Queueing zu verursachen und / oder verbunden mit weitergehenden Informationen über derzeitige und beispielsweise je nach Datenart und / oder Priorität resultierenden bzw. bestehenden Queuegrößen und / oder Füllstände. Vorteilhafte Übertragungsarten und Schnittstellen für diesen Informationsaustausch / dieses Feedback könnten lokale / übertragene Steuerinformationen und / oder andere Schnittstellen wie beispielsweise die im Linux Betriebssystem oft von Treibern genutzte / proc Dateisystem-Schnittstelle sein.

### I.c) Reduzieren der Auswirkungen von Übertragungs-Unterbrechungen

Wie oben beschrieben haben Übertragungs-Unterbrechungen oft den Verlust und / oder die Verzögerung von Datenpaketen zur Folge, was das Herstellen und / oder den Ablauf und / oder das Beenden einer Kommunikationsbeziehung beeinträchtigen kann. Eine Verzögerung kann beispielsweise eintreten, wenn die während der Übertragungs-Unterbrechung gesendeten Pakete beispielsweise in einem Router (d.h. dessen Queue) zwischengespeichert wurden, bis die Übertragungs-Unterbrechung vorüber ist. Eine solche Zwischenspeicherung bezieht sich aber im Allgemeinen nur auf (relativ) wenige Pakete und auf einen (relativ) kurzen Unterbrechungszeitraum. Paketverluste wiederum können sich auf die Übertragungsverzögerung auswirken, wenn beispielsweise ein zuverlässiges und / oder reihenfolgeerhaltendes Transportprotokoll (z.B. TCP, SCTP) eingesetzt wird. Dauert die Unterbrechung länger an als eine (z.B. durch das Transportprotokoll und dessen Parameter) bestimmten Zeitspanne (Timeout), so kann es vorkommen, dass die Kommunikationsbeziehung durch das entsprechende Protokoll beendet wird. Unter anderem wenn dies unterhalb des Anwendungsprotokolls (z.B. auf der IP- oder Transport-schicht) geschieht, wird dem Anwendungsprotokoll oftmals die Kommunikationsgrundlage entzogen, und die Kommunikationsbeziehung zwischen den Anwendungen kommt nicht zustande bzw. kann nicht fortgeführt werden bzw. muss später (nach Wegfall der Unterbrechung) neu aufgesetzt werden.

Auch kann eine neue Adresse eines Kommunikationspartners zur (vorübergehenden) Unterbrechung oder zum Abbruch einer Kommunikationsbeziehung führen.

Verschiedene Lösungen wurden im Laufe der Zeit vorgeschlagen, um die Kommunikationsbeziehung der Anwendung aufrecht zu erhalten, auch wenn sich die Netzadresse ändert oder eine Übertragungs-Unterbrechung eintritt. Hierzu können beispielsweise Zwischensysteme eingesetzt werden (dies könnten je nach Einsatzszenario beispielsweise die Optimierer selbst und / oder mit diesen kombiniert eingesetzte Komponenten / Verfahren sein und / oder beispielsweise aber nicht zwingend auf denselben Geräten wie die Optimierer implementiert sind). Dabei wird dann oftmals die Kommunikationsbeziehung ― sichtbar oder transparent für die Anwendung ― in mehrere Abschnitte unterteilt. Dieses Vorgehen wird oftmals als Connection Splitting oder auch Split Connection bezeichnet, wenn es auf der Transport- oder Anwendungsschicht angewendet wird; die hier beschriebene Erfindung ist allerdings nicht auf Verbindungen (Connections) beschränkt, es müssen Verbindungen nicht einmal als solche erkannt werden, sondern es können ― wie teilweise unter weiter ausgeführt ― auch Pakete, Link-Layer- und andere Frames oder andere übertragene Informationseinheiten als Basis verwendet werden. Dabei können einzelne Kommunikationsbeziehungen oder auch Gruppen von Kommunikationsbeziehungen gemeinsam betrachtet werden. Die im folgenden beschriebenen für die Erfindung je nach Einsatzszenario vorteilhaften Verfahren gelten für alle Anordnungen der Fig. 1 und 2 und beliebige Kombinationen aus diesen (also unter anderen auch für den Fall, daß ein Optimierer vorhanden ist). Die Unterteilung in mehrere Abschnitte kann auf einer beliebigen Schicht der OSI-Referenzmodells erfolgen. Oftmals findet eine solche Unterteilung auf der IP-, HIP-, Transport- oder Anwendungsschicht statt. Eine erfindungsgemäße Lösung kann auf einer und / oder mehreren Schichten zum Einsatz kommen.

Die eben angesprochenen Lösungen sehen z.B. vor, dass der mindestens eine Optimierer X den Abschnitt von einem Optimierer zu einem Endpunkt von evtl. Übertragungs-Unterbrechungen vom Optimierer X zu einem anderen Optimierer und / oder zu einem anderen Endpunkt abschirmt. So kann beispielsweise entsprechend Fig. 2 a) eine Transportverbindung (z.B. TCP) zwischen dem Endpunkt A und dem Optimierer X-1 und / oder zwischen dem Optimierer X-2 und dem Endpunkt B aufrecht erhalten werden, auch wenn die Transportverbindung zwischen den Optimierern X-1 und X-2 abbricht.

Während dieses Vorgehen ermöglicht, die Kommunikationsbeziehung auf einer oder mehreren Schichten prinzipiell aufrecht zu erhalten ― indem beispielsweise wie bei Mobile-IP die IP-Adressen beibehalten werden, wie bei HIP die Kontaktadressen aktualisiert werden oder wie bei TCP-Connection-Splitting die Transportverbindungen auf den Abschnitten zu einem / den Endpunkt(en) bestehen bleiben, ist dieses Verfahren für Anwendungen jedoch oftmals unzureichend. Denn Anwendungen und / oder Anwendungsprotokolle und / oder die von Anwendungen für Namensauflösungen genutzten Namensdienste verfügen über eigene Zeitfenster (Timeouts). Wird eine von einer Instanz einer Anwendung (z.B. auf einem Endpunkt A) angestoßene Operation (z.B. eine Anfrage) nicht innerhalb dieses Zeitfensters abgeschlossen (z.B. durch eine entsprechende Antwort), kann diese Operation ― ggf. nach einem oder mehreren wiederholten Versuchen, sie auszuführen ― für gescheitert erklärt werden. Der gewünschte Effekt wird dann ggf. nicht erzielt, und in einem solchen Fall kann dem Benutzer eine Fehlermeldung präsentiert werden. Beispielsweise kann bei der Nutzung eines Webbrowsers zum Abruf einer Webseite die Meldung geliefert werden, der Name des Servers sei nicht bekannt und / oder der Server sei gerade nicht erreichbar und / oder eine Seite konnte nicht gefunden oder geladen werden. In anderen Fällen kann die angeforderte Webseite unvollständig (z.B. fehlender Text, fehlende Bilder) angezeigt werden. In derartigen Fehlerfällen wird die Verantwortung zum erneuten Laden einer prinzipiell verfügbaren Webseite an den Nutzer delegiert: er kann entscheiden, die entsprechende Operation nochmals anzustoßen (ggf. wiederholt), und er kann entscheiden, wann und wie oft er dies versuchen will. Was vorstehend für Webseiten beschrieben wurde, kann gleichermaßen für andere Anwendungen gelten und kann auch Anwendungen betreffen, die im Hintergrund ablaufen und nicht über eine Nutzungsschnittstelle (User Interface) verfügen.

Die im folgenden beschriebenen Verfahren können in vielen Einsatzszenarien das Problem lösen, dass Operationen nicht begonnen oder vorzeitig ganz oder teilweise abgebrochen werden, und können damit zu einer Verbesserung der Bedienbarkeit und / oder der Funktionsweise und / oder der Effizienz und / oder der Effektivität von Kommunikationsanwendungen und / oder der Dienstgüte allgemein führen.

In einer beispielhaften erfindungsgemäßen Anordnung erhält ein Optimierer (z.B. X1) Informationen (z.B. Nutzdaten oder Steuerinformationen) im Rahmen einer oder mehrerer Kommunikationsbeziehungen von einem Abschnitt (z.B. X1-X2 im Übertragungsnetz N-X) ― z.B. von einem anderen Optimierer oder einem anderen Endpunkt ― und leitet diese Informationen über einen anderen Abschnitt (z.B. A-X1) einen Endpunkt (z.B. A) weiter. Um zu vermeiden, dass eine Anwendung während einer vorübergehenden Unterbrechung nach Ablauf eines Zeitfenster eine Operation und / oder eine Sequenz von Operationen abbricht, werden vom Optimierer nicht alle Informationen weitergeleitet, sobald sie zur Verfügung stehen. Stattdessen gibt der Optimierer die Informationen nur verzögert weiter, so daß (z.B. vor Abschluß einer Operation) noch Teile der Informationen im Optimierer verbleiben. Tritt eine Übertragungs-Unterbrechung auf, kann der Optimierer diese noch verbleibenden Informationen in beliebig kleinen Einheiten (Bits und / oder Bytes und / oder Folgen von Bits und / oder Folgen von Bytes und / oder Pakete und / oder Folgen von Paketen und / oder Paketfragmente und / oder Folgen von Paketfragmenten und / oder Frames und / oder Folgen von Frames) an die Endpunkte weiterleiten. Dies kann dazu führen, dass die Anwendung auf dem Endpunkt permanent mit Informationen versorgt wird, so dass für sie keine Unterbrechung der Übertragung sichtbar ist, sondern nur z.B. eine langsamere Übertragung vorliegt. Dadurch kann verhindert werden, dass ein Timeout ausgelöst wird, da die Anwendung kontinuierlicher Informationen empfängt. Dieser Mechanismus kann auf einer oder mehrerer beliebigen Protokollschicht(en) (insbesondere, aber nicht beschränkt auf den Schicht 2 und / oder 3 und / oder 3,5 und / oder 4 und / oder 5 und / oder 6 und / oder 7) erfolgen.

Bei der Weiterleitung von Informationen kann es vorteilhaft sein, wenn die Weiterleitung nicht in einzelnen Bits oder Bytes oder anderen oben genannten beliebigen Einheiten erfolgt, sondern der Struktur der höheren Protokollschichten folgt. Dies können die Datenstrukturen (z.B. Paketformate, Datenformate, Operatoren, Parameter, Anfragen, Antworten, HTML-, XML- und / oder andere Dokumente usw.) und / oder Header und / oder Nutzdaten sein. Nutzt beispielsweise eine Anwendung eigene Datensätze oder erfolgt die Kommunikation in ganzen Einheiten dieser Daten, so kann es in einigen Fällen sinnvoll oder gar erforderlich sein, diese Datensätze als Ganzes weiterzuleiten. In anderen Fällen, kann es erforderlich sein, diese Datensätze nur stückweise weiterzuleiten. Auch können Kombinationen erforderlich bzw. vorteilhaft sein. In welchen Fällen, welches Vorgehen geeignet ist, hängt von den Anwendungen und / oder den Anwendungsprotokollen ab.

Es kann vorteilhaft sein, dass mindestens einer der Optimierer zusätzliche Informationen zur Weiterleitung an den Endpunkt erzeugt und diese in die Folge der weitergeleiteten Informationen einfügt. Hierzu kann Wissen um die verwendeten Protokolle auf den betroffenen Schichten erforderlich sein. Beispielsweise können anwendungsspezifische "Keine-Operation"-Elemente (NOP, No-Operation) eingefügt werden, wenn das Protokoll so etwas erlaubt. Auch können leere Elemente eingefügt werden (etwa Folgen von Leerzeilen = CRLF und / oder Leerzeichen bei HTTP, beispielsweise bevor eine neue Antwort begonnen wird).

Sieht ein Protokoll einen einstellbaren und / oder verhandelbaren Timeout vor, kann es vorteilhaft sein, dass ein Optimierer diesen durch Generierung geeigneter Protokollelemente und / oder durch entsprechende Ergänzung, Modifikation und / oder selektives Zurückhalten weitergeleiteter Informationen abändert. Z.B. kann beim Auftreten einer Übertragungs-Unterbrechung ein höherer Timeout eingestellt werden. Ein neuer Timeout kann dabei so gewählt werden, dass er der erwarteten Dauer der Unterbrechungsverzögerung entspricht oder höher ausfällt. Er kann auf einen festen oder einen anderweitig dynamisch ermittelten Wert gesetzt werden. Er kann auch entsprechend den noch in dem mindestens einen Optimierer verfügbaren weiterzuleitenden Informationen angepasst werden. Die Wahl kann auch durch beliebige Kombination eines, einiger oder aller der vorstehend genannten und / oder weiterer Parameter bestimmt werden.

Es kann vorteilhaft sein, dass der Optimierer Protokollelemente generiert (z.B. als Antwort auf eine Anfrage und / oder als Mitteilung und / oder eigene Anfrage), die dem Endpunkt mitteilen, dass dieser für ein bestimmtes Zeitfenster keine weitere Anfragen stellen soll (z. B. ein Retry-After-Header). Die Ermittlung des Zeitfensters kann wie vorstehend beschrieben erfolgen.

Es kann vorteilhaft sein, dass der Optimierer Protokollelemente und / oder Inhalte generiert und ergänzt und / oder weitergeleitete Informationen entsprechend modifiziert und / oder ergänzt, die der Anwendung und / oder dem Nutzer mitteilen, dass eine bestimmte Operation im Gang ist.

Es kann vorteilhaft sein, wenn es sich bei diesen Inhalten um Skripte und / oder Programmteile und / oder Anweisungen usw. handelt, die auf dem Endsystem interpretiert und / oder sonst ausgeführt werden können.

Die vorstehend beschriebenen Mechanismen können auch zum Einsatz kommen, falls zu dem Zeitpunkt, zu dem eine Anwendung eine Kommunikationsbeziehung herstellen will, eine Unterbrechung vorliegt. So kann der Optimierer durch lokales Interpretieren zumindest eines (Teils der) genutzten Protokolle/s (beispielsweise des Transportprotokolls und optional auch der/ausgewählter Anwendungsprotokolle) das Zustandekommen einer Kommunikationsbeziehung simulieren und dadurch die Anwendung von einer vorliegenden Unterbrechung abschirmen. So könnten Optimierer, die Connection Splitting implementieren zum Beispiel eine eingehende Verbindung (beispielsweise TCP Verbindung) entsprechend des Connection Splittings annehmen, das Weiterleiten der Verbindung und letztendlich eine vollständige Kommunikationsbeziehung zwischen A und B aber beispielsweise verzögern bzw. ggf. wiederholt versuchen, bis die Unterbrechung nicht mehr vorliegt. Ähnlich könnten auch, je nach eingesetzten Protokollen, nicht nach dem Connection Splitting Verfahren operierende Optimierer beispielsweise durch das Aufgreifen von Paketen und ggf. Senden eigener Antwortpakete und Paketwiederholungen beispielsweise das Zustandekommen einer Verbindung simulieren oder die Zeitspanne, bevor die Beteiligten Protokolle von einem Nicht-Zustandekommen der Verbindung ausgehen, verlängern.

Es kann vorteilhaft sein, a) die zu erwartende Dauer einer Übertragungs-Unterbrechung und / oder b) das Bevorstehen einer Übertragungs-Unterbrechung vorherzusagen beziehungsweise dies zumindest zu versuchen. Beispiele für die Nutzung von Fall a) wurden oben bereits beschrieben. Fall b) kann vorteilhaft sein, um beispielsweise nicht immer Informationen verzögert weiterzuleiten, sondern nur dann Informationen zur verzögerten Weiterleitung in mindestens einem Optimierer zu sammeln, wenn auch Bedarf an derart gepufferten Informationen besteht, da sonst ggf. die Performance der Kommunikationsbeziehung sinken kann.

Daher kann es sinnvoll sein, mögliche Informationen über die Wahrscheinlichkeit einer Übertragungs-Unterbrechung oder deren abzusehendem Ende mit einzubeziehen. Z.B. könnte bei Funknetzen eine sinkende Datenrate oder, wenn verfügbar auch andere Indizien wie sinkende Signalpegel (z.B. die Signalstärke und / oder das Signal-to-Noise-Ratio, SNR) auf eine bevorstehende Unterbrechung hindeuten und / oder ein ansteigender Pegel auf deren Ende. Auch könnten GPS und / oder Bewegungsindikatoren zu Hilfe genommen werden. Auch könnten Heuristiken wie Bewegungswerte und / oder Zeitwerte und / oder Netzwechsel der Vergangenheit zu Hilfe genommen werden. Auch könnten externe Systeme eine bevorstehende bzw. potentielle bevorstehende Übertragungs-Unterbrechung anzeigen bzw. Hinweise auf deren Wahrscheinlichkeit geben. Weiterhin könnten Erfahrungswerte der Vergangenheit (die z.B. in einem der Optimierer gespeichert werden) wichtige Hinweise geben. Auch könnten die beteiligten Übertragungsnetze selbst oder (digitale) Landkarten mit Informationen über die Netzabdeckung) Hinweise geben. Gleiches könnte ein Nutzer in zumindest einigen Fällen auch tun. Einzelne, einige und / oder alle dieser und / oder weitere Informationen können kombiniert werden, um derartige Vorhersagen zu treffen.

Wie oben in Teilen bereits beschrieben, kann die Erfindung unidirektional und / oder bidirektional eingesetzt werden. Im Falle eines bidirektionalen Einsatzes können die beiden Übertragungsrichtungen unabhängig oder abhängig voneinander betrieben werden. Der unabhängige und / oder abhängige Betrieb kann sich beziehen auf einzelne Datenpakete, einzelne Kommunikationsbeziehungen und / oder auf Gruppen von Kommunikationsbeziehungen und dieser Bezug bzw. der unabhängige und / oder abhängige Betrieb kann sich im Laufe der Zeit einmalig und / oder wiederholt ändern.

Steht für die Kommunikation zwischen den Optimierern nur ein unidirektionaler Übertragungsweg zur Verfügung, so können die Optimierer durch geeignete Auswahl von Algorithmen und / oder zusätzlich übertragenen Steuerinformationen dafür Sorge tragen, daß empfangene Optimierer in der Lage sein werden, den optimierten Datenstrom und / oder die optimiert eingehenden Datenpakete zu interpretieren und / oder entsprechend weiterzuleiten. Hierzu könnte beispielsweise die Nutzung rein (oftmals ohnehin) unidirektionaler FEC-Verfahren, die Ermittlung von zur Verfügung stehender Bandbreite ohne bidirektionale beispielsweise PING Protokolle vorauszusetzen und / oder auch die Nutzung alternativer Übertragungswege in Rückrichtung, die nur für weniger Daten und / oder nur für Steuerinformationen genutzt werden eingesetzt werden.

Optimierer können in vielen Einsatzszenarien weitgehend transparent in den Datenpfad eingebunden werden, d.h. die Anwendungen brauchen nicht von diesen zu wissen und die Datenpakete deshalb nicht zwangsweise direkt an die Optimierer zu adressieren. Alternativ und / oder zusätzlich könnten die Optimierer aber auch als Proxy arbeiten. Eine Proxy-Einstellung wird von vielen Anwendungen wie z.B. Browsern oftmals ohne Änderung der Anwendung an sich und ohne sehr komplexe Konfigurationsarbeiten unterstützt. Auch ist für einige Anwendungen eine automatische Proxy-Erkennung vorgesehen, so dass der eigentliche Proxy (bzw. dessen Adressen) nicht immer direkt in den Anwendungen konfiguriert werden müssen. Die zur automatischen Proxy-Erkennung genutzten Protokolle erlauben es zum Teil auch, dass Optimierer und / oder externe Komponenten den Anwendungen automatisch beispielsweise direkt die Optimierer als Proxy angeben, so dass ggf. beispielsweise zumindest pro Anwendung keine manuellen Proxy Konfigurationen notwendig sind. Auch erlauben diese Verfahren oftmals auch ein Umkonfigurieren der Proxies beispielsweise bei Ausfall, als Load-Sharing und / oder um die Datenströme gezielt an andere Proxies und / oder durch andere Netze zu leiten.

Je nach Einsatzszenario kann es vorteilhaft sein den Datenaustausch zwischen den Komponenten (insbesondere auch zwischen beteiligten Optimierern wie beispielsweise X-1 und X-2 in Fig. 1) durch zusätzliche Protokolle zu tunneln. Hierzu eignen sich eine Vielzahl bekannter und optional auch speziell hierfür konzipierter Protokolle bzw. Kombinationen aus beiden. Beispielsweise könnte die Kommunikation über einen TCP Tunnel aus einer oder mehreren parallelel TCP Verbindungen geführt werden, auch der Einsatz beispielsweise des Protokolls IPsec und / oder IPsec Nat Traversal können vorteilhaft sein, zumal sie zugleich zusätzliche Verfahren wie Verschlüsselung umsetzen können. Auch ein Tunneln von Paketen in verschiedenen Protokollen der Netzebene (beispielsweise IPv6 Pakete über IPv4 Pakete / Netze tunneln) kann vorteilhaft sein (beispielweise wenn die Optimierer auch IPv6 unterstützen, jedoch potentiell (Teile) des Netzes zwischen Optimierern lediglich IPv4 unterstützen; gleiches gilt bei ähnlichen bzw. auch in umgekehrten Szenarien). Auch zur Tunnelung von Paketen verschiedener Protokolle der Netzebene sind bekannte als auch speziell konzipierte Protokolle möglich. Dabei kann ein entsprechendes "Tunneln" auch sehr indirekt erfolgen, beispielsweise indem nur am Anfang von erkannten Kommunikationsbeziehungen Adreßinformationen ausgetauscht werden. Wenn beispielweise eine neue IPv6 Kommunikationsbeziehung beginnt, die Optimierer dafür beispielweise eine Identifikationsnummer vergeben und beispielsweise nur initial einem anderen Optimierer diese Identifikationsnummer zusammen mit den entsprechenden Quell- und / oder Ziel-Adressen mitteilen. In diesem Beispiel könnte in einer von vielen Ausgestaltungen das Tunnelprotokoll zwischen den Optimierern auf IPv4 basieren, während für die erkannten Kommunikationsbeziehungen intern im Tunnelprotokoll auch IPv6 Adreßinformationen ausgetauscht werden (und / oder ähnlich bzw. auch in umgekehrten Szenarien).

Es kann je nach Einsatzszenario auch vorteilhaft sein, die zwischen Optimierern eingesetzten Protokolle beispielsweise zusätzlich auf UDP zu basieren. Der Einsatz von UDP könnte hier beispielsweise dazu dienen, dass ein Optimierer leichter auch als typischer Nutzerprozeß sogar dann auf Computern (beispielweise Laptops) installiert und ausgeführt werden kann, wenn der Nutzer / Installateur und / oder der Optimierer während seiner späteren Ausführung keine Administratorrechte auf diesem PC hat (zugleich kann dies dazu dienen die Sicherheit der beteiligten Computer zu erhöhen ― beispielsweise bei evtl. Sicherheitslücken im Optimierer selbst, da beispielsweise über die Optimierer ausgeführter Schadcode / Viren... in diesem Fall auch nicht unmittelbar mit Administrationsrechten auf den / die betroffenen Computer zugreifen können). Zudem kann der Einsatz entsprechender Protokolle ― insbesondere Tunnelprotokolle ― es ermöglichen und / oder vereinfachen, dass die ausgetauschten Daten auch über Firewalls und / oder Network Address Translators (NATs) hinweg ausgetauscht werden können.

Je nach Einsatzszenario gibt es für Optimierer viele potentielle Strategien welche Pakete und / oder Datenströme in die Optimierung einbezogen werden sollen. Hierzu können Optimierer beispielweise selbstständig Pakete und / oder Datenströme verschiedener Protokolle erkennen und / oder dabei von externen Komponenten über Steuerinformationen / Steuersignale und / oder Markieren der Pakete selbst instruiert und / oder unterstützt werden. Möglich sind hierzu viele Verfahren. Dazu zählen zum Beispiel die bereits zuvor genannten: Konofgurieren von Quell- / Zieladressen, Markieren der Pakete (zum Beispiel "TOS" Feld in IP Headern), Erkennen bestimmter Protokolle (zum Beispiel erkannt über das "Protocol" Feld in IP Headern), das Auswerten von Signalisierungsprotokollen zum Ermitteln der Quell- / Zieladressen und / oder auch Verfahren zum (heuristischen) Erkennen von bestimmten Daten- / Anwendungsklassen (beispielsweise anhand von Paketgrößen / -Intervallen, bestimmten Feldern wie Versionsnummern und / oder Timestamps, Sequenznummern in Paketheadern, usw.). Auch viele andere Auswahlkriterien beispielsweise zu Unterstützung oder direkten Vorgabe welche Pakete / Datenströme in die Optimierung einbezogen werden sollen sind möglich und je nach Einsatzszenario vorteilhaft. Hierzu können beispielsweise auch zählen: Das Anliefern von Daten auf verschiedenen (physikalischen / virtuellen / ...) Netzwerkinterfaces an die Optimierer oder das Nutzen von (verschiedenen) Tunnelprotokollen und / oder Overlay-Netzen. Messungen wie beispielsweise der Paketverlustrate und / oder RTT und / oder von Übertragungs-Unterbrechungen sind zumindest oftmals auch möglich, wenn wie in den Anordnungen aus Fig. 2 kein Optimierer X-2 eingesetzt wird. In diesem Fall kann der Optimierer X-1 beispielsweise angepasst an das Einsatzszenario andere im Endpunkt B und / oder in dessen Umfeld bzw. im Übertragungspfad zu Endpunkt B implementierte Funktionalitäten ausnutzen, um an die benötigten Informationen zu gelangen. Beispielsweise könnte in vielen Einsatzszenarien das Kommando PING (ICMP Protokoll; mit standard PING Paketgrößen oder auch mit typischen Paketgrößen wie sie im zu optimierenden Datenstrom auch vorkommen) genutzt werden, um zu einer entsprechenden Gegenstelle ohne spezifische X-2 Optimierer-Komponenten und ohne spezielle Optimierungs-Funktionen Paketverluste und / oder RTTs abzuschätzen und / oder Übertragungs-Unterbrechungen festzustellen. Im Bespiel VoIP unter Einsatz des Protokolls RTP, können in einigen Einsatzszenarien ähnliche Informationen auch über das Protokoll RTCP gewonnen werden, über das VoIP Implementierungen der Gegenseite Rückmeldungen über die empfangenen Daten geben.

Für Einsatzszenarien und abhängig von den Anforderungen kann zudem eine Kombination mit einer Komprimierung der übertragenen Nutzdaten und / oder Transcoding / Wechsel der Content-Kodierung erfolgen. Dabei bieten sich je nach Einsatzszenario sowohl verlustfreie als auch verlustbehaftete Komprimierungsverfahren (wie beispielsweise das Reduzieren von Bildauflösungen, der Bildqualität, oder des Herausfiltern von optionalen Zusatzinformationen, usw.). Dies gilt generell für den Einsatz von Anordnungen entsprechend Fig. 1. Abhängig von dem konkreten Einsatzszenario und den eingesetzten Komprimierungsverfahren ist es jedoch auch möglich diese Techniken in Anordnungen entsprechend Fig. 2 einzusetzen. Beispielsweise beim Reduzieren von Bildauflösungen, der Bildqualität, dem Herausfiltern von Zusatzinformationen, dem Wechsel der Content-Kodierung / Transcoding (dies jedoch oft abhängig vom Funktionsumfang / den unterstützten Content-Kodierungen der genutzten Anwendungen). Selbst für Einsatzszenarien wie Websurfen erlaubt es beispielsweise das HTTP Protokoll, dass die übertragenen Webobjekte direkt vom Webserver oder eben auch von zwischengeschalteten Komponenten wie beispielsweise einem Optimierer komprimiert werden. Da gängige Webbrowser oftmals mehrere dieser Komprimierungsverfahren unterstützen, kann ein Optimierer optional auch Webobjekte mit einem dieser Komprimierungsverfahren komprimieren und könnte die Komprimierung sogar bis zum empfangenen Endsystem / Anwendung (in diesem Fall dem Webbrowser) bestehen lassen.

Generell kann es sich bei Einsatz von Anordnungen entsprechend Fig. 1 und teilweise (wie eben am Beispiel Websurfen und Komprimierung beschrieben) auf für Anordnungen entsprechend Fig. 2 anbieten auch weitere Verfahren wie Verschlüsselung mit zu integrieren.

Für einige Einsatzszenarien und Netze bietet sich zudem eine Kombination und / oder gemeinsame Nutzung mit zusätzlichen Protokoll-Enhancement-Verfahren an. Protokoll-Enhancement-Verfahren gibt es für eine Vielzahl an Protokollen und Zielstellungen und / oder Netzen. Sehr oft eingesetzt werden beispielsweise Protokoll-Enhancement-Verfahren für TCP und / oder HTTP und / oder Filesharing Protokolle (wie beispielsweise SMB, CIFS, NFS, NetBios). Dabei werden diese Protokolle entweder beispielsweise für bestimmte Übertragungsabschnitte durch andere Protokolle ersetzt und / oder Protokoll-Parameter in den Endgeräten und / oder den ausgetauschten Datenpaketen modifiziert. Dabei gibt es vielfältige potentielle Zielstellungen für solche Protokoll-Enhancement-Verfahren. Beispielsweise könnte es die Aufgabe eines TCP-Protokoll-Enhancements sein, auch bei hohen Übertragungsverzögerungen (und / oder Übertragungsverzögerungen, die trotz Optimierung verbleiben) und / oder hohen Paketverlustraten (und / oder Paketverlustraten, die trotz Optimierung verbleiben) eine hohe Übertragungsbandbreite zu ermöglichen und / oder den Protokoll-Overhead, beispielsweise verursacht durch Steuerpakete, gering zu halten. Ähnliche Zielstellungen haben oft HTTP-Protokoll-Enhancements. Bei diesen sollen beispielsweise auch die bei Einsatz eines üblichen Internet-Browsers entstehenden Seitenladezeiten auch für Netze mit hohen Übertragungsverzögerungen und / oder hohen Paketverlustraten reduziert werden. Möglichkeiten, dies zu tun, umfassen beispielsweise zwischengeschaltete Proxies und / oder das proaktive Senden von auf Webseiten enthaltenen oder sogar hinter Links folgenden Objekten.

Das HTTP-Protokoll ist auch ein Beispiel dafür, dass es vorteilhaft sein kann, die verschiedenen hier genannten Verfahren zu kombinieren (dabei steht HTTP aber nur stellvertretend für viele Protokolle, auf die dies zutrifft, etwa ― aber nicht nur ― viele Text-basierte Protokolle wie SIP, RTSP, SOAP, SDP usw.). So setzt HTTP beispielsweise auf TCP und IP auf, es wird also eine relativ große Protokoll-Hierarchie genutzt, wobei höherliegende Protokollschichten oftmals direkt von Optimierungen für tieferliegende Protokollschichten profitieren können. In diesem Beispiel könnte eine Optimierung beispielsweise Paketverlustraten und / oder RTTs verkürzen. Von dieser Optimierung würde oftmals HTTP selbst direkt profitieren. Aber HTTP profitiert von den Optimierungen oftmals auch bereits dadurch, dass es auf TCP aufsetzt und TCP wiederum oftmals erheblich von geringenen Paketverlustraten und / oder verkürzten RTTs profitiert. HTTP ist auch ein gutes Beispiel, dass in einem entsprechenden Einsatzszenario oft auch zusätzliche Verfahren wie HTTP-spezifische Protokoll-Enhancements, Komprimierung, Verschlüsselung und / oder Header-Komprimierungsverfahren zusätzlich zu den Optimierungen vorteilhaft sein können.

Dabei könnten die einzelnen potentiell mit der Optimierung zu kombinierenden Verfahren / Verfahrenstypen (wie beispielsweise die vorstehend genannten Protokoll-Enhancements, Komprimierung, Verschlüsselung, Header-Komprimierung, usw.) unabhängig voneinander und / oder unabhängig von der Optimierung realisiert werden, was unter anderem die Flexibilität und / oder Austauschbarkeit erhöht. Eine Realisierung in kombinierten Systemkomponenten und / oder Geräten reduziert jedoch potentiell die Gesamtkomplexität und / oder Konfigurationsaufwände. Nicht zuletzt könnten die einzelnen Verfahrenstypen bei einer ganz / teilweise integrierten Realsierung und / oder bei einer Realisierung bei denen mindestens einzelne Steuerinformationen zwischen den Komponenten der Verfahrenstypen ausgetauscht werden, vereinfacht realisiert und genutzt werden.

Wie bereits beschrieben ist es in vielen Einsatzszenarien vorteilhaft die Optimierer / durchzuführende Optimierung in Kombination mit anderen Verfahren (wie Komprimierung von Nutzdaten, Header-Komprimierung, Verschlüsselung, Protokoll-Enhancement, usw.) durchzuführen. Dabei können diese anderen Verfahren, wie bereits beschrieben, beispielsweise direkt innerhalb der Optimierer oder auch beispielsweise als externe eigenständige Komponenten realisiert werden. Auch können diese anderen Verfahren auf die Pakete je nach Einsatzszenario und gewählter Anordnung vor oder nach dem Optimieren der Pakete / Datenströme angewendet werden. Je nach gewählter Anordnung könnten jedoch durch die Optimierung selbst bzw. durch die anderen Verfahren Informationen für "nachfolgende Komponenten" nicht mehr erkenntlich und / oder verwertbar sein. Beispielsweise könnten Paket-Header (beziehungsweise Teile von diesen) und / oder Nutzdaten (beziehungsweise Header höheren Protokollschichten) durch Verschlüsselung und / oder Content- / Nutzdaten-Komprimierung und / oder Header-Komprimierung für nachfolgende Komponenten (oder allgemeiner ausgedrückt für andere Komponenten) unkenntlich sein, solange sie nicht wieder beispielsweise entschlüsselt und / oder dekomprimiert werden. Diese nachfolgenden Komponenten können vielfältiger Art sein. Dies könnte beispielsweise die erwähnten anderen Verfahren anwendenden Komponenten betreffen, es kann die Optimierer betreffen, aber auch beispielsweise Router und / oder Traffic-Shaper und / oder andere QoS Devices allgemein, können davon betroffen sein, dass Informationen nicht mehr erkenntlich sind und sie ihre Funktionen daher beispielsweise nur noch eingeschränkt oder auch gar nicht mehr wahrnehmen können. Daher kann es vorteilhaft sein, implizite beispielsweise zusätzliche Absprachen und / oder Signalisierungen und / oder einen zusätzlichen Informationsaustausch zwischen den beteiligten Komponenten zu nutzen.

Beispiele können auch hier das Markieren von Paketen (beispielsweise über das TOS Feld der IP Header), das Signalisieren / Klassifizieren von Paketen / Datenströmen anhand von Adre-βinformationen (die beispielweise über Konfigurationen und / oder Signalisierungsprotokolle anderen Komponenten bekannt gemacht werden), den Einsatz von Tunnelprotokollen und / oder auch spezielle Protokolle, die beispielweise in zusätzlichen Informationsheader und / oder Steuerinformationen die ansonsten nicht mehr erkenntlichen Informationen der Pakete / Datenströme enthalten. Dabei kann es abhängig von einer konkreten Anordnung vorteilhaft sein, wenn diese zusätzlichen Informationsheader nicht zwingend über weite Strecken der beteiligten Netze übertragen werden, sondern beispielsweise von der letzten Komponente, die diese Informationen benötigt, entfernt werden; auch könnte je nach konkreter Anordnung eine Komponente diese zusätzlichen Informationsheader vollständig an nachfolgende Komponenten weitergeben, sie könnte sie um weitere Informationen erweitern, sie könnte beispielsweise von nachfolgenden Komponenten nicht mehr benötigte Informationen aus den zusätzlichen Informationsheadern entfernen, die Informationsheader vollständig löschen oder eine Kombination aus diesen Schritten.

Je nach Einsatzszenario kann es vorteilhaft sein, die zu übertragenen Datenpakete nicht nur auf einem Pfad durch das Netz / Teilnetze und / oder parallel über mehrere Übertragungsabschnitte zu übertragen. Die resultierenden Vorteile können je nach Einsatzszenario beispielsweise eine Lastaufteilung und damit verbunden potentiell geringere Übertragungsverzögerungen und / oder Paketverlustraten, eine Steigerung der insgesamt zur Verfügung stehenden Übertragungskapazität und / oder insbesondere bei einem redundanten Übertragen von allen und / oder einigen der Informationen auch eine höhere Ausfallsicherheit und / oder Robustheit gegenüber beispielsweise dem Verlassen von Empfangsbereichen und / oder dem Wechseln zwischen Netzen umfassen. Für die Aufteilung der zu übertragenen Datenpakete auf mehrere Pfade durch das Netz / Teilnetze und / oder parallel über mehrere Übertragungsabschnitte können je nach Einsatzszenario verschiedene Verfahren vorteilhaft sein. Insbesondere bei weitgehend unbekannten Netzen / Teilnetzen und / oder parallel genutzten Übertragungsabschnitten kann eine Aufteilung unter Berücksichtigung der Übertragungsverzögerung / RTT der einzelnen Pfade vorteilhaft sein. Ein entsprechendes Verfahren könnte beispielsweise die über die einzelnen Pfade geleiteten Datenmengen dahingehend regeln, dass die einzelnen Pfade beispielsweise eine ähnliche RTT aufweisen und / oder eine RTT, die beispielsweise ein konfiguriertes und / oder ermitteltes Maximum nicht und / oder möglichst wenig überschreitet.

Generell können auch Steuersignale des Nutzers oder externer Systeme wie beispielsweise eines Netzwerkmanagement Systems beispielsweise Art, Umfang, Menge, Optimierungs-verfahren / dessen Parameter und / oder die Auswahl der in die Optimierung einbezogenen Datenströme beeinflussen und / oder direkt steuern. Auch kann es eine optionale oder stets vorhandene / genutzte Funktionalität der Optimierer geben, die beispielsweise verschiedene Optimierungen, Optimierungsumfänge, Parameter und / oder das Einbeziehen von Datenströmen in die Optimierung auch dynamisch und / oder gesteuert durch Eingaben des Nutzers und / oder externer Systeme wie beispielsweise eines Netzwerkmanagement Systems steuert. Vorteilhaft kann es je nach Einsatzszenario auch sein, ergänzend zu und / oder anstelle einer überwiegend stets (statisch) genutzten Optimierung ein automatisches Erkennen und Anpassen der möglichen Optimierungen vorzusehen. Ein solcher Mechanismus kann verteilt zwischen zwei oder mehreren Optimierern realisiert sein und / oder einseitig in einen Kompressor und / oder sogar extern zu den Optimierern. Der Erkennungsmechanismus kann passiv sein (z. B. nur Paketflüsse beobachten) oder aktiv (z. B. selbst Pakete zur Ermittlung der Optimierungsmöglichkeiten aussenden). Der Mechanismus (gleichgültig ob in einem oder in mehreren Optimierern oder extern realisiert) kann die notwendigen Informationen vom Netz (etwa durch Routing-, Middleboxsignalisierungsprotokolle wie z.B. RSVP, NSIS, SOCKS, MIDCOM usw. und / oder sonstige Steuerungsprotokolle) und / oder einem Netzmanagement erhalten und / oder sie durch Interaktion zweier oder mehrerer Optimierer ermitteln. Hinweise können durch initiale und / oder fortlaufende Konfiguration gegeben werden.

Ein solcher Mechanismus erkennt dynamisch teilweise oder ganz selbständig, welche Verfahren in die Optimierung mit einbezogen werden können und / oder welche zusätzlichen (ggf. kombiniert mit der Optimierung realisierten) Verfahren genutzt werden sollen. Diese Ermittlung der Kompressionsmöglichkeiten kann im Vorfeld der Inbetriebnahme der Optimierung, vor / während des Aufbaus einer oder mehrerer Kommunikationsbeziehungen und / oder fortlaufend während der aktiven Optimierung erfolgen.

Dabei kann es vorteilhaft sein, dass der Mechanismus automatisch auch während des Betriebes Fehler erkennt (z.B. aus der Übertragung oder Nichtübertragung optimierter Datenpakete selbst, deren Verlustraten und / oder ihrer sonstigen Übertragungscharakteristika und daraus Rückschlüsse auf Veränderungen im Übertragungsweg (neue Wegewahl, Hinzufügen eines oder mehrerer weiterer Knoten, Lastverteilung auf mehrere Routen usw.) zieht. Basierend auf diesen Informationen kann der Mechanismus dann die Header-Optimierung entsprechend anpassen.

Ein solcher Mechanismus kann in verschiedenen Ausprägungen gleichzeitig aktiv sein und auch parallel in Ergänzung und / oder zeitlich versetzt zu einer statischen Konfiguration betrieben werden. Unterschiedliche Ausprägungen (verschiedener dynamischer Ermittlungen und / oder statischer Konfigurationen und / oder Aushandlungen) können gleichzeitig und / oder sequentiell für unterschiedliche Datenpakete einzelner und / oder mehrerer Kommunikationsbeziehungen genutzt werden. Die Identifikation, welche Mechanismen auf welchen (Teile einer) Kommunikationsbeziehung(en) und / oder Gruppen von Kommunikationsbeziehungen und / oder den gesamten Datenstrom angewendet werden sollen kann wiederum statisch oder dynamisch erfolgen und / oder von den Eigenschaften der Datenpakete und / oder den verwendeten Protokollen und / oder von der Netzlast (gegenwärtig, vergangen, zukünftig erwartet) und / oder von den beobachteten Übertragungseigenschaften (Fehlerrate, Umlaufzeit usw.) abhängig sein.

Insbesondere kann vorgesehen sein, in Ergänzung und / oder anstelle der Konfiguration, welche Optimierungen oder kombinierten Verfahren durchgeführt werden, aktiv beispielsweise Testpakete nach einem zuvor (statisch oder dynamisch) vereinbarten Schema auszutauschen und / oder Feedback beispielsweise zu derzeitigen Dienstgüte von einem empfangenen Optimierer an den sendenden Optimierer zu geben (beispielsweise um diesen direkt und / oder indirekt aufzufordern weitere / mehr beispielsweise FEC Redundanzen in die Optimierung aufzunehmen und / oder Datenraten zum Vermindern der RTT weiter zu senken und / oder bestimmte Pakete anders zu priorisieren).

Es kann vorteilhaft sein, dynamisch zu ermitteln, was für Typen von Datenströmen und / oder Kommunikationsbeziehungen vorliegen, um die Optimierung entsprechend anzupassen. So lässt sich beispielsweise durch dynamische Erkennung des Typs eines Datenstroms (beispielsweise eines Multimediadatenstroms auf der Basis von RTP) automatisch entscheiden, ob und / oder welche Datenpakete auf welche Weise optimiert werden sollen. Als Entscheidungsgrundlagen können beispielsweise die technische Machbarkeit (so lassen sich etwa verschlüsselte Pakete weniger gut komprimieren als unverschlüsselte) und / oder die Effizienz der Optimierung und / oder der Aufwand (z.B. Rechenleistung, Speicher usw.) dienen.

Alternativ bzw. in Kombination kann die Optimierung abhängig gemacht werden von bestimmten beteiligten Endpunkten und / oder Anwendungen und / oder der Last in den Übertragungsnetzen und / oder auf einzelnen / Gruppen von Übertragungsabschnitten und / oder von verfügbarem Speicher und / oder der CPU- / Prozessorlast der beteiligten Komponenten. Abhängig von einzelnen oder Kombinationen solcher Kriterien kann die Optimierung ganz / teilweise aktiviert, eingegrenzt und / oder ganz / teilweise deaktiviert werden bzw. entsprechende Entscheidungen für mit der Optimierung kombinierte Verfahren getroffen werden. Sowohl bei statischer als auch bei dynamischer Optimierungs-Entscheidung, kann diese Entscheidung einseitig durch einzelne Komponenten oder Komponenten einer Übertragungsseite getroffen werden oder gemeinsam von mehren beteiligten Komponenten oder auch "nebenstehender" Systemkomponenten wie einem Netzwerkmanagement-System. Dabei ist es in vielen Einsatzszenarien auch möglich, Verbindungen zunächst zu optimieren und während des Fortbestandes der Verbindungen / von Teilen der Verbindungen die Optimierung zu beenden (und anders herum bzw. mehrfach wechselnd).

Die Erfindung ist in vielen Einsatzszenarien auch für den Einsatz in der Punkt-zu-Mehrpunkt-Kommunikation (wie sie beispielsweise in einem Satelliten- oder terrestrischen Broadcastnetz oft vorliegt) geeignet. Dieselben Optimierungsverfahren können angewendet werden. Allerdings ist zu oftmals berücksichtigen, dass die die optimierten Paketen empfangenen (mehreren) Optimierer und / oder auch (mehreren) Endsysteme / Anwendungen (gemeinsam in diesem Kontext hier Empfänger genannt) unterschiedliche Fähigkeiten haben können und dass die Übertragungswege zu diesen unterschiedliche Eigenschaften aufweisen können. Ein Optimierer sollte dann den wichtigen, der Mehrzahl und / oder allen Optimierern eine Interpretation der optimierten Datenpakete ermöglichen. Dies kann dadurch geschehen, dass Optimierungs-Verfahren gewählt werden, welche für alle intendierten Empfänger geeignet sind. Und / oder ein Optimierer kann unterschiedlich optimierte Datenpakete / Datenströme an einzelne Empfänger und / oder Gruppen von Empfängern senden, die spezifisch für den / die jeweiligen Übertragungsweg und / oder Optimierung geeignet sind. Und / oder ein Optimierer kann zusätzliche Information (in bestehenden und / oder weiteren Daten- und / oder Steuerpaketen) an einzelne und / oder Gruppen von Empfängern (und / oder Knoten der Übertragungsnetze) senden, um eine erfolgreiche Weiterleitung und / oder Empfang und / oder Auswertung des empfangenen optimierten Datenstromes zu ermöglichen. Gleiches gilt in vielen Fällen für die Mehrpunkt-zu-Mehrpunkt-Kommunikation. Diese kann oftmals zudem auf mehrere Punkt-zu-Mehrpunkt-Kommunikationsbeziehungen abgebildet werden.

Für Anordnungen insbesondere entsprechend Fig. 1 bietet sich auch eine optionale Kombination mit Header-Komprimierungstechniken an, um das Übertragungsvolumen zu reduzieren. Neben dem offensichtlichen Vorteil des Einsparens von Netzkapazität reduziert dies oftmals implizit beispielsweise bei überlasteten Netzen / Übertragungsabschnitten auch die Paketverlustraten und insbesondere bei schmalbandigen Netzen / Übertragungsabschnitten die RTT. Bei der Optimierung durch das Einfügen von FEC Redundanzinformationen kann die Nutzung von Header-Komprimierung oftmals (wie beispielsweise bei VoIP und RTP) einen erheblichen Anteil leisten, um den durch die Redundanzinformationen steigenden Bandbreitenbedarf wieder ganz oder teilweise oder sogar unter den ursprünglichen Bandbreitenbedarf zu senken.

Die Erfindung erlaubt es optional auch, die Optimierung (beispielsweise O1) über quasi beliebige und / oder sogar wechselnde Netze / Netzpfade / Übertragungsabschnitte einzusetzen. Daher und unter anderem um trotz zumindest relativ effizienter Header-Komprimierungstechniken relativ geringe bzw. nur weitgehend bestimmbarer Anforderungen an die Art den genutzten Netze / Netzpfade / Übertragungsabschnitt zu stellen ist es auch vorteilhaft die Erfindung optional in Kombinationen mit partiellen Header-Komprimierungsverfahren ― wie im folgenden Abschnitt II. beschrieben ― einzusetzen.

### II. Weitere Optimierungen durch Kompression von Protokoll-Headern

Dieser Abschnitt beschreibt eine spezifische Ausprägung einer Optimierung. Dieser Aspekt liegt auf dem Gebiet der Paket-orientierten Datenübertragung und der Reduzierung des durch Paket-Header erzeugten Overheads. Dabei erlaubt es die Erfindung Paket-Header sowohl ganz als auch teilweise bei der Übertragung einzusparen. Der Stand der Technik wurde eingangs bereits beschrieben.

Die in diesem Abschnitt vorgenommene Gliederung in a), b), c) und d) dient der besseren Strukturierung des Abschnitts. Sie wird jedoch nicht zwingend eingehalten und einige Aspekte werden abschnittsübergreifend bzw. entgegen dieser Trennung bereits in anderen Abschnitten behandelt.

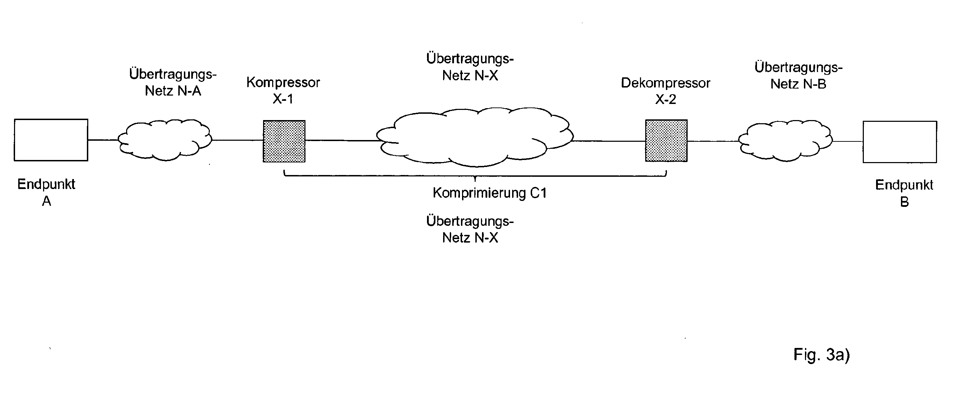

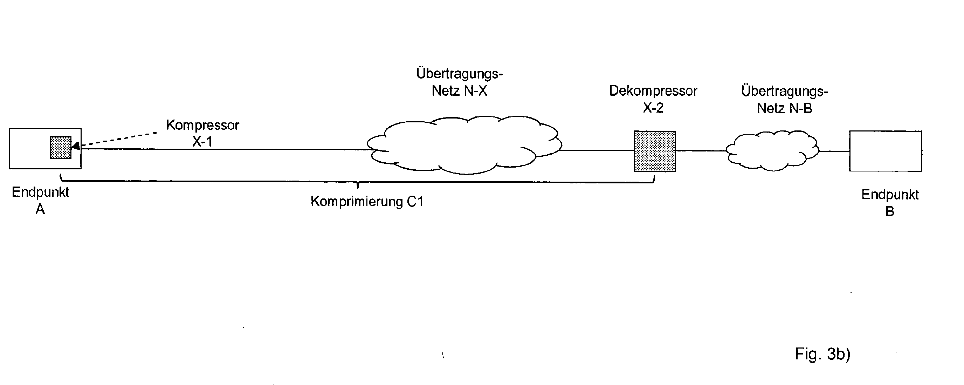

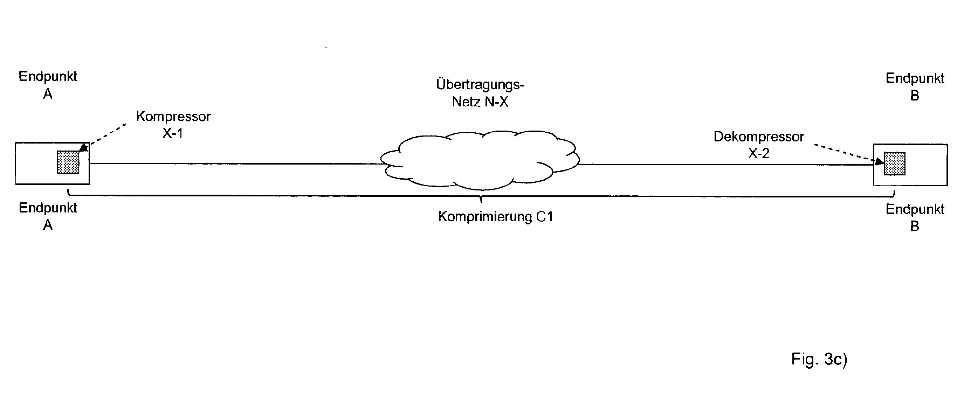

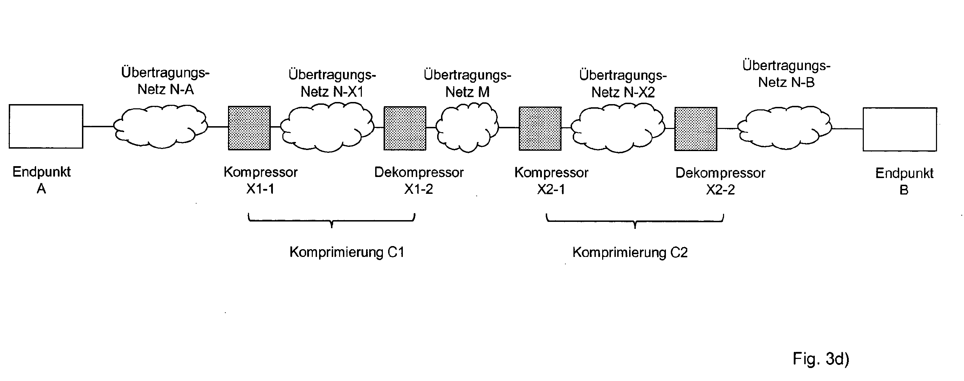

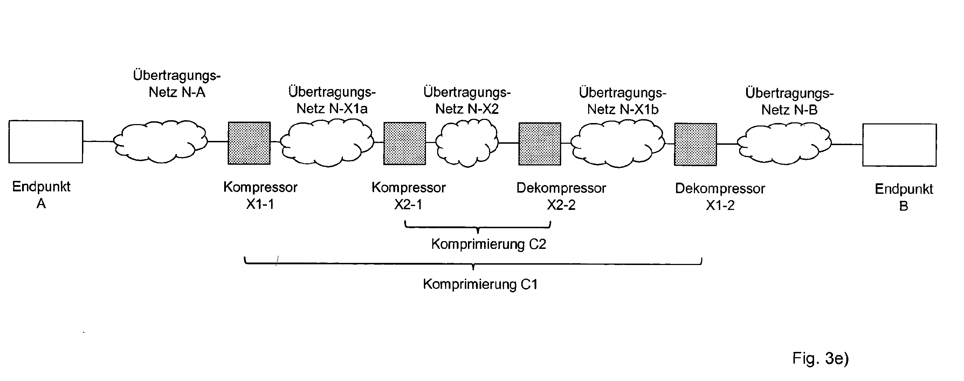

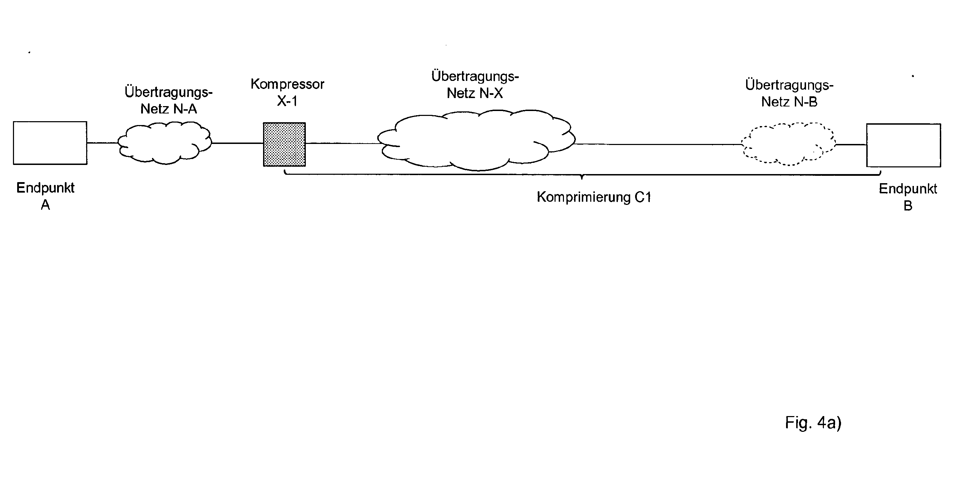

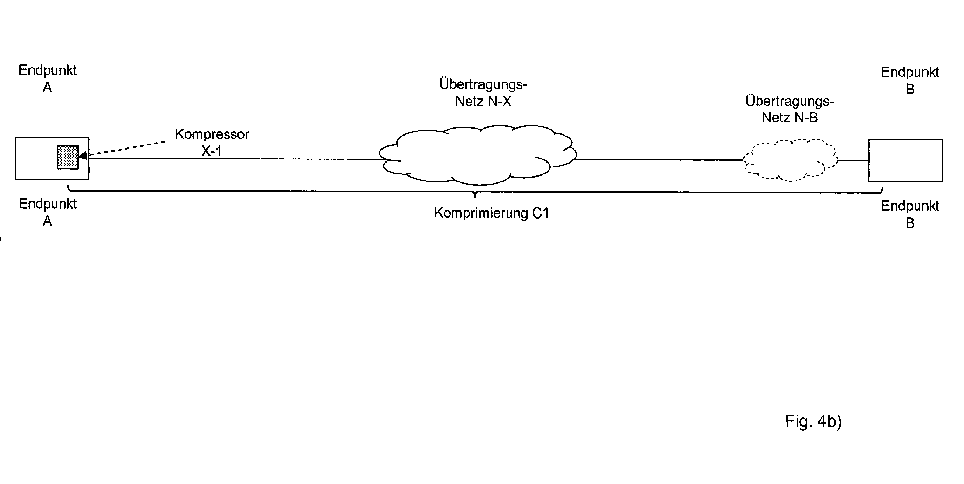

Eine Header-Komprimierung wie im folgenden beschrieben ist eine spezifische Ausprägung einer Optimierungsfunktion, ein Kompressor eine mögliche Ausgestaltung eines Optimierers. Zur Verdeutlichung dieses Zusammenhangs zeigen die Fig. 3 a) bis e) und 4 a) und b) dieselben Systemanordnungen wie die Fig. 1 und 2, allerdings sind in den Fig. 3 und 4 die Optimierer und Optimierungen der Fig. 1 und 2 durch die spezifischen Ausprägungen der Komprimierungen, der Kompressors und Dekompressors veranschaulicht. Zur Erläuterung der Systemanordnungen für die spezifische Ausprägung der Kompression sei auf die Beschreibungen der Fig. 1 und 2 in Abschnitt I verwiesen. Die Ausführungen gelten analog für Optimierung und Kompression, für Optimierer und (De-)Kompressor. Es sei darauf verwiesen, dass die allgemeine Darstellung in Abschnitt I zur Optimierung immer von Optimierern spricht: ein Optimierer fügt Optimierungen ein, ein anderer Optimierer interpretiert diese im Sinne der Optimierung, um z.B. die Datenpakete (wie sie vor der Optimierung vorlagen) ganz oder teilweise wiederherzustellen. Im Kontext von Komprimierungen wird hier zur Vereinfachung ein zweiter Begriff eingeführt: neben dem Kompressor (das Datenpakete komprimiert) wird für die Gegenseite vom Dekompressor gesprochen (der die ursprünglichen Datenpakete ganz oder in wesentlichen Teilen wiederherstellt).

Nachfolgend werden weitere Aspekte der Erfindung im Detail dargestellt, wobei die Merkmale der verschiedenen Aspekte sowohl einzeln als auch in beliebiger Kombination bei der Verwirklichung der Erfindung in ihren verschiedenen Ausführungsformen von Bedeutung sein können. Insbesondere ergeben die verschiedenen Aspekte jeweils für sich eine wesentliche Verbesserung des Standes der Technik.

Die in dem folgenden Abschnitt vorgenommene Gliederung in a), b), c) und d) dient der besseren Strukturierung des Abschnitts. Sie wird jedoch nicht zwingend eingehalten und einige Aspekte werden abschnittsübergreifend bzw. entgegen dieser Trennung bereits in anderen Abschnitten behandelt.

Zur Erleichterung des Verständnisses der unterschiedlichen Aspekte der Erfindung wird hierbei im folgenden oftmals zunächst jeweils kurz auf den Hintergrund (Abschnitt (i)) zu dem Aspekt eingegangen, um anschließend die spezielle Problematik und Erfindungsaspekte (Abschnitt (ii)) und eine oder mehrere bevorzugte Ausführungsformen des Erfindungsaspektes (Abschnitt (iii)) zu beschreiben. Zu einigen der Erfindungsaspekte werden in einem Abschnitt (iv) dann Ausgestaltungen beschrieben bei denen es sich teilweise um Alternativen handelt. Diese Gliederung wird jedoch nicht zwingend eingehalten und einige Aspekte werden abschnittsübergreifend bzw. entgegen dieser Trennung bereits in anderen Abschnitten behandelt. Einige mögliche Anordnungen zur Anwendung der erfindungsgemäßen Technologien sind in Fig. 1 und 2 allgemein für Optimierungen dargestellt sowie in Fig. 3 und 4 spezifisch für Kompression. Die Ausführungen aus Abschnitt 1 zu Optimierungen gelten entsprechend für Komprimierungen, insbesondere die verschiedenen Systemanordnungen und beliebigen Kombinationen dieser. Die Erläuterungen zu Fig. 3 und 4 ergeben sich also unmittelbar aus den obigen zu Fig. 1 und 2 und werden deshalb hier nicht wiederholt. Auch können Header-Komprimierungen und anderen Optimierungen beliebig in denselben und / oder anderen Komponenten integriert und / oder miteinander verknüpft sein. Die Ausführungen aus Abschnitt I zu Netzen und spezifischen Netztechnologien gelten ebenfalls analog.

Ergänzend sei angemerkt, dass bei geschachtelten und / oder parallelen Optimierungen bzw. Komprimierungen (beispielsweise wie in Fig. 1e) / 3e) dargestellt), einige Daten der parallelen bzw. geschachtelten Optimierungen bzw. Komprimierungen ganz oder teilweise gemeinsam von beiden Optimierungen bzw. Komprimierungen genutzt werden können. Beispiele hierfür können u.a. Connection-IDs, Längen-Felder bzw. (Teil-)Längeninformationen aber auch viele andere Feldtypen sein.

Die Komprimierungsfunktionen sind nicht auf Informationen in Paket-Header einer bestimmten Schicht begrenzt. Einzelne Komprimierungen können sich jedoch auf bestimmte Paket-Header, bestimmte Schichten, bestimmte Protokolle und / oder bestimmte Anwendungen spezialisieren. Einzelne Komprimierungen können auf einzelnen Schichten oder auch schichtübergreifend arbeiten. Die Komprimierung kann von den Eigenheiten der umgebenden Netze oder der Pfade durch das Netz abhängig sein und / oder von der Funktion und / oder dem Vorhandensein bestimmter Netzelemente: so kann beispielsweise eine Kompressionsfunktion anders arbeiten, wenn die Pakete auf dem Weg bestimmte weitere Netzelemente wie Router, NATs und / oder Firewalls passieren müssen. Verschiedene Komprimierungen (und deren Kompressoren) können sich untereinander abstimmen und / oder unabhängig voneinander arbeiten.

Neben einer reinen Reduktion der Paket-Header können Kompressoren auch die Inhalte modifizieren, um die Kommunikation effizienter und / oder performanter und / oder robuster zu gestalten oder die Kommunikation überhaupt erst zu ermöglichen. Auch muß eine Komprimierungsfunktion (oder Komprimierung) nicht in allen Fällen zu einer Reduktion des Datenvolumens führen. Ist beispielsweise ein Übertragungsnetz nicht in der Lage, Datenpakete eines bestimmten Typs (z.B. einer bestimmten Anwendung, eines bestimmten Transportprotokolls) zu übermitteln, so kann eine Kompressionsfunktion Datenpakete so umschreiben, daß dennoch eine Übermittlung über das fragliche Netz zustande kommt.

Im Folgenden werden einige Aspekte der Erfindung weitergehend im Detail erläutert. Es ist jedoch zu beachten, dass auch vorstehend bereits Ausgestaltungen und Aspekte der Erfindung beschrieben wurden, die für sich genommen und / oder in Kombination einem / mehrerer der folgenden (Teil-)Aspekte genutzt werden können.

### 11.a) Partielle Header-Komprimierung

(i) Hintergrund
   Header-Kompression reduziert und / oder entfernt Header-Informationen auf einer Teilstrecke zwischen zwei Systemen im Netz. Diese zwei Systeme können (wie oben beschrieben) sowohl die Endpunkte sein also auch sonstige Knoten im Netz ("in der Mitte, d.h. zwischen den Endpunkten") sein. Sie können Nachbarn sein, d.h., direkt durch einen Übertragungsabschnitt eines physischen Netzes (beispielsweise eine Wählverbindung, einen Satellitenübertragungsabschnitt oder ein Ethernet) miteinander verbunden sein. Oder es können ein oder mehrere weitere Knoten (z.B. Router) netztopologisch zwischen diesen beiden Systemen liegen, so dass die Kommunikation zwischen beiden eine Weiterleitung der ausgetauschten Datenpakete durch Dritte (die eben angesprochenen weiteren Knoten) erfordert. In letzterem Fall kann sich die Route zwischen beiden Systemen über die Zeit ändern. Der letzte Fall liegt oftmals vor (muss aber nicht vorliegen bzw. kann auch in anderen Situationen und / oder Konstellationen vorliegen), wenn die die Kompression ausführenden Systeme zwei Endpunkte sind.
   Es sei darauf hingewiesen, dass die Frage, ob zwei Systeme Nachbarn sind, in Abhängigkeit von der untersten Protokoll-Schicht, ab der die Kompression stattfindet, unterschiedlich beantworten wird. Beispielsweise sind zwei IP-Router Nachbarn, wenn kein weiterer Router zwischen ihnen liegt und sie Kompression auf der IP-Schicht durchführen. Hingegen sind auf der Anwendungsschicht auch zwei Endpunkte mit beliebig vielen IP-Routern dazwischen Nachbarn, solange keine Anwendungs-Proxies zum Einsatz kommen und die Kompression nur auf der Anwendungsschicht erfolgt. Weiterhin sind zwei Anwendungs-Proxies Nachbarn, wenn keine weiteren Proxies zwischen ihnen liegen und die Kompression auf der Anwendungsschicht stattfindet.
   Bei der Header-Kompression werden Teile oder alle Informationen des oder der zu komprimierenden Header in einem System (dem sendenden) entfernt und / oder ersetzt und in dem anderen System (dem empfangenden) rekonstruiert. Dabei verfügen die beiden an der Kompression beteiligten Systeme über gemeinsames Wissen (Kontext) und / oder lokales Wissen (Zustandsinformationen) und / oder ein gemeinsames Verständnis der zu verwendenden Kompressionsalgorithmen. Dieses Wissen und die Algorithmen können beispielsweise vordefiniert und / oder dynamisch ausgetauscht und / oder im Laufe einer oder mehrerer ausgetauschter Datenpakete (einer oder mehrerer Kommunikationsbeziehungen) abhängig und / oder unabhängig voneinander dynamisch aufgebaut ("gelernt") und / oder angepasst werden.
   Damit Header-Kompression funktionieren kann, müssen die vom komprimierenden System erzeugten Datenpakete das dekomprimierende System in den wesentlichen Teilen unverändert (und ― je nach verwendetem Verfahren ― in einigen, aber oftmals nicht in allen Fällen auch in der richtigen Reihenfolge) erreichen. Hierzu ist es erforderlich, dass evtl. zwischen den beiden Systemen vorhandene Knoten in der Lage sind, die komprimierten Datenpakete weiterzuleiten und dabei keine für die Dekomprimierung erforderlichen Informationen zu verfälschen. Dies ist am einfachsten, wenn die beiden Systeme direkt Nachbarn sind (d.h., nur einen "Hop" voneinander entfernt), denn hier gibt es keine "störenden" Netzknoten dazwischen. In diesem Fall sprechen wir von Hop-by-Hop-Header-Kompression. Entsprechend bezeichnet Ende-zu-Ende-Kompression die Header-Kompression zwischen zwei Endpunkten. Von Mitte-zu-Mitte-Kompression spricht man in allen Fällen, in denen die beiden an der Kompression beteiligten Systeme weder benachbart noch die beiden Endpunkte sind.
   Sind die beiden Systeme Nachbarn, müssen sie also nicht auf die Weiterleitungsfunktionen von zwischen ihnen liegenden Systemen Rücksicht nehmen. Für Mitte-zu-Mitte- und Ende-zu-Ende-Kompression müssen die von den anderen Knoten zur Bearbeitung und / oder Weiterleitung der Pakete erforderlichen Informationen unverändert gelassen werden. Zur Kompression selbst können sie einen oder mehrere Paket-Header aus der Header-Hierarchie berücksichtigen, solange die vorstehende Bedingung erfüllt bleibt.
(ii) Das Kompressionsverfahren ist im Allgemeinen umso effizienter, je mehr Header aus der Header-Hierarchie in die Kompression einbezogen werden können. Dies ermöglicht es Hop-by-Hop-Verfahren (die eben die Kompression für einen Übertragungsabschnitt durchführen) oft, wesentlich höhere Kompressionsraten zu erzielen als Ende-zu-Ende-Verfahren (letztere können schließlich diejenigen Header nicht komprimieren, die für die Weiterleitung durch die weiteren Knoten erforderlich sind). Allerdings nimmt ein Paket oft Wege, bei denen nicht auf jedem Abschnitt eine Hop-by-Hop-Kompression realisiert werden kann, z.B. aus Gründen der Leistung der eingesetzten Komponenten oder weil Komponenten für die jeweilige Aufgabe nicht mit installierter Header-Kompression verfügbar sind, gegebenenfalls auch, da vielleicht aus Gewinn- / Abrechnungsgründen eine Komprimierung gar nicht gewünscht ist.
   Vorteilhaft ist eine Mitte-zu-Mitte-Header-Kompression, die einige der Effizienz-Vorteile der Hop-by-Hop-Header-Kompression mit dem geringeren Integrations-Aufwand der Ende-zu-Ende-Header-Kompression zumindest auf einem besonders relevanten Teil des Pfades miteinander verbindet. Eine solche Mitte-zu-Mitte-Header-Kompression wird dabei am effizientesten sein können, wenn sie den in der Header-Hierarchie abgedeckten Bereich maximiert. Eine Grenze in dieser Maximierung ergibt sich dadurch, dass die zwischen dem Kompressor und dem Dekompressor auf dem Pfad befindlichen Systeme einen Teil der Header-Hierarchie für ihre jeweiligen Funktionen benötigen und dieser "untere Teil" kann, wie oben erwähnt, nicht einfach wegkomprimiert werden.
   Allgemein empfängt ein Kompressor X-1 einer Komprimierung C ein Datenpaket und komprimiert selektiv die Header, die nicht zur Weiterleitung der Datenpakete durch weitere Systeme benötigt werden. Dabei werden sinnvollerweise so viele der für den Kompressor "sichtbaren" (d.h., unverschlüsselt zugreifbar vorliegenden) Header wie möglich einbezogen.
   Die beschriebene Maximierung der von der Header-Kompression erfassten Header muss sich nicht auf den Ein- oder Ausschluss ganzer Header beschränken. Benötigt ein System auf dem Pfad zwischen Kompressor und Dekompressor nur bestimmte Felder eines Headers, stehen die anderen Felder dieses Headers für die Einbindung ins Kompressionsverfahren zur Verfügung, wenn zumindest die Struktur des Headers bei dieser Kompression erhalten bleibt und / oder rekonstruiert werden kann.
   Gleichgültig ob ganze Header oder nur Teile dieser in die Kompression einbezogen werden, kann es erforderlich sein, die ganzen oder einen Teil einzelner Header oder der Header-Hierarchie beizubehalten. Durch die erfolgte Kompression wird jedoch weniger als der insgesamt im jeweiligen Header vorhandene Platz benötigt, um die erforderlichen Informationen zu übertragen. In solchen Fällen kann der durch die Kompression frei werdende Platz in einem Header mit ― komprimierten oder nicht komprimierten ― Steuerinformationen anderer Header und / oder zusätzlichen Steuerinformationen und / oder Forward-Error-Correction (FEC)-Informationen und / oder Nutzdaten des Datenpakets gefüllt werden.
   Die Kompression von Headerfeldern kann individuell für jedes einzelne oder für einige der Datenpakete im Zusammenhang erfolgen. Bei der Kompression können Datenpakete auf andere (vorher oder später gesendete) Datenpakete Bezug nehmen und dadurch beispielsweise die Kompressionseffizienz erhöhen. Die Auswahl der zu komprimierenden Datenpakete und / oder der Datenpakete für eine zusammenhängende Kompression kann aufgrund von fest vordefinierten und / oder dynamisch erzeugten Regeln erfolgen und / oder aufgrund der Paketeigenschaften und / oder der zeitlichen Abfolgen der Pakete usw.
   Bei der Kompression von Datenpaketen können die (Folgen von) Datenpakete(n) unterschiedlicher Kommunikationsbeziehungen Ende-zu-Ende unabhängig voneinander betrachtet werden und / oder einige (oder alle) Kommunikationsbeziehungen können gemeinsam betrachtet werden. Die unabhängige und / oder gemeinsame Betrachtung zur Kompression kann einzelne (beliebige oder durch ihre Eigenschaften bestimmte) und / oder alle Datenpakete betreffen. Schließlich kann zwischen individueller und gemeinsamer Betrachtung der Datenpakete verschiedener Kommunikationsbeziehungen im Laufe der Zeit hin und her gewechselt werden.
   Die Kompression kann das zwischen Kompressor und (De-)Kompressor übertragene Datenvolumen (pro Paket) auch (ggf. nur kurzfristig) erhöhen, etwa durch zusätzliche Header, größere Header, zusätzliche Pakete und / oder sonstige ergänzende und / oder redundante Übertragung von Informationen. Auch kann vorgesehen sein, die Kompression für einzelne Datenpakete nicht anzuwenden und / oder trotz Kompression das Datenvolumen einzelner Datenpakete nicht zu vermindern. Gleiches gilt generell / zeitlich begrenzt für ganze Kommunikationsbeziehungen und / oder Gruppen von Datenpaketen und / oder alle Datenpakete.
   Vorteilhaft kann sein, neben den (komprimierten oder nicht komprimierten) weitergeleiteten Datenpaketen zusätzliche Steuerpakete in eine oder beide Richtungen zwischen Kompressor und Dekompressor zu übertragen.
   Auch kann vorgesehen sein, Steuerinformationen, darunter implizite oder explizite Bestätigungen über empfangene und / oder nicht empfangene Daten- und / oder zusätzliche Steuerpakete, zwischen Kompressor und Dekompressor auszutauschen. Es kann vorteilhaft sein, einige Datenpakete oder zusätzliche Steuerpakete erneut zu übertragen und / oder weitere Informationen als eigenständige Pakete und / oder Zusatzinformationen in anderen Pakete zu übertragen, aus denen sich Teile der Informationen und / oder gesamte Pakete wiederherstellen lassen.
   Ein so komprimiertes Datenpaket (und / oder eine Folgen von Datenpaketen) wird vom Kompressor X-1 an den (De-)Kompressor X-2 weitergeleitet und die Komprimierung C in diesem ganz oder weitgehend wieder rückgängig gemacht, so dass das ursprüngliche Datenpaket ganz oder in wesentlichen Teilen rekonstruiert wird.
(iii) Es sei angemerkt, dass der eingangs gewählte Begriff der "Mitte-zu-Mitte-Header-Kompression" gewählt wurde, da er in vielen Ausführungsformen zu einem einfachen Verständnis beiträgt. Unabhängig von den Wortbestandteilen des Begriffes "Mitte-zu-Mitte-Header-Kompression" kann das Verfahren aber in vielfältigen Ausführungsformen ― einschließlich der zu Fig. 1, 2, 3 und 4 beschriebenen ― eingesetzt werden. Dementsprechend kann die Header-Komprimierung auch zum Beispiel bereits in den / einem der beteiligten Endpunkte beginnen. Im Folgenden werden einige beispielhafte Ausführungsformen beschrieben. Dabei ist zu beachten, dass die beschriebenen Beispiele die Aspekte der Erfindung in einem bestimmten Kontext als Beispiel erläutern. Die eigentlichen Erfindungsaspekte können jedoch auch anders bzw. wesentlich allgemeiner genutzt werden.
   Am Beispiel einer Realisierung mit IPv4 könnte, wenn die Systeme auf dem Pfad zwischen Kompressor und Dekompressor die IPv4-Zieladresse auswerten, trotzdem in vielen Fällen die IPv4-Quelladresse an der Kompression teilnehmen. In einer der möglichen Realisierungen könnte dies bedeuten, dass sich wiederholende Quelladressen durch einen kürzeren Kontextbezeichner ersetzt werden können und, um die Struktur des Headers zumindest in den wesentlichen Teilen zu erhalten, die restlichen Bits des Quelladressfeldes aufgefüllt werden mit komprimierten Daten aus der Kompression der höheren Schichten, zum Beispiel UDP und RTP. Ein entsprechender Kontextbezeichner könnte auch genereller genutzt werden, für mehrere Felder eines / mehrerer Protokoll-Header gemeinsam gelten, nicht speziell einer Komprimierung der IPv4-Quelladresse dienen, usw.
   In vielen dieser Fälle würde der Kontextbezeichner (oder ein Äquivalent) auch nicht innerhalb der Bits des Quelladressfeldes übertragen werden müssen, sondern oft an beliebiger Stelle innerhalb der resultierenden Pakete und / oder sogar ganz oder teilweise durch Header-Informationen beispielsweise darunterliegender Protokollschichten (implizit) ersetzt werden können. In anderen möglichen Realisierungen, beispielsweise in Einsatzszenarien in denen die IPv4-Quelladressen ggf. sowohl für die zwischenliegenden Netzknoten als auch für den empfangenen Endpunkt und / oder Anwendung irrelevant ist, kann die IPv4-Quelladress-Information auch ersatzlos entfallen. Auch dies ermöglicht es die Bits des Quelladressfeldes mit anderen Daten aufzufüllen und dennoch die eigentliche Struktur des Headers zumindest in den wesentlichen Teilen zu erhalten.
   Verallgemeinert ergibt sich aus einer Reihe von komprimierten Feldern eines oder mehrerer Header einerseits durch Zusammenfassung ein zur Verfügung stehender Freiraum von n Bits und andererseits potentiell die Erfordernis, Kontextinformationen z.B. von k Bits zur Rekonstruktion des Datenpaketes zum Dekompressor zur übertragen, wobei im allgemeinen k < n gilt. Die verbleibenden n―k Bits stehen zur Aufnahme von (ggf. ebenfalls komprimierten) Steuerinformationen aus anderen Headern oder zur Aufnahme von Nutzdaten zur Verfügung.
   Ein Spezialfall liegt vor, wenn durch die Kompression ein oder mehrere Header und / oder Teile eines oder mehrerer Header vollständig eingespart werden können.
   Unter Umständen reduziert sich die oberhalb des eines bestimmten Headers (z.B. des IP-Header) verbleibende komprimierte Information auf die leere Menge, da alle relevanten Informationen nach Komprimierung in diesen n―k Bits untergebracht werden können.
   Wie vorstehend bereits angesprochen, kann ― abhängig von Anforderungen und / oder Einsatzszenarien und / oder genutzten / komprimierten Headern und / oder komprimierten Header-Feldern ― auf das explizite Übertragen von Kontextbezeichnern ggf. auch (in einigen und / oder allen) Paketen verzichtet werden ― beispielsweise wenn sich dieser implizit aus Informationen und / oder Adreßinformationen darunter liegender Protokollschichten ergibt und / oder Steuerinformationen ausgetauscht werden, die diese Informationen / Adreßinformationen auf einen Kontextbezeichner bzw. Kontext abbilden. In diesem Fall wäre k für alle / einige Pakete kleiner bzw. sogar k=null.
   Abhängig von Anforderungen und / oder Einsatzszenarien und / oder genutzten / komprimierten Headern bzw. Header-Feldern kann es auch vorkommen, dass Teile der Header nicht einfach durch einen mehr oder weniger statischen Kontextbezeichner ersetzt werden können oder sollen. Beispielsweise könnte dies an der Art der zu komprimierenden Header-Felder liegen, aber auch Zielsetzungen wie die Reduzierung der Komplexität und / oder Steigerung der Robustheit und / oder Verkürzung von Übertragungsverzögerungen usw. können es sinnvoll machen, einzelne / einige Header-Felder nicht (nur) durch einen Kontext-Bezeichner, sondern durch zusätzliche Informations-Bits (allgemeiner: durch zusätzlich Informationen) im komprimierten Header darzustellen.
   Ein Beispiel für solche Header-Felder könnten z.B. in Headern enthaltene Sequenznummern sein, die z.B. als Differenzwert oder beispielsweise auf die letzten Bits / Bytes verkürzt in den komprimierten Header in allen oder einigen der Pakete aufgenommen werden. Zur Vereinfachung wird aber auch im folgenden stets von k Bits gesprochen. Wobei k eben einen Kontextbezeichner und / oder weitere Informationen enthalten kann und k durchaus beispielsweise je nach übertragenem Paket unterschiedlich groß sein kann.
   Im oben beschrieben Beispiel der IPv4-Quelladresse ist n=32, und bei Verwendung eines kurzen Kontextbezeichners von k=8, verbleiben n―k=24 Bits. Falls dies nicht ausreichend ist, verbleibt neben den in der Quelladresse untergebrachten Informationen ein wenig Information oberhalb des IPv4-Headers. Bei dieser Modifikation ist darauf zu achten, dass die an der Kompression nur teilweise teilnehmenden Paketheader aus Sicht der Funktionen der Systeme auf dem Pfad zwischen Kompressor und Dekompressor konsistent scheinen: An beschriebenem Beispiel heißt dies unter anderem: Prüft eins der Systeme auf dem Pfad zwischen Kompressor und Dekompressor die typische Anforderungen an IPv4-Quelladressen, muss der Kompressor darauf achten, dass die eingesetzten Daten die geprüften Anforderungen erfüllen (beispielsweise kann es daher sein, dass die eingesetzten Daten keine IP-Multicast-Adresse ergeben dürfen); wertet eins der Systeme auf dem Pfad zwischen Kompressor und Dekompressor die IPv4-Header-Checksum aus, so muss der Kompressor sie so modifizieren, dass das auswertende System das Paket für konsistent hält, und der Dekompressor muss das Feld wiederherstellen.
   Im Fall der IPv4-Header-Checksum erfolgt dies jeweils durch einfache Neuberechnung; im Falle anderer Headerfelder, die solchen Konsistenzanforderungen genügen müssen, kann es auch erforderlich sein, diese im Kompressor in die Kompression einzubeziehen und bei der Dekompression aus Kontext und komprimierten Feldern wiederherzustellen. (Wertet keins der Systeme auf dem Pfad zwischen Kompressor und Dekompressor die IPv4-Header-Checksum aus, ist diese ebenso wie die anderen Felder aller Paketheader ein Kandidat für die Teilnahme an der Header-Kompression.) Diese Beschreibung nutzte IPv4 und die IPv4-Quelladresse als Beispiel; der beschriebene Aspekt lässt sich aber auf beliebige Header (oder Teile dieser) wie Ethernet-Header und andere Header der Schichten 1 und 2, IPv6-Header und andere Header der Schicht 3, sowie die Header der darüber liegenden Schichten anwenden.
   Wie oben beschrieben muss die Kompression nicht auf einen einzelnen Header beschränkt sein, sondern kann Protokoll-übergreifend erfolgen. Neben mehreren Feldern aus dem IP-Header können auch noch ein oder mehrere Felder von UDP (wie etwa die Checksumme) oder TCP (wie etwa der Urgent Pointer) berücksichtigt werden.
   UDP- und TCP-Portnummern dienen oftmals der Identifikation von Kommunikationsbeziehungen auch für weitere Knoten im Netz, und so kann es erforderlich sein, diese unverändert beizubehalten. Gleiches kann für die IP-Quell-Adresse gelten. Ist dies nicht erforderlich, kann das gesamte Tupel bestehend aus IP-Quell- und / oder Transport-Quell- und / oder Zielportnummer und / oder Transport-Protokollbezeichner komprimiert werden.
   Am Beispiel von IPv4 Headern und mehr oder weniger einfachen IP-Routern als Netzknoten, die von den komprimierten Paketen passiert werden, gibt es eine Vielzahl von weitere Header-Feldern, die potentielle Kandidaten zum Einbeziehen in die partielle Header-Komprimierung wären. Hier neben der IPv4-Quell-Adresse (Source Address) und Checksumme beispielhaft genannt seien die Felder: Protocol, Identification, Fragment Offset und / oder das MF Bit (zum Beispiel, wenn zwischen X-1 und X-2 keine (weitere) Fragmentierung erfolgt / erfolgen soll), TOS, TTL (oder ein Teil davon, falls zwischengeschalteten Router beispielsweise nur auf >0 prüfen und begrenzt reduzieren ― in diesem Fall könnte man z.B. die unteren 4 Bits auf 1 setzen und z.B. die oberen 4 Bits in die Komprimierung einbeziehen), Total Length (zum Beispiel, wenn sich diese aus den darunterliegenden Protokoll-Headern ergibt und die zwischengeschalteten Komponenten nur diese auswerten) und IP Header Length (beispielsweise wenn diese ignoriert oder einfach implizit von den zwischengeschalteten Komponenten beispielsweise in Abhängigkeit von der IP Versionsnummer angenommen wird). Welche der Felder wirklich in die Komprimierung einbezogen werden können, ergibt sich, wie zuvor beschrieben, unter anderen durch die Einsatzszenarien und die zwischengeschalteten Komponenten.
   In einigen Einsatzszenarien und Ausführungen könnte ggf. sogar die IPv4-Ziel- Adressen (Destination Address) ganz oder teilweise in die Komprimierung mit einbezogen werden. Dies könnte z.B. vorteilhaft sein, wenn die Daten über ein Broadcast (oder Broadcast-ähnliches) Netz übertragen werden, bei denen die Daten unabhängig von der Zieladresse ohnehin (stets oder in der Regel oder für bestimmte Pakete) alle Empfänger bzw. den / die Dekompressoren erreichen. Vorteilhaft ist in solchen Fällen der Einsatz von partieller Header-Komprimierung unter anderem dann, wenn auf Sendeseite oder Empfangsseite (oder im Netz selbst) Komponenten eingesetzt werden, die einen IP Header (bzw. etwas ganz / teilweise in der Struktur und / oder Größe eines IP Headers) voraussetzen. In einem einfachen Beispielfall, könnte beispielsweise eine unmodifizierte Netzwerkkarte und / oder ein unmodifizierter Netzwerk-Kartentreiber zum Absenden der Pakete eingesetzt werden sollen, die / der voraussetzt, dass er Datenpakete mit einem IP-Header erhält.
   Ein ähnliches Beispiel könnten an eine IP-Multicast-Adresse gesendete Pakete sein. Wenn z.B. bekannt ist welche Adressen nur genutzt werden, oder vielleicht sogar bekannt ist, dass nur eine IP-Multicast-Adresse in einem Netz genutzt wird, und / oder die Empfänger oder Dekompressor die IP-Multicast-Adressen anhand von KontextBezeichnern wiederherstellen, könnten für IP Multicast Pakete große Teil der IP(v4)-Destination Adresse in die Komprimierung mit einbezogen werden.
   Je nachdem, welche Protokolle auf den einzelnen Schichten eingesetzt und welche Header-Informationen in die Komprimierung einbezogen werden, können ergänzende Verfahren zum Einsatz kommen oder in schwierigeren Fällen auch zum Einsatz kommen müssen. Soll z.B. unabhängig von IP Multicast die IP-Ziel-Adresse in eine Komprimierung einbezogen werden, kann es sinnvoll und / oder notwendig sein, eingesetzte Komponenten zu unterstützen, damit sie mit diesen mit anderen Inhalten gefüllten IP-Destination Adressen umgehen können. Sollen IP-Pakete mit einer in die Komprimierung einbezogenen IP-Destination Adresse beispielsweise über ein "Ethernet" (z.B. gemäß IEEE 802.3) übertragen werden, kann das eingesetzte Address Resolution Protocol (ARP) unterstützt werden, indem beispielsweise ein lokaler ARP Cache oder ein ARP Proxy / eine auf ARP-Anfragen antwortende Instanz, für ARP Anfragen mit einer durch Komprimierung entstandenen Pseudo-IP-Destination Adresse mit geeigneten ARP Antworten / Werten antwortet.
(iv) Die obigen Ausführungen bezogen sich zum Teil auf IPv4. Entsprechend lässt sich auch mit IPv6 verfahren, was vorteilhaft sein kann, weil dort die Adreßfelder größer sind und damit durch Kompression potentiell mehr Raum zur Unterbringung weiterer Steuerinformationen und / oder Daten entsteht. Das gilt auch, wenn statt IPv6-Adressen verwandte Adressformate wie HIP-Adressen verwendet werden.
   Auch andere Protokolle können entsprechend komprimiert werden. So bieten auf der Schicht 2 des OSI-Referenzmodells beispielsweise die Quelladressen der Header von IEEE-802-LAN-Protokollen entsprechenden Raum. Oberhalb der Netzschicht lassen sich Transportprotokoll-Header und / oder Anwendungsprotokoll-Header entsprechen komprimieren.
   Die auf einzelnen Schichten durch Kompression der entsprechenden Headerfelder "gewonnenen" Bits können schichtübergreifend zusammengefasst und gemeinsam genutzt werden. Das kann beispielsweise Raum für Kontextbezeichner sparen, z.B. weil diese nicht mehr auf jeder Schicht vergeben, verwaltet und / oder übertragen werden müssen und / oder sich diese sogar ganz / teilweise aus Feldern darunterliegender Protokoll-Header ableiten lassen.
   Wie oben angedeutet, kann dieses Verfahren unidirektional und / oder bidirektional eingesetzt werden. Im Falle bidirektionaler Kompression können die beiden Übertragungsrichtungen unabhängig oder abhängig voneinander betrieben werden. Der unabhängige und / oder abhängige Betrieb kann sich beziehen auf einzelne Datenpakete, einzelne Kommunikationsbeziehungen und / oder auf Gruppen von Kommunikationsbeziehungen und dieser Bezug bzw. der unabhängige und / oder abhängige Betrieb kann sich im Laufe der Zeit einmalig und / oder wiederholt ändern.
   Steht für die Kommunikation zwischen Kompressor und Dekompressor nur ein unidirektionaler Übertragungsweg zur Verfügung, so kann der Kompressor durch geeignete Auswahl von Algorithmen (etwa die Nutzung von DEFLATE) und / oder zusätzlich übertragenen Steuerinformationen dafür Sorge tragen, daß der Dekompressor in der Lage sein wird, ein oder mehrere von Kompressor komprimierte(s) und weitergeleitete(s) Datenpakete ganz oder in wesentlichen Teil zu rekonstruieren.
   Ein alternative Nutzung ergibt sich, wenn anstelle der partiellen Header-Komprimierung mit dem Beibehalten von Teil-Headern bzw. (Teil-) Header-Strukturen (beispielsweise um zwischengeschalteten Netzkomponenten zu unterstützen, die diese Header auswerten) Header eines anderen (beispielsweise von diesen Netzkomponenten unterstützten) Protokolls eingefügt werden. Beispielsweise könnten für den Fall, dass zwischengeschaltete Router das IPv4 Protokoll unterstützen, die deutlich größeren IPv6 Header komprimiert werden und die komprimierte Information, versehen mit eingefügten IPv4 Headern übertragen werden. In diesem Fall können dann optional, wie zuvor für IPv4 Header beschrieben wiederum Teile des Inhalts des IPv4 Headers komprimiert und / oder zur Übertragung von andere Informationen und / oder Nutzdaten ersetzt werden.
   Für Einsatzszenarien und abhängig von den Anforderungen kann zudem eine Kombination mit einer Komprimierung der übertragenen Nutzdaten erfolgen. Dabei bieten sich je nach Einsatzszenario sowohl verlustfreie als auch verlustbehaftete Komprimierungsverfahren (wie beispielsweise das Reduzieren von Bildauflösungen, der Bildqualität, oder des Herausfiltern von optionalen Zusatzinformationen, usw.).
   Für einige Einsatzszenarien und Netze bietet sich zudem generell eine Kombination und / oder gemeinsame Nutzung von Komprimierungsverfahren und zusätzlichen Protokoll-Enhancement-Verfahren an. Protokoll-Enhancement-Verfahren gibt es für eine Vielzahl an Protokollen und Zielstellungen und / oder Netzen. Sehr oft eingesetzt werden beispielsweise Protokoll-Enhancement-Verfahren für TCP und / oder HTTP. Dabei werden diese Protokolle entweder beispielsweise für bestimmte Übertragungsabschnitte durch andere Protokolle ersetzt und / oder Protokoll-Parameter in den Endgeräten und / oder den ausgetauschten Datenpaketen modifiziert. Dabei gibt es vielfältige potentielle Zielstellungen für solche Protokoll-Enhancement-Verfahren. Beispielsweise könnte es die Aufgabe eines TCP-Protokoll-Enhancements sein, auch bei hohen Übertragungsverzögerungen und / oder hohen Paketverlustraten eine hohe Übertragungsbandbreite zu ermöglichen und / oder den Protokoll-Overhead, beispielsweise verursacht durch Steuerpakete, gering zu halten. Ähnliche Zielstellungen haben oft HTTP-Protokoll-Enhancements. Bei diesen soll beispielsweise auch die bei Einsatz eines üblichen Internet-Browsers entstehenden Seitenladezeiten auch für Netze mit hohen Übertragungsverzögerungen und / oder hohen Paketverlustraten reduziert werden. Möglichkeiten, dies zu tun, umfassen beispielsweise zwischengeschaltete Proxies und / oder das proaktive Senden von auf Webseiten enthaltenen oder sogar hinter Links folgenden Objekten.

Das HTTP-Protokoll ist auch ein Beispiel dafür, dass es sehr sinnvoll sein kann, die verschiedenen hier genannten Verfahren zu kombinieren (dabei steht HTTP aber nur stellvertretend für viele Protokolle, auf die dies zutrifft). So setzt HTTP beispielsweise auf TCP und IP auf, es wird also eine relativ große Protokoll-Hierarchie genutzt, für die sich typische Header-Komprimierungs- und partielle Header-Komprimierungs-Verfahren anbieten; die HTTP-Header selbst sind oftmals weitgehend Text-basiert / -codiert. Unter anderem daher könnten für HTTP-Header sowohl typische (auch partielle) Header-Komprimierungs-Verfahren eingesetzt werden. Aber auch wenn man die HTTP-Header mit und / oder ohne die ggf. folgenden Nutzdaten mit einem herkömmlichen Komprimierungsverfahren (wie beispielsweise DEFLATE) komprimiert (beispielsweise auch optional bzw. abhängig vom Typ der Nutzdaten und / oder davon, ob die Nutzdaten bereits komprimiert sind), können sich signifikante Volumeneinsparungen ergeben. Nicht zuletzt ist HTTP ein Protokoll, für das sich in vielen Netzen Enhancement-Verfahren empfehlen und für das oftmals eine Verschlüsselung nützlich ist.

Jeder dieser genannten Verfahrenstypen (wie Header-Komprimierung, FEC, Nutzdaten-Komprimierung, Protokoll-Enhancement, Verschlüsselung) kann beispielsweise für HTTP in allen in Fig. 1, 2, 3 und 4 genannten Anordnungen eingefügt werden. Dabei könnten die einzelnen Verfahrenstypen unabhängig voneinander realisiert werden, was unter anderem die Flexibilität und / oder Austauschbarkeit erhöht. Eine Realisierung in kombinierten Systemkomponenten und / oder Geräten reduziert jedoch potentiell die Gesamtkomplexität und / oder Konfigurationsaufwände. Nicht zuletzt könnten die einzelnen Verfahrenstypen bei einer ganz / teilweise integrierten Realisierung und / oder bei einer Realisierung bei denen mindestens einzelne Steuerinformationen zwischen den Komponenten der Verfahrenstypen ausgetauscht werden, vereinfacht realisiert und genutzt werden. Beispielsweise kann durch das Verfahrenstyp-übergreifende gemeinsame Nutzen von Statusinformationen und / oder Kontextbezeichnern in einigen Fällen zudem die Menge der über das Netz auszutauschenden Steuerinformationen reduziert und / oder effizienter genutzt werden. In einigen Fällen kann so auch beispielsweise die Zeitspanne zum Aufbauen neuer Verbindungen und / oder des Datenaustausches reduziert werden.

### II.b) Erkennung von Komprimierungs-Möglichkeiten / Steuerung der Komprimierung

(i) Vorstehend wurde beschrieben, dass (statisch) Regeln konfiguriert werden können, wie und auf welche Header / Header-Felder eine Header-Kompression angewendet werden kann. Dies erfordert jedoch vorbereitende Arbeiten und ist zudem wenig flexibel beispielsweise gegenüber sich ändernden Netzstrukturen oder entfallener beziehungsweise zusätzlich zwischengeschalteten weiteren Knoten / Netzkomponenten wie etwa Routern.
(ii) Vorteilhaft kann es sein, ergänzend zu und / oder anstelle einer solchen (statischen) Konfiguration ein automatisches Erkennen und Anpassen der möglichen Header-kompression vorzusehen. Ein solcher Mechanismus kann verteilt zwischen zwei oder mehreren Kompressoren realisiert sein und / oder einseitig in einen Kompressor. Der Erkennungsmechanismus kann passiv sein (z.B. nur Paketflüsse beobachten) oder aktiv (z.B. selbst Pakete zur Ermittlung der Kompressionsmöglichkeiten aussenden). Der Mechanismus (gleichgültig ob in einem oder in mehreren Kompressoren realisiert) kann die notwendigen Informationen vom Netz (etwa durch Routing-, Middleboxsignalisierungsprotokolle wie z.B. RSVP, NSIS, SOCKS, MIDCOM usw. und / oder sonstige Steuerungsprotokolle) und / oder einem Netzmanagement erhalten und / oder sie durch Interaktion zweier oder mehrerer Kompressoren ermitteln. Hinweise können durch initiale und / oder fortlaufende Konfiguration gegeben werden.
   Ein solcher Mechanismus erkennt dynamisch teilweise oder ganz selbständig, welche Header bzw. Header-Felder in eine bestimmte Komprimierung einbezogen werden können. Diese Ermittlung der Kompressionsmöglichkeiten kann im Vorfeld der Inbetriebnahme der Komprimierung, vor / während des Aufbaus einer oder mehrerer Kommunikationsbeziehungen und / oder fortlaufend während der aktiven Komprimierung erfolgen.
   Dabei kann es vorteilhaft sein, dass der Mechanismus automatisch auch während des Betriebes Fehler erkennt (z.B. aus der Übertragung oder Nichtübertragung komprimierter Datenpakete selbst, deren Verlustraten und / oder ihrer sonstigen Übertragungscharakteristika und daraus Rückschlüsse auf Veränderungen im Übertragungsweg (neue Wegewahl, Hinzufügen eines oder mehrerer weiterer Knoten, Lastverteilung auf mehrere Routen usw.) zieht. Basierend auf diesen Informationen kann der Mechanismus dann die Header-Komprimierung entsprechend anpassen.
   Ein solcher Mechanismus kann in verschiedenen Ausprägungen gleichzeitig aktiv sein und auch parallel in Ergänzung und / oder zeitlich versetzt zu einer statischen Konfiguration betrieben werden. Unterschiedliche Ausprägungen (verschiedener dynamischer Ermittlungen und / oder statischer Konfigurationen und / oder Aushandlungen) können gleichzeitig und / oder sequentiell für unterschiedliche Datenpakete einzelner und / oder mehrerer Kommunikationsbeziehungen genutzt werden. Die Identifikation, welche Mechanismen auf welchen (Teile einer) Kommunikationsbeziehung(en) angewendet werden sollen kann wiederum statisch oder dynamisch erfolgen und / oder von den Eigenschaften der Datenpakete und / oder den verwendeten Protokollen und / oder von der Netzlast (gegenwärtig, vergangen, zukünftig erwartet) und / oder von den beobachteten Übertragungseigenschaften (Fehlerrate, Umlaufzeit usw.) abhängig sein.
(iii) Insbesondere kann vorgesehen sein, in Ergänzung und / oder anstelle der Konfiguration, welche Felder / Teilfelder in die Kompression einbezogen werden dürfen, aktiv beispielsweise Testpakete nach einem zuvor (statisch oder dynamisch) vereinbarten Schema auszutauschen. So kann durch sukzessives systematisches Testen ermittelt werden, welche Header-Felder komprimiert werden dürfen und welche unverändert vorhanden sein müssen und / oder ob die und / oder welche Teile der einen oder mehreren Paket-Header in ihrer Struktur erhalten bleiben müssen.
(iv)
   Es kann vorteilhaft sein, dynamisch zu ermitteln, was für Typen von Datenpaketen vorliegen, um die Komprimierung entsprechend anzupassen. So lässt sich beispielsweise durch dynamische Erkennung des Typs eines Datenstroms (beispielsweise eines Multimediadatenstroms auf der Basis von RTP) automatisch entscheiden, ob und / oder welche Datenpakete auf welche Weise komprimiert werden sollen. Als Entscheidungsgrundlagen können die technische Machbarkeit (so lassen sich etwa verschlüsselte Pakete weniger gut komprimieren als unverschlüsselte) und / oder die Effizienz der Kompression und / oder der Aufwand (z.B. Rechenleistung, Speicher usw.) dienen.
   Es kann vorteilhaft sein, diese beiden (und ggf. weitere) (dynamische und / oder statische) Erkennungs- und / oder Entscheidungsschritte und / oder die Kompression selbst miteinander zu kombinieren.
(v) Natürlich gehen auch Kombinationen aus vorangehender Konfiguration und einer automatischen Erkennung. Dabei könnte beispielsweise vorab eine Unterscheidung pro Protokoll-Header bzw. Header-Feld getroffen werden, ob dieser Teil stets komprimiert werden soll, nie komprimiert werden soll, oder abhängig vom Ergebnis einer automatischen Erkennung komprimiert werden soll.
   Alternativ bzw. in Kombination kann die Kompression abhängig gemacht werden von bestimmten beteiligten Endpunkten und / oder Anwendungen und / oder der Last in den Übertragungsnetzen und / oder auf einzelnen / Gruppen von Übertragungsabschnitten und / oder von verfügbarem Speicher und / oder der CPU- / Prozessorlast der beteiligten Komponenten. Abhängig von einzelnen oder Kombinationen solcher Kriterien kann die Komprimierung ganz / teilweise aktiviert, eingegrenzt und / oder ganz / teilweise deaktiviert werden. Sowohl bei statischer als auch bei dynamischer Kompressions-Entscheidung, kann diese Entscheidung einseitig durch einzelne Komponenten oder Komponenten einer Übertragungsseite getroffen werden oder gemeinsam von mehren beteiligten Komponenten oder auch "nebenstehender" Systemkomponenten wie einem Netzwerkmanagement-System. Dabei ist es auch möglich, Verbindungen zunächst zu komprimieren und während des Fortbestandes der Verbindungen / von Teilen der Verbindungen die Kompression zu beenden (und anders herum bzw. mehrfach wechselnd).

### II.c) Verschachtelte oder inkrementelle Komprimierung

(i) Die obigen Beschreibungen sind für die Mitte-zu-Mitte-Kompression zunächst davon ausgegangen, dass die vom Kompressor (z.B. X-1) zu komprimierenden Datenpakete als nicht-komprimierte ("ursprüngliche") Datenpakete vorliegen (beziehungsweise haben die obigen Beschreibungen nicht weiter unterschieden, ob die eingehenden Datenpakete bereits in einer Form komprimiert sind). Entsprechend rekonstruiert auch der Dekompressor (z.B. X-2) die nicht-komprimierten Datenpakete ganz oder in wesentlichen Teilen. Die Anwendung der oben beschriebenen Verfahren ist jedoch nicht auf nicht komprimierte Pakete beschränkt.
(ii) Liegt eine Netztopologie entsprechend einer Struktur wie in Fig. 1e) bzw. 3e) dargestellt vor, dann sind die Pakete, die von der dortigen Komprimierung C2 zu bearbeiten sind, vorher bereits (teilweise oder ganz) durch die Komprimierung C1 komprimiert worden.
   Genauso könnte beispielsweise eine Anwendung oder ein Endpunkt bereits (Header-)komprimierte Datenpakete generieren. (Im Falle einer VoIP Anwendung könnten dies beispielsweise, wie in [9] beschrieben, komprimierte RTP Header sein, wobei die darunter liegenden UDP und IP Header gemäß [9] unkomprimiert geblieben sein könnten.
   In diesen Fällen, kann eine innere Komprimierung als ergänzende und / oder ersetzende Komprimierung vorgenommen werden.
   Die innere Komprimierung kann ergänzend sein, indem weitere Header und / oder Header-Felder, die vielleicht auf dem betreffenden Übertragungsnetz (N-X2 im Fall von Fig. 1e) bzw. 3e) bei der Übertragung eingespart werden können, in einem geschachtelten Kompressionsschritt komprimiert werden.
   Die Komprimierung kann ersetzend sein, wenn vor der erneuten Komprimierung zunächst eine Dekomprimierung erfolgt, etwa weil mehrere Header- oder Header-Felder dann effizienter gemeinsam komprimiert werden können.
   Ergänzende und ersetzende Komprimierung können gleichzeitig und / oder zeitlich abwechselnd aktiv sein.
   Von der äußeren Komprimierung nicht erkannte und / oder nicht komprimierte Datenpakete können von der inneren Komprimierung erfasst werden und umgekehrt.
   In allen Fällen kann die Erkennung komprimierter Datenpakete und die Erkennung der noch zu komprimierenden Header-Informationen wiederum statisch konfiguriert und / oder dynamisch ermittelt werden und / oder durch Interaktionen mit den an der Komprimierung beteiligten oder externen Komponenten erhalten werden.
   Die einzelnen Komprimierungen können sich ― wie oben bereits beschrieben ― auf einzelne Pakete und / oder Paketfolgen und / oder alle Pakete einer und / oder eine Gruppe von Kommunikationsbeziehungen beziehen. Sie können auch in zeitlicher Abfolge unterschiedlich angewendet werden.
   Eine "innere" Komprimierung kann in einigen Ausgestaltungen beispielsweise auf die Kontextbezeichner der "äußeren" Komprimierung zurückgreifen, um so beispielsweise das Datenvolumen weiter zu reduzieren und / oder die Komplexität und / oder Steuerinformationen der inneren Komprimierung zu reduzieren.
   Beispielsweise kann für Multimedia-Datenpakete, die RTP nutzen, eine innere Komprimierung CRTP-Header in den eingehenden Datenpaketen erkennen und dann besonders effizient die in der äußeren Komprimierung noch beibehaltenen UDP- und IP-Header ganz oder teilweise komprimieren (beispielsweise indem die innere Komprimierung die Kontextbezeichner / Flow-ID der äußeren Komprimierung nutzt und die im UDP-, IP-Header zu komprimierenden Informationen ganz oder teilweise in den durch die Kontextbezeichner referenzierten Kontext einbezieht). Eine solche Schachtelung kann sich rekursiv fortsetzen oder auch sequentiell ähnlich zu Fig. 1d) bzw. 3d) fortsetzen.
(iv) Alternativ kann eine innere Komprimierung aber auch weniger Header und / oder Header-Felder komprimieren (beispielsweise, wenn in einem inneren Übertragungs-netz zwischengeschaltete Komponenten eingesetzt werden, die eine Komprimierung bestimmter Header und / oder Header-Felder erlauben).
   Aber auch eine Reduzierung des Umfangs einer inneren Komprimierung oder gar das vollständige Aufheben einer Komprimierung für beispielsweise Volumen-Abrechnungs- und / oder Monitoring- und / oder vereinfachte Abhörzwecke und / oder Aufzeichnungszwecke ist denkbar. Alternativ könnten für alle oder einige dieser Zwecke auch die eigentlichen übertragenen Endsysteme unverändert bleiben und zusätzlich ein Datenstrom aus unkomprimierten Daten erzeugt werden. Auch kann es in einigen Fällen (u.a. abhängig von den verwendeten Komprimierungsverfahren) vorteilhaft sein, wenn die auf einer äußeren Komprimierung eingesetzten Komprimierungs-Verfahren zusätzliche Steuerinformationen an innere (De-)Komprimierungs-Komponenten senden bzw. mit diesen austauschen.
   Auch das Einfügen von Datenverschlüsselung alternativ bzw. zusätzlich bzw. in Kombination mit Komprimierungs-Verfahren ist ― oft auch unabhängig von deren verschachtelten bzw. inkrementellen Einsatz ― möglich. Und auch beim Einsatz von Datenverschlüsselungs-Verfahren kann es unter anderem abhängig vom Einsatzzweck, den verwendeten Verfahren und den Zielstellungen, vorteilhaft sein, Steuerinformationen mit inneren Komponenten beispielsweise zum Ermöglichen einer Entschlüsselung auszutauschen.

### II.d) Header-Komprimierung bei Punkt-zu-Mehrpunkt-Kommunikation

(i) Wie oben beschrieben, muss die Komprimierung von Protokoll-Headern nicht auf eine Strecke zwischen zwei Kompressoren beschränkt sein, sondern kann auch mehr als zwei Kompressoren umfassen. Dabei sind grundsätzlich zwei Arten der Kommunikation möglich, die durch das unterliegende Netz vorgegeben sein können (aber nicht müssen): a) unidirektional von genau einem Knoten S an viele Knoten R1, ..., Rn (n > 1) ohne dass die Knoten R1, ..., Rn die Möglichkeit haben, auch Pakete an den Knoten S zu senden; b) bidirektional, so dass die Übertragung von Paketen von den Knoten R1, ..., Rn an den Knoten S möglich ist. Im Fall b) können die Pakete von den den Knoten R1, ..., Rn an den Knoten S nur Steuerpakete sein und / oder auch komprimierte Datenpakete. Im letzteren Fall kann noch unterschieden werden, ob eine, mehrere oder alle der Knoten R1, ..., Rn Steuer- und / oder Datenpakete senden können. Jeder Knoten Ri, der auch (komprimierte) Datenpakete sendet, fungiert dann gleichermaßen als sendender Knoten S.
(ii) Auch in einem solchen Netz soll entsprechend der vorliegenden Erfindung (wie vorstehend unter A, B und / oder C ausgeführt) komprimiert werden können. Entsprechend des Standes der Technik für traditionelle Header-Kompression ist jedoch ein gemeinsames Verständnis zwischen Kompressor und Dekompressor erforderlich, das fortlaufend abgeglichen wird ― was naturgemäß eine 1:1-Beziehung zwischen Kompressor und Dekompressor annimmt. Sobald jedoch mehrere Dekompressoren komprimierte Datenpakete eines Kompressors erhalten, was im vorliegenden Szenario der Fall ist, geht diese 1:1-Beziehung verloren.
   Die vorliegende Erfindung ist auch für den Einsatz von Header-Kompression in der Punkt-zu-Mehrpunkt-Kommunikation (wie sie beispielsweise in einem Satelliten- oder terrestrischen Broadcastnetz vorliegt) geeignet. Dieselben Kompressionstechniken können angewendet werden.
   Allerdings ist zu oftmals berücksichtigen, dass die Dekompressoren z.B. in (oder "hinter") den Knoten R1, ..., Rn unterschiedliche Fähigkeiten haben können und dass die Übertragungswege zu den verschiedenen Dekompressoren unterschiedliche Eigenschaften aufweisen können. Ein Kompressor sollte dann den wichtigen, der Mehrzahl und / oder allen Dekompressoren eine Dekomprimierung der komprimierten Datenpakete ermöglichen. Dies kann dadurch geschehen, dass der Kompressor Verfahren und Header / Header-Felder zur Kompression wählt, welche für alle intendierten Dekompressoren geeignet sind. Und / oder der Kompressor kann unterschiedlich komprimierte Datenpakete an einzelne Dekompressoren und / oder Gruppen von Dekompressoren senden, die spezifisch für den / die jeweiligen Übertragungsweg und / oder Dekompressor geeignet sind. Und / oder der Kompressor kann zusätzliche Information (in bestehenden und / oder weiteren Daten- und / oder Steuerpaketen) an einzelne und / oder Gruppen von Dekompressoren (und / oder Knoten den Übertragungsnetzen) senden, um eine erfolgreiche Weiterleitung und Dekomprimierung der Datenpakete zu ermöglichen.
   Da in IP-Netzen Datenpakete verloren werden können (etwa durch Bitfehler oder Überlast), ist es möglich, dass einem, mehreren oder allen Dekompressoren Informationen für die korrekte Dekomprimierung eines Datenpaketes fehlen. In einem solchen Fall ist vorgesehen, dass ein Dekompressor dem Kompressor mitteilt (so bidirektionale Kommunikation direkt über die gleichen oder indirekt über teilweise oder ganz verschiedene Übertragungsnetze möglich ist), dass Informationen fehlen. Der Kompressor kann entscheiden, ob und wann er zur Rekonstruktion der fehlenden Informationen (des Kontexts) weitere Informationen in bestehenden und / oder zusätzlichen Daten-und / oder Steuerpaketen überträgt. Diese Entscheidung kann abhängig von der Kommunikationsbeziehung (Art der Daten, Dauer, usw.) und / oder von dem / den fraglichen Dekompressor(en) und / oder der Anzahl der Dekompressoren, die diese Informationen benötigen und / oder sonstigen Konfigurationsinformationen und / oder Vorgaben und / oder den allgemeinen und / oder aktuellen Übertragungseigenschaften des Netzes geschehen. Alternativ oder ergänzend kann ein Kompressor auch in regelmäßigen oder unregelmäßigen Abständen redundante Informationen zur evtl. Rekonstruktion des Kontexts übermitteln, beispielsweise durch Einsatz von FEC, wobei die Bitrate für die redundanten Informationen je nach Netz, vermuteter oder realer Netzlast, angenommener oder beobachteter Bit- und / oder Paketfehlerrate oder durch Konfiguration oder durch Signalisierung eines Netzmanagementsystems über die Zeit variieren kann.
   Es können einer oder mehrere oder alle der Dekompressoren in der Lage sein, Feedback über fehlende Informationen und / oder den Kontext und / oder das lokale Wissen (Zustand) an den Kompressor zu senden. In einem solchen Fall kann es vorteilhaft sein, dass nicht alle möglichen Dekompressoren dies auch tun, z.B. um zu vermeiden, dass der Kompressor oder der rückwärtige Übertragungsweg mit zu vielen Informationen überlastet wird. Statt dessen kann beispielsweise ein oder mehrere Dekompressoren als designierte Dekompressoren einer Gruppe oder aller Dekompressoren ausgewählt werden; nur diese designierten Dekompressoren liefern dann Feedback stellvertretend für die jeweilige Gruppe oder alle Empfänger. Nicht alle Dekompressoren müssen durch designierte Dekompressoren vertreten werden.
   Die Auswahl der designierten Dekompressoren kann statisch festgelegt sein und / oder dynamisch ausgehandelt werden (z.B. kann der Kompressor die Dekompressoren bestimmen) und / oder aufgrund der Übertragungscharakteristika zu den Dekompressoren festgelegt werden und / oder durch die funktionalen Eigenschaften (Leistungsmerkmale) der Dekompressoren und / oder die Eigenschaften bezüglich der komprimierbaren Header und / oder Header-Felder auf dem jeweiligen Übertragungsweg; in allen diesen Fällen kann auch eine Zufallskomponente (echte Zufallszahlen, Pseudo-Zufallszahlen, kryptographisch errechnete Funktionen) benutzt werden, um die tatsächliche Auswahl weiter einzuschränken. Verschiedene Dekompressoren können dabei anhand eines oder mehrerer dieser Kriterien auch jeweils spezifische Teile der für den Kompressor nützlichen Feedback-Information senden. Sowohl bezüglich eines oder mehrerer der Kriterien als auch bezüglich der jeweils übertragenen Untermengen kann die Auswahl dauerhaft und / oder bis zu einer expliziten Neukonfiguration erfolgen und / oder zeitlich variieren. Die Auswahl kann für alle vom Kompressor übertragenen Pakete gelten und / oder für die Pakete einzelner Kommunikationsbeziehungen und / oder Gruppen von Kommunikationsbeziehungen und / oder für durch ihren Typ und / oder sonstige Eigenschaften bestimmte Pakete gelten.
(iii) Ein solches Verfahren lässt sich beispielsweise über ein terrestrisches Funknetz (etwa DVB-T, DVB-H, WLAN, WiMAX, Mobilfunk wie GSM, UMTS, HS(D)PA, LTE, UWB, OFDM usw.) einsetzen. Es lässt sich auch über beliebige Satellitennetze, Funknetze im Weltraum usw. einsetzen. Ebenfalls einsetzbar ist es in kabelgebundenen Broadcast-Netzen (wie Kabelnetze, DSL, Fibre-to-the-Home, Ethernet usw.). Diese Netze können einzeln oder in beliebiger Kombination zum Broadcast genutzt werden.

Wie bereits beschrieben kann mit allen Komprimierungen eine vollständige und / oder teilweise Verschlüsselung der Informationen einhergehen. Dabei können beispielsweise auch die zur Identifikation (einzelner) Kommunikationsbeziehungen genutzten Kontextbezeichner und Kontextinformationen kryptografisch erzeugt sein, so dass sich beispielsweise einem zwischengeschalteten un-autorisierten Empfänger noch nicht einmal erschließt, welche Pakete beispielsweise einer Kommunikationsbeziehung zuzuordnen sind. Ebenso können kryptographische Informationen zur Authentisierung / Autorisierung oder auch Priorisierung von Feedback-Informationen dienen.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Optimieren einer Datenübertragung zwischen Kommunikationsendpunkten in einem Netz mit Kommunikationsendpunkten, wobei das Verfahren die folgenden Schritte umfasst:
- Ausbilden einer Kommunikationsbeziehung bzw. Versuch des Ausbildens einer Kommunikationsbeziehung zwischen einem Kommunikationsendpunkt und einem weiteren Kommunikationsendpunkt, wobei für die Kommunikationsbeziehung eine paketorientierte Datenübertragung vorgesehen ist, bei der ein Datenstrom ausgetauschte Datenpakete umfassend gebildet wird bzw. werden soll,
- Bereitstellen einer der Kommunikationsbeziehung zugeordneten Optimiereranordnung, die mit wenigstens einem Optimierer gebildet wird, und
- Optimieren der paketorientierten Datenübertragung zwischen dem Kommunikationsendpunkt und dem weiteren Kommunikationsendpunkt, indem mittels der Optimiereranordnung für den Kommunikationsendpunkt und / oder den weiteren Kommunikationsendpunkt ein Fortbestehen bzw. ein Zustandekommen der Kommunikationsbeziehung während einer Übertragungs-Unterbrechung, nämlich einem Zeitraum, in welchem zwischen dem Kommunikationsendpunkt und dem weiteren Kommunikationsendpunkt keine Datenpakete ausgetauscht werden können, für die Kommunikationsbeziehung simuliert wird, wobei bei der Simulation eine Übermittlung von Datenpaketen von der Optimiereranordnung an den Kommunikationsendpunkt und / oder den weiteren Kommunikationsendpunkt fortgesetzt bzw. begonnen wird.

2. Verfahren nach Anspruch 1, **dadurch gekennzeichnet, dass** das Optimieren der paketorientierten Datenübertragung einen Schritt zum Zurückhalten von Daten aus dem Datenstrom der paketorientierten Datenübertragung umfasst.

3. Verfahren nach Anspruch 1 oder 2, **dadurch gekennzeichnet, dass** das Optimieren der paketorientierten Datenübertragung Schritte zum lokalen Erzeugen von Daten in der Optimiereranordnung und zum Senden der lokal erzeugten Daten an den Kommunikationsendpunkt und / oder den weiteren Kommunikationsendpunkt umfasst.

4. Verfahren nach mindestens einem der Ansprüche 1 bis 3, **dadurch gekennzeichnet, dass** das Optimieren der paketorientierten Datenübertragung einen Schritt zum Vorhersagen von Unterbrechungseigenschaften der Übertragungs-Unterbrechung der Kommunikationsbeziehung umfasst.

5. Verfahren nach mindestens einem der Ansprüche 1 bis 4, **dadurch gekennzeichnet, dass** das Optimieren einen Schritt zum zusätzlichen und / oder vorzeitigen Anfordern von Daten aus dem Datenstrom der paketorientierten Datenübertragung umfasst.

6. Verfahren nach mindestens einem der vorangehenden Ansprüche, **dadurch gekennzeichnet, dass** das Optimieren der paketorientierten Datenübertragung einen Schritt zum Anwenden des Optimierungsmechanismus auf ausgewählte Datenpakete des Datenstromes umfasst, wobei die ausgewählten Datenpakete unter Einbeziehung wenigstens eines Auswahlkriteriums aus der folgenden Gruppe von Auswahlkriterien ausgewählt werden:
- Konfiguration der Kommunikationsendpunkte,
- statische Auswahlregel,
- dynamische Auswahlregel,
- Datenpaketeigenschaft,
- Datenpaketsequenz und
- Zeitinformation betreffend den Datenstrom.

7. Verfahren nach mindestens einem der vorangehenden Ansprüche, **dadurch gekennzeichnet, dass** das Optimieren der paketorientierten Datenübertragung weiterhin die folgenden Schritte umfasst:
- Bestimmen, ob eine Störung oder eine Übertragungs-Unterbrechung der paketorientierten Datenübertragung bezüglich der Optimieranordnung in einem dem Kommunikationsendpunkt zugeordneten Kommunikationspfad oder in einem dem weiteren m dem Kommunikationsendpunkt zugeordneten Kommunikationspfad zu erwarten ist, und
- Anpassen des Optimierungsmechanismus an den bestimmten Kommunikationspfad.

8. Verfahren nach mindestens einem der vorangehenden Ansprüche, **dadurch gekennzeichnet, dass** das Optimieren der paketorientierten Datenübertragung weiterhin wenigstens einen Schritt ausgewählt aus der folgenden Gruppe von Schritten umfasst:
- Übertragen redundanter Informationen für wenigstens ein Datenpaket des Datenstroms,
- Einfügen einer Vorwärtsfehlerkorrektur-Information mittels eines zusätzlichen Datenpakets in den Datenstrom der paketorientierten Datenübertragung,
- Anhängen einer Vorwärtsfehlerkorrektur-Information an ein Datenpaket aus dem Datenstrom der paketorientierten Datenübertragung,
- Interleaving für wenigstens einen Teil der Datenpakete des Datenstroms der paketorientierten Datenübertragung und
- wenigstens teilweises Wiederherstellen einer Datenpaketreihenfolge für die Datenpakete des Datenstroms der paketorientierten Datenübertragung.

9. Verfahren nach mindestens einem der vorangehenden Ansprüche, **dadurch gekennzeichnet, dass** das Optimieren der paketorientierten Datenübertragung kombiniert mit wenigstens einem Schritt aus der folgenden Gruppe von Schritten ausgeführt wird:
- Performance-Enhancement-Verfahren,
- Datenkomprimieren,
- Datenverschlüsseln und
- Datentranskodieren.

10. Verfahren nach mindestens einem der vorangehenden Ansprüche, **dadurch gekennzeichnet, dass** das Optimieren der paketorientierten Datenübertragung einen Schritt zum Steuern einer Optimierungsfunktionalität des Optimierungsmechanismus in Abhängigkeit von Netzsignalen umfasst.

11. Computerprogramm-Produkt mit Programmcode, welcher wahlweise auf einem computerlesbaren Speichermedium gespeichert ist und geeignet ist, beim Ablauf auf einer Rechenvorrichtung ein Verfahren nach mindestens einem der vorangehenden Ansprüche auszuführen.

## Claims

1. A method for optimizing data transmission between communication end points in a network with communication end points, the method comprising the following steps:
- formation of a communication relationship, or an attempt to form a communication relationship, between a communication endpoint and an additional communication end point, wherein a packet-oriented data transmission is provided for the communication relationship, in which a data stream comprising exchanged data packets is either formed or intended to be formed,
- provision of an optimizer arrangement that is associated with the communication relationship and is formed with at least one optimizer, and
- optimization of the packet data transmission between the communication endpoint and the additional communication end point, by the optimizer arrangement for the communication end point and/or the additional communication endpoint being used to simulate a continuation or an initiation of the communication relationship during a transmission interruption for the communication relationship, namely a period in which no data packets can be exchanged between the communication endpoint and the additional communication endpoint, wherein the simulation involves a transmission of data packets from the optimizer arrangement to the communication end point and / or the other communication end point being continued or commenced.

2. The method according to Claim 1, **characterized in that** the optimization of the packet-oriented data transmission comprises a step for withholding data from the data stream of the packet-oriented data transfer.

3. The method according to Claim 1 or 2, **characterized in that** the optimization of the packet-oriented data transmission comprises steps for locally generating data in the optimizer arrangement for sending the locally generated data to the communication end point and/or the additional communication end point.

4. The method according to at least one of Claims 1 to 3, **characterized in that** the optimization of the packet-oriented data transmission comprises a step for predicting interruption characteristics of the transmission interruption of the communication relationship.

5. The method according to at least one of Claims 1 to 4, **characterized in that** the optimization comprises a step for the additional and/or prior requesting of data from the data stream of the packet-oriented data transmission.

6. The method according to at least one of the preceding claims, **characterized in that** the optimization of the packet-oriented data transmission comprises a step for applying the optimization mechanism to selected data packets of the data stream, wherein the selected data packets are selected based on at least one selection criterion from the following group of selection criteria:
- Configuration of the communication endpoints,
- static selection rule,
- dynamic selection rule,
- data packet characteristic,
- data packet sequence and
- timing information relating to the data stream.

7. A method according to at least one of the preceding claims, **characterized in that** the optimization of the packet-oriented data transmission further comprises the following steps:
- determination of whether a fault or a transmission interruption of the packet-oriented data transmission with respect to the optimizer arrangement is to be expected in a communication path associated with the communication end point or in a communication path associated with the additional communication endpoint, and
- adapting the optimization mechanism to the specific communication path.

8. The method according to at least one of the preceding claims, **characterized in that** the optimization of the packet-oriented data transmission further comprises at least one step selected from the following group of steps:
- Transmission of redundant information for at least one data packet of the data stream,
- Insertion of forward error correction information by means of an additional data packet in the data stream of the packet-oriented data transmission,
- Attachment of forward error correction information to a data packet from the data stream of the packet-oriented data transmission,
- Interleaving for at least part of the data packets of the data stream of packet-oriented data transmission, and
- at least partial restoration of a data packet sequence for the data packets of the data stream of the packet-oriented data transmission.

9. The method according to at least one of the preceding claims, **characterized in that** the optimization of the packet-oriented data transmission is performed in combination with at least one step from the following group of steps:
- Performance-Enhancement method,
- data compression,
- data encryption and
- data transcoding.

10. The method according to at least one of the preceding claims, **characterized in that** the optimization of the packet-oriented data transmission comprises a step for controlling an optimization function of the optimization mechanism in accordance with network signals.

11. A computer program product with program code which is optionally stored on a computer-readable storage medium and, when running on a computing device, is suitable for executing a method according to at least one of the preceding claims.

## Revendications

1. Procédé pour l'optimisation d'une transmission de données entre des points finaux de communication dans un réseau avec des points finaux de communication, le procédé comprenant les étapes suivantes :
- formation d'une liaison de communication et/ou tentative de formation d'une liaison de communication entre un point final de communication et un autre point final de communication, une transmission de données par paquets étant prévue pour la liaison de communication, dans laquelle un flux de données comprenant des paquets de données est formé ou doit être formé,
- mise à disposition d'un dispositif d'optimisation associé à l'une des liaisons de communication, lequel est formé par au moins un optimisateur, et
- optimisation de la transmission de données par paquets entre le point final de communication et l'autre point final de communication en ce que l'on simule pour la liaison de communication, à l'aide du dispositif d'optimisation pour le point final de communication et/ou l'autre point final de communication, une persistance et/ou une réalisation de la liaison de communication pendant une interruption de transmission,
à savoir une période pendant laquelle il n'est pas possible d'échanger des paquets de données entre le point final de communication et l'autre point final de communication, moyennant quoi lors de la simulation, on poursuit et/ou débute une transmission de paquets de données du dispositif d'optimisation vers le point final de communication et/ou l'autre point final de communication.

2. Procédé selon la revendication 1, **caractérisé en ce que** l'optimisation de la transmission de données par paquets comprend une étape pour retenir des données provenant du flux de données de la transmission de données par paquets.

3. Procédé selon la revendication 1 ou 2, **caractérisé en ce que** l'optimisation de la transmission de données par paquets comprend des étapes pour la génération locale de données dans le dispositif d'optimisation et pour l'envoi des données générées localement au point final de communication et/ou à l'autre point final de communication.

4. Procédé selon au moins l'une des revendications 1 à 3, **caractérisé en ce que** l'optimisation de la transmission de données par paquets comprend une étape pour la prédiction de propriétés d'interruption de l'interruption de la transmission de la liaison de communication.

5. Procédé selon l'une au moins des revendications 1 à 4, **caractérisé en ce que** l'optimisation comprend une étape pour la demande additionnelle et/ou anticipée de données provenant du flux de données de la transmission de données par paquets.

6. Procédé selon l'une au moins des revendications précédentes, **caractérisé en ce que** l'optimisation de la transmission de données par paquets comprend une étape pour l'application du mécanisme d'optimisation à des paquets de données sélectionnés du flux de données, moyennant quoi les paquets de données sélectionnés sont sélectionnés en tenant compte d'au moins un critère de sélection dans le groupe suivant des critères de sélection :
- configuration des points finaux de communication,
- règle de sélection statique,
- règle de sélection dynamique,
- propriété du paquet de données,
- séquence du paquet de données et
- information de temps concernant le flux de données.

7. Procédé selon l'une quelconque au moins des revendications précédentes, **caractérisé en ce que** l'optimisation de la transmission de données par paquets comprend par ailleurs les étapes suivantes :
- détermination pour savoir s'il faut s'attendre à une perturbation ou une interruption de transmission de la transmission de données par paquets concernant le dispositif d'optimisation dans un trajet de communication associé au point final de communication ou dans un trajet de communication associé à l'autre point final de communication, et
- adaptation du mécanisme d'optimisation au trajet de communication déterminé.

8. Procédé selon l'une au moins des revendications précédentes, **caractérisé en ce que** l'optimisation de la transmission de données par paquets comprend en outre au moins une étape sélectionnée dans le groupe suivant d'étapes :
- transmission d'informations redondantes pour au moins un paquet de données du flux de données,
- insertion d'une information de correction d'erreur sans voie de retour à l'aide d'un paquet de données supplémentaire dans le flux de données de la transmission de données par paquets,
- ajout d'une information de correction d'erreur sans voie de retour à un paquet de données du flux de données de la transmission de données par paquets,
- entrelacement pour au moins une partie des paquets de données du flux de données de la transmission de données par paquets et
- rétablissement au moins partiel d'une succession de paquets de données pour les paquets de données du flux de données de la transmission de données par paquets.

9. Procédé selon l'une au moins des revendications précédentes, **caractérisé en ce que** l'optimisation de la transmission de données par paquets est réalisée en combinaison avec au moins une étape du groupe suivant d'étapes :
- procédé d'amélioration de performance,
- compression de données,
- encodage de données et
- transcodage de données.

10. Procédé selon l'une au moins des revendications précédentes, **caractérisé en ce que** l'optimisation de la transmission de données par paquets comprend une étape pour commander une fonctionnalité d'optimisation du mécanisme d'optimisation en fonction de signaux de réseau.

11. Produit de programme informatique avec code de programme, lequel est enregistré au choix sur un support d'enregistrement lisible par informatique et lequel convient, lors du déroulement sur un dispositif informatique, pour réaliser un procédé selon l'une au moins des revendications précédentes.
